# EUROPÄISCHE PATENTSCHRIFT

(11) **EP 1 390 234 B1**
(45) Veröffentlichungstag und Bekanntmachung des Hinweises auf die Patenterteilung: **12.10.2005**
(21) Anmeldenummer: 02703495.8
(22) Anmeldetag: 16.01.2002
(51) Int. Cl.: B60R 11/02, H04Q 7/32, G06F 1/16, H04M 1/60

(54) **Anordnung zur Handhabung eines Kommunikationsgerätes**
Arrangement for handling a communication device
Système destiné au maniement d'un appareil de communication

(30) Priorität: 18.01.2001 DE 10102277; 20.04.2001 DE 10119655; 12.06.2001 DE 20113300 U; 05.10.2001 DE 10149249; 09.10.2001 DE 10149641; 13.12.2001 DE 10161460
(43) Veröffentlichungstag der Anmeldung: 25.02.2004
(73) Patentinhaber: Peiker, Andreas, 61381 Friedrichsdorf/Ts (DE)
(72) Erfinder: Peiker, Andreas, 61381 Friedrichsdorf/Ts (DE)
(74) Vertreter: Otten, Herbert
(86) Internationale Anmeldenummer: PCT/DE2002/000115
(87) Internationale Veröffentlichungsnummer: WO 2002/057117

(56) Entgegenhaltungen:
- DE-U- 20 015 036
- US-A- 5 535 274

## Beschreibung

Die Erfindung betrifft eine Anordnung zur Handhabung eines Kommunikationsgerätes nach dem Oberbegriff der Ansprüche 1 und 15.

### Stand der Technik:

Bei der Verwendung von Telefonen im Kraftfahrzeug unterscheidet man zwischen Festeinbauten, bei denen alle Telefonbestandteile fest im Kfz montiert sind und zwischen der Verwendung von portablen Mobiltelefonen (Handys) die ebenfalls im Kraftfahrzeug als Kfz-Telefon verwendet werden. Zur Integration eines Mobiltelefons in einem Kraftfahrzeug sind eine Vielzahl von Halterungen bekannt, die mehr oder weniger aufwendig gestaltet sind. Insbesondere sind kombinierte Halterungen bekannt geworden, in die ein Mobiltelefon einsetzbar ist. Halterungen können das Mobiltelefon mit einer im Kraftfahrzeug angeordneten Freisprecheinrichtung, mit einer Stromversorgung, mit einem Antennenanschluss oder sonstigen Bauelementen bzw. Funktionselementen verbinden. Diese Verbindung erfolgt über ein von der Halterung, beispielsweise am Armaturenbrett, ins Kraftfahrzeug geführtes Kabel. Wahlweise kann die Halterung samt Mobiltelefon von einer Auflage für die Halterung abgenommen und quasi als Telefonhörer verwendet werden (EP 0 833 762). Üblicherweise verbleibt jedoch das Mobiltelefon in der Halterung im Kraftfahrzeug und wird während der Fahrt quasi als stationäres Gerät mittels einer Freisprecheinrichtung benutzt.

Bei einer Vielzahl von bekannten Geräten ist die Halterung für das Mobiltelefon im Wesentlichen geometrisch an die Form des Mobiltelefons angepasst, wobei eine Schnittstelle in Form eines Steckeranschlusses zur elektrischen Verbindung der Halteschale mit dem Mobiltelefon vorgesehen ist. Die Halteschale selbst wird im Allgemeinen über eine im Kraftfahrzeug befestigte Halterung oder Grundplatte mit diesem lösbar verbunden.

Die Halterung oder Grundplatte für die Halteschale weist in aller Regel lediglich ein Schalterelement oder Positionserkennungselement auf, um die Lage bzw. Position der Aufnahmeschale für das Mobiltelefon auf dieser Halterung zu delektieren. Je nach dem wird die Freisprecheinrichtung aktiviert oder ausgeschaltet.

Es sind auch Halterungen für Mobiltelefone zur Verwendung im Kraftfahrzeug bekannt geworden, bei denen die Halterungen elektronische Bauelemente und insbesondere elektronische Schaltungen für verschiedene Anwendungszwecke, wie z. B. Notruffunktionen usw. aufweisen (WO 98/11747). Diese Halterung wird über eine im Kraftfahrzeug montierte Auflageplatte mit diesem verbunden.

Alle derartigen, bekannten Einrichtungen werden als komplette Einrichtungen im Handel zur Verfügung gestellt und müssen mit mehr oder weniger großem baulichen Aufwand in das jeweilige Kraftfahrzeug montiert werden. Ein Wechsel des Mobiltelefons ist ohne einen Austausch nahezu der gesamten Kfz-Telefonanlage im Allgemeinen nicht möglich.

Aus der JP 4331544 ist aus der Figur 10 eine Halterung für ein Telefon bekannt, in welche dieses zusammen mit einem Adapter einsetzbar ist, wobei die Halterung den Adapter und das Mobiltelefon umgreift.

Aus der US 5 479 479 ist beispielsweise aus Figur 14 eine Vorrichtung zur Integration eines Mobiltelefons in ein Fahrzeug bekannt, welche über ein Kabel mit dem Mobiltelefon verbunden ist und zur Steuerung einen Mikroprozessor aufweist. Diese Vorrichtung ist beispielsweise mit einem Ladegerät, einer Stromversorgung, einem Identifikationsmodul, einem Speicher und einem Verstärker ausgestattet und weist Anschlüsse auf, an denen einzelne, im Fahrzeug angeordnete Komponenten wie Lautsprecher, Mikrofon, Stromversorgung und Antenne anschließbar sind.

Aus der US 5 535 274 ist eine Haltevorrichtung für ein Mobiltelefon bekannt, welche aus einer auf das Mobiltelefon angepassten Schale (pocket) und einer für eine Vielzahl verschiedener Mobiltelefone vorgesehenen Basisstation (interface unit) mit einer Elektronik für beispielsweise Freisprechen, Ladegerät und Rauschunterdrückung besteht. Hierbei sind in der Schale über eine Pin-Kodierung des Anschlusssteckers Informationen über den Typ des Nobiltelef ons gespeichert, für welches die Schale vorgesehen ist. Mittels dieser Informationen erfolgt in der Basisstation eine Anpassung der Elektronik auf die Erfordernisse des Mobiltelefons. Eine Aufwärtskompatibilität dieses Systems ist nur insoweit gegeben als die Erfordernisse, welche zukünftige Mobiltelefone an eine Basisstation stellen, in der Basisstation bereits berücksichtigt sind.

Aus der JP 7315138 A ist eine Halterung für ein Mobiltelefon bekannt, die aus einer köcherförmigen Aufnahme für das Mobiltelefon und einem L-förmigen Halter für die Aufnahme besteht. Die köcherförmige Aufnahme weist zwei Schnittstellen auf. Die erste Schnittstelle dient der Kontaktierung des Mobiltelefons und die zweite Schnittstelle dient der Kontaktierung des Halters. Die Aufnahme ist formschlüssig über schwalbenschwanzähnliche Führungen im Halter lösbar gehalten.

Aus der DE 299 21 313 U1 ist eine Mobiltelefonhalterung für ein Fahrzeug bekannt, bei welcher eine Aufnahmeschale für das Mobiltelefon auf einer mit dem Fahrzeug fest verbundenen Grundplatte verrastbar ist. Die elektrische Anbindung des Mobiltelefons an eine Freisprecheinrichtung bzw. an im Fahrzeug angeordnete Komponenten erfolgt über ein Kabel, das mit einer in der Halteschale angeordneten Schnittstelle in Verbindung steht.

In der älteren Anmeldung WO 01/41484 wurde eine Vorrichtung mit einem Adapter für eine freihändige Bedienung eines Mobiltelefons vorgeschlagen. Diese besteht aus einer Halteschale (pocket member) mit einem Aufnahmeabschnitt (receiving section) und einem Befestigungsabschnitt (mounting section), wobei der Aufnahmeabschnitt zur Aufnahme eines Mobiltelefons angepasst ist und wobei die Halteschale auch einen Verriegelungsmechanismus (latching mecbanism) aufweist, um das Mobiltelefon in dem Aufnahmeabschnitt zu halten, und einem Verbindungsstück zur Kontaktierung der Elektronik des Mobiltelefons. Weiterhin besteht die Vorrichtung aus einem Schnittstellenmodul (interface module), das einen weiteren Aufnahmeabschnitt (receiving section) umfasst und dafür vorgesehen ist mit dem Befestigungsabschnitt der Halteschale zusammenzupassen. Diese Vorrichtung besteht vereinfacht ausgedrückt aus zwei ineinanderpassende Schalen, die zusammensteckbar sind und im zusammengesteckten Zustand untereinander in mechanischer und elektrischer Verbindung stehen. Die größere Schale ist durch das Schnittstellenmodul gebildet und nimmt die als kleinere Schale ausgebildete Halteschale ähnlich einem Köcher auf bzw. umschließt diese. Das Halten und Kontaktieren einer Aufnahmeschale für ein Handy an einem Schnittstellenmodul ist auch bereits schon aus den Figuren 22 und 23 der US 5 535 274 und der JP 73152138 bekannt. Nachteilig an einer derartigen Vorrichtung ist, dass das Schnittstellenmodul, welches bei Nichtbenutzung der Vorrichtung getrennt vom Mobiltelefon und der Halteschale fest im Fahrzeug montiert ist, auch in diesem Fall unverändert viel Bauraum einnimmt und als Hindernis den Freiraum der Insassen des Fahrzeugs einschränkt. Durch ein derartiges in den Raum greifendes Bauteil ist nicht zuletzt eine Unfallgefahr gegeben, welche sich dadurch äußert, dass Gegenstände hängen bleiben oder sich im Extremfall sogar ein Insasse verletzt. Besonders störend ist ein derartiges Schnittstellenmodul dann, wenn es, wie vorgesehen, ab Werk in ein Fahrzeug eingebaut ist und von den Insassen nicht genutzt wird.

In der älteren Anmeldung WO 01/61875 A1 wurde eine Elektronik für eine in der WO 01/41484 beschriebene Vorrichtung vorgeschlagen. Die Halteschale nimmt hierbei eine auf das Mobiltelefon angepasste Elektronik auf, welche mit einer im Interfacemodul angeordneten Elektronik zusammenwirkt. Hierbei übernimmt die in der Halteschale angeordnete Elektronik die Funktion eines Übersetzers zwischen einem in der Halteschale gehaltenen Mobiltelefon und der im Interfacemodul angeordneten Elektronik. Die im Interfacemodul vorgesehene Elektronik ist analog zu der in der US 5 535 274 für die Basisstation beschriebenen Elektronik ausgelegt und für eine Vielzahl von Mobiltelefonen geeignet. Insofern besteht auch hier das Problem der Aufwärtskompatibilität, da bei einem Wechsel zu einem moderneren Mobiltelefon nur der vermeintlich kostengünstige Austausch der Halteschale vorgesehen ist. Jedoch reicht der Austausch nur einer Komponente bei größeren Entwicklungsschritten in der Mobilfuntechnik nicht aus, da das Mobiltelefon bzw. die Halteschale dann regelmäßig Eigenschaften aufweisen werden, welchen das Interfacemodul nicht gerecht werden kann. Denn dieses wurde zu einem Zeitpunkt konstruiert, zu dem beispielsweise bestimmte Standards oder Übertragungstechniken noch nicht entwickelt oder verfügbar waren.

Aus der DE 200 15 036 U ist eine Anordnung nach dem Oberbegriff der Ansprüche 1 und 15 bekannt geworden. Heutige Kraftfahrzeuge weisen üblicherweise eine Kreisrunde, gegebenenfalls topfförmige Aufnahme für Getränkedosen auf. Eine derartige Getränkedosen-Haltereinrichtung im Kraftfahrzeug wird gemäß diesem Dokument dazu verwendet, eine transportable Freisprecheinrichtung im Kraftfahrzeug für ein Mobiltelefon zu installieren. Dabei wird das Mobiltelefon in eine mechanisch und elektrisch angepasste Halterung eingesetzt, die sämtliche Einrichtungen für eine Freisprecheinrichtung im Kraftfahrzeug umfasst. Insbesondere ist auch eine elektrische oder elektronische Schnittstelle zwischen Mobiltelefon und Halterung vorgesehen. Die Halterung selbst ist jedoch nur mechanisch in die Getränkedosen-Haltereinrichtung eingesetzt.

Aufgabe, Lösung und Vorteile der Erfindung:

Aufgabe der Erfindung ist es eine Anordnung für die Integration eines Kommunikationsgerätes vorzuschlagen, welche durch das Austauschen eines einzelnen im Fahrzeug ohne Montageaufwand einsetzbaren Bauteils vollständig aufwärtskompatibel ist und das Ausrüsten eines Fahrzeugs mit Vorrichtungen unterschiedlicher Leistungsfähigkeit zulässt, im Fall der Nichtnutzung möglichst wenig Raum einnimmt und dann auch keine Verletzungs- oder Unfallrisiken mit sich bringt.

Diese Aufgabe wird in Verbindung mit den Merkmalen des jeweiligen Oberbegriffs durch die kennzeichnenden Merkmale des Anspruchs 1 bzw. des Anspruchs 15 gelöst. In den Unteransprüchen sind vorteilhafte und zweckmäßige Weiterbildungen der Halterung angegeben.

Der Erfindung liegt der Kerngedanke zu Grunde, dass eine mehrteilige Anordnung vorgeschlagen wird, bei welcher eine universelle als Basiseinrichtung ausgebildete Befestigungseinrichtung, welche für alle Arten von Mobiltelefonen bzw. Kommunikationsgeräten geeignet ist, vorzugsweise den Herstellern von Kraftfahrzeugen zur Verfügung gestellt wird. Diese standardisierte und universell im Kraftfahrzeug einsetzbare Befestigungseinrichtung dient dann zur Aufnahme eines individuell an ein jeweiliges Mobiltelefon bzw. Kommunikationsgerät angepassten Aufnahmegehäuses, welches als Spezialgehäuse zusammen mit der Befestigungseinrichtung eine Kompletthalterung ergibt. Dabei umfasst die im Kraftfahrzeug fest eingebaute Befestigungseinrichtung nur ein Minimum an elektrischen Bauelementen, wie z.B. eine universelle elektrische Schnittstelle zur elektrischen Verbindung mit dem variabel ausgeführten Aufnahmegehäuse für das Mobiltelefon. Die elektrischen Bauelemente sind beispielsweise als Steckerelement ausgebildet, das aus Kabeln und Kontaktelementen besteht. Hierdurch wird das Ziel verfolgt, die Gerätehalterung, welche das Mobiltelefon aufnimmt, nicht nur mit Bauteilen zu versehen, welche durch das spezielle Mobiltelefon erforderlich gemacht sind, sondern auch mit nicht mobiltelefonspezifischen Bauteilen zu bestücken. Die Gerätehalterung nimmt eine elektronische Schaltung auf, welche wenigstens alle für einen Betrieb bzw. eine Steuerung einer Komforteinrichtung, wie zum Beispiel einer Freisprecheinrichtung, erforderlichen elektronischen Komponenten umfasst. Die Gerätehalterung ist mit der Befestigungseinrichtung über eine universelle, mechanische bzw. elektrische Standardisierung bzw. Anpassung verbunden. Die Befestigungseinrichtung wiederum ist lediglich mit elektrischen bzw. elektronischen Komponenten zur Ein- und/oder Ausgabe von Sprache und/oder Daten verbunden. Bei einer derartigen Anordnung ist es ohne Probleme möglich ein neues Kommunikationsgerät in ein Fahrzeug zu integrieren, da zu diesem neuen Kommunikationsgerät lediglich eine passende Gerätehalterung benötigt wird. Diese passende Gerätehalterung enthält eine auf den Funktionsumfang und die Leistungsfähigkeit des Mobiltelefons angepasste Elektronik, wie beispielsweise eine Freisprecheinrichtung mit Spracherkennung. Der Kontakt zwischen der Gerätehalterung und den im Fahrzeug angeordneten elektrischen bzw. elektronischen Komponenten, zum Beispiel Mikrofon und Lautsprecher, erfolgt über die standardisierte Befestigungseinrichtung. Der Umfang und die Zahl der Komforteinrichtungen hängt hierbei von der Leistungsfähigkeit der Gerätehalterung bzw. dem Kommunikationsgerät ab. Insofern hat der Kunde die Möglichkeit zwischen Gerätehalterungen verschiedener Leistungsfähigkeit zu wählen. Beispielsweise besteht die Auswahl zwischen einer Gerätehalterung mit Spracherkennung und einer Gerätehalterung ohne Spracherkennung.

Eine spezielle Anordnung zur Handhabung eines Kommunikationsgerätes, wie Mobiltelefon, Personal Digital Assistent (PDA) oder dergleichen zur Verwendung in einem Fahrzeug oder dergleichen, besteht aus einer das Kommunikationsgerät aufnehmenden Gerätehalterung und einer an die Gerätehalterung mechanisch angepassten Befestigungseinrichtung. Hierbei ist die Gerätehalterung als gerätespezifisches Bauteil mit einer geometrischen bzw. mechanischen Anpassung an die spezifischen Eigenschaften des Kommunikationsgerätes ausgebildet und eine elektronische Schaltung innerhalb der Gerätehalterung vorgesehen, wobei die elektronische Schaltung alle für die Einbindung von wenigstens Antenne, Lautsprecher, Mikrofon und Stromversorgung erforderlichen elektronischen Komponenten umfasst, wobei eine universelle, mechanische und/oder universelle, elektrische Standardisierung bzw. Anpassung zur Verbindung der Gerätehalterung mit der Befestigungseinrichtung erfolgt.

Eine weitere spezielle Halterung bzw. Anordnung für ein Mobiltelefon, insbesondere zur Verwendung im Kraftfahrzeug, besteht aus einem, das Mobiltelefon aufnehmenden Aufnahmegehäuse und einer Befestigungseinrichtung für das Aufnahmegehäuse im Kraftfahrzeug, wobei im Aufnahmegehäuse eine geometrische, mechanische und elektrische bzw. elektronische Anpassung an die spezifischen Eigenschaften des Mobiltelefons erfolgt und wobei mittels einer elektronischen Schaltung im Aufnahmegehäuse eine, für das Mobiltelefon spezifische Anpassung an die im Kraftfahrzeug enthaltenen Funktionseinrichtungen, wie z. B. Mikrofon, Lautsprecher, Stromversorgung usw. erfolgt. Hierbei ist eine elektrische bzw. elektronische Schnittstelle zwischen dem Aufnahmegehäuse und einer universal im Kraftfahrzeug einsetzbaren Befestigungseinrichtung für das Aufnahmegehäuse vorgesehen.

Das mobiltelefon-spezifische Aufnahmegehäuse, die Gerätehalterung, umfasst eine geometrische, mechanische und elektrisch/elektronische Anpassung an das jeweils einzusetzende Mobiltelefon, wobei insbesondere eine elektronische Schaltung auf einer Platine vorgesehen ist, die eine umfassende Anpassung des jeweiligen Mobiltelefons an die im Fahrzeug enthaltenen Funktionseinrichtungen, wie Mikrofon, Lautsprecher, Stromversorgung, Antenne vollzieht. Auch sonstige Einrichtungen, wie Spracherkennung, Notrufeigenschaften usw. sind vorzugsweise in der Gerätehalterung aufgenommen. Durch eine besonders einfach aufgebaute und universell verwendbare Befestigungseinrichtung im Kraftfahrzeug, die mit der auf das Mobiltelefon zugeschnittenen Gerätehalterung zusammen wirkt, wird eine Gesamthalterung geschaffen, die äußerst kostengünstig hergestellt werden kann, da der Einbau von Elektronik nur in einem Bauteil der Gesamthalterung erforderlich ist. Dabei wird die Gesamthalterung erst durch ein Zusammenfügen dieser zunächst getrennt gehandhabten Bauelemente gebildet, d. h. ein Kraftfahrzeughersteller kann beispielsweise sämtliche Kraftfahrzeuge mit einer entsprechenden Befestigungseinrichtung als eine Art Grundplatte oder Grundgehäuse ausrüsten. Das entsprechende Oberteil wird dann je nach Kundenwunsch und Anpassung an das jeweilige Mobiltelefon dazugeliefert und nachträglich aufgesetzt, wobei die Halterung erst durch das Zusammenwirken der im Fahrzeug angeordneten, universell verwendbaren Befestigungseinrichtung mit der Gerätehalterung zum Einsatz des jeweiligen Mobiltelefons gebildet wird. Dabei soll insbesondere auch die im Kraftfahrzeug montierte Befestigungseinrichtung ein Teil des Gesamtgehäuses sein, welches durch Zusammenfügen quasi eines Oberteils, der Gerätehalterung, mit einem Unterteil, der Befestigungseinrichtung, gebildet wird. Hierbei ist die Gerätehalterung als eigenständiges, vollständiges Gehäuse ausgebildet, das mit der Befestigungseinrichtung im gekuppelten Zustand eine optisch ansprechende, im Wesentlichen die Abmessungen der Gerätehalterung aufweisende Einheit bildet. Durch die Konzentration der elektronischen Bauelemente auf die Gerätehalterung und deren spezifische Anpassung auf das zu integrierende Kommunikationsgerät wird die Befestigungseinrichtung zu einem universellen Bauteil, das unabhängig vom zu integrierenden Kommunikationsgerät einsetzbar ist. Somit ist es auch bei einem Einsatz verschiedenster Kommunikationsgerät oder bei einem Einsatz eines neuen Kommunikationsgerät nicht erforderlich, die Befestigungseinrichtung auszutauschen oder anzupassen. Insofern ist es möglich die Befestigungseinrichtung optimal, insbesondere optisch, in ein Fahrzeug zu integrieren, da nicht auf eine Auswechselbarkeit der Befestigungseinrichtung geachtet werden muss. Der Nutzer hat die Möglichkeit mit Hilfe der zwischen der Befestigungsplatte und der Gerätehalterung vorhandenen Standardisierung hinsichtlich des mechanischen Zusammenhalts und/oder hinsichtlich der elektrischen Kontaktierbarkeit mit der Gerätehalterung sein Kommunikationsmittel in allen Fahrzeugen zu nutzen, welche über die standardisierte, kostengünstige, einfach aufgebaute und kleine Befestigungseinrichtung verfügen.

Durch die Zusammenschaltung des Mobiltelefons mit der Gerätehalterung über eine Funkverbindung ist es möglich, den Sorgfalt erfordernden Steckvorgang zur Kontaktierung des Mobiltelefons mit der Gerätehalterung auf einen wesentlich weniger Sorgfalt erfordernden Steckvorgang zu reduzieren bzw. auf den Steckvorgang gänzlich zu verzichten. Ein weniger Sorgfalt erfordernder Steckvorgang liegt dann vor, wenn zusätzlich zur Funkverbindung lediglich eine Kontaktierung eines Antennensteckers und/oder die Kontaktierung einer Stromversorgung erfolgt. Durch das geringere Maß an erforderlicher Aufmerksamkeit des Nutzers wird das Einstecken des Mobiltelefons zu einer wirklichen Nebentätigkeit. Weiterhin erlaubt die Verwendung der Funktechnik zur Kommunikation zwischen Mobiltelefon und Gerätehalterung die Entwicklung von Gerätehalterungen, welche für eine Vielzahl von Mobiltelefonen, welche vergleichbare technische Eigenschaften aufweisen, geeignet sind, da nur auf die mechanische Adaption und allenfalls auf die Adaption weniger Kontakte geachtet werden muss.

Beim vollständigen Verzicht auf eine Kontaktierung des Mobiltelefons mit der Gerätehalterung verliert diese das Erfordernis der mechanischen Kontaktierung und behält nur die Integrationsfunktion, das heißt, die Aufgabe, das Mobiltelefon in die Anordnung einzubinden. Eine derartige Integrationseinheit ist in ihrer Formgebung nicht mehr durch das Mobiltelefon bestimmt und muss nur noch auf die Befestigungseinrichtung angepasst sein. Somit ist es möglich der Integrationseinheit ein gefälliges dem Fahrzeuginterieur angepasstes bzw. dort einen Akzent setzendes Aussehen zu geben. Insbesondere ist es vorgesehen mit der Integrationseinheit die Befestigungseinrichtung vollständig zu überdecken und somit die zwischen der Integrationseinheit und der Befestigungseinrichtung befindliche elektrische Schnittstelle optimal zu schützen. Die Integrationseinheit als Sonderform der Gerätehalterung ist wie diese von der Befestigungseinrichtung abnehmbar, transportierbar und auf jede weitere Befestigungseinrichtung aufsetzbar.

In den Unteransprüchen sind vorteilhafte und zweckmäßige Weiterbildungen dieses grundsätzlichen Gedankens angegeben.

Es ist beispielsweise vorgesehen, dass die Gerätehalterung einen schalenförmigen Aufnahmeraum zum Einsatz des Mobiltelefons aufweist, wobei eine flexible Anpassung dieses schalenförmigen Aufnahmeraums möglich ist. Hierdurch können ggf. verschiedene Mobiltelefone des selben Herstellers in das Aufnahmegehäuse eingesetzt werden, da die elektrische bzw. elektronische Anpassung für mehrere Mobiltelefone auf Grund einer angepassten Schnittstellenkonfiguration vorgenommen werden kann.

Das Aufnahmegehäuse kann vorzugsweise als zwei oder mehrteiliges Gehäuse ausgebildet sein, wobei insbesondere eine variable, an das jeweilige Mobiltelefon angepasste Oberschale mit einer universell einsetzbaren auf die Befestigungseinrichtung angepassten Unterschale zusammen wirkt. Die Gehäuseteile können so gefertigt sein, dass erst ein Zusammenfügen der Gehäuseteile ein Gesamtgehäuse ergibt. Dabei sind die mechanischen und elektrischen Verbindungselemente zwischen Oberteil und Unterteil derart ausgebildet, dass bei einer vorzugsweise Längsverschiebung zwischen Gehäuseoberteil und Gehäuseunterteil eine mechanische Verriegelung und eine elektrische Zusammenführung der Teile bewirkt wird. Dabei können beispielsweise bajonettartige oder schienenartige Verbindungsmittel oder Verbindungsmittel mit Rastnasen zum Einsatz kommen.

Die Erfindung sieht vor, die Befestigungseinrichtung wenigstens in eine Raumrichtung hinsichtlich der mechanischen und elektrischen Kontaktbrücke zur Gerätehalterung bzw. Integrationseinheit drehbar bzw. schwenkbar auszubilden. Hierdurch ist es möglich das in der Gerätehalterung aufgenommene Mobiltelefon optimal auf den jeweiligen Nutzer auszurichten und so den Blick auf das Display des Mobiltelefons bzw. den Zugriff auf dessen Tastatur nicht nur für den Fahrer, sonder auch für den Beifahrer in einer optimierten Position zu gewähren. Auch eine Ausrichtung der Integrationseinheit, welche kein Mobiltelefon trägt, kann gewünscht sein, um diese im Fahrzeug an der Befestigungseinrichtung so auszurichten, dass alle neben der Integrationseinheit angeordneten Funktionselemente optimal und ungehindert zugänglich sind.

Gemäß einer Ausführungsvariante der Erfindung ist es vorgesehen, an der Befestigungseinrichtung und/oder der Gerätehalterung bzw. der Integrationseinheit wenigstens einen Schalter oder Taster vorzusehen, durch welchen eine Sondereinrichtung auslösbar ist. Hierbei ist insbesondere an die Auslösung eines Notrufs im Falle eines Unfalls oder an den Ruf eines Pannendienstes gedacht. Weiterhin ist es vorgesehen den Schalter oder Taster an der Befestigungseinrichtung so anzuordnen, dass er durch die Gerätehalterung bzw. Integrationseinheit verdeckt ist. Auf diese Weise wird einer ungewollten Fehlbedienung dieser Taste vorgebeugt. Eine Ausführungsvariante der Erfindung sieht vor, den Schalter an der Befestigungseinrichtung oder an der Gerätehalterung bzw. an der Integrationseinheit verdeckt anzuordnen. Eine den Schalter abdeckende Abdeckung oder Klappe ist manuell abnehmbar oder aufklappbar. Weiterhin ist daran gedacht das Freigeben des Schalters zu automatisieren. Bei einer derartigen Konstruktion ist das Öffnen der Abdeckung oder Klappe durch ein Ereignis gesteuert. Als Ereignis kann beispielsweise die Meldung eines Beschleunigungssensors, einer Neigungskontrolle oder das Auslösen eines Airbags dienen. Weiterhin ist vorgesehen beispielsweise für das Zugänglichmachen der Notruftaste direkt die bei einem Unfall auftretende erhöhte Verzögerung bzw. Beschleunigung zu nutzen.

Die Erfindung sieht auch vor, die Befestigungseinrichtung und/oder die Gerätehalterung bzw. die Integrationseinheit mit wenigstens einem Anzeigelement auszustatten. Hierdurch können Betriebszustände insbesondere des Mobiltelefons oder der Gerätehalterung bzw. der Integrationseinheit visualisiert werden. Beispielsweise ist daran gedacht, bei erfolgter, erfolgreicher Integration bzw. Einbindung des Mobiltelefons in die erfindungsgemäße Einrichtung bzw. Realisierung der Komforteinrichtung einen an der Befestigungseinrichtung angeordneten Lichtleiter grün leuchten zu lassen. Hierdurch wird der Betriebszustand der Anordnung bzw. des Mobiltelefons dem Nutzer an einer Stelle durch auch in der Dunkelheit erkennbare Mittel symbolisiert, die er intuitiv der Anordnung bzw. dem Mobiltelefon zuordnet. Weiterhin ist es vorgesehen beispielsweise beim Verlust des Kontakts zum Mobilfunknetz den Lichtleiter orange leuchten zu lassen. Im abgenommenen Zustand der Gerätehalterung bzw. der Integrationseinheit ist es vorgesehen, die Befestigungseinrichtung ihre Position und die nicht vorhandene Funktionsfähigkeit durch rotes Licht ausstrahlende Leuchtmittel für den Nutzer zu symbolisieren.

Weiterhin ist es vorgesehen, die Fahrzeuginsassen durch ein aktives Verhalten bzw. ein wechselndes Erscheinungsbild der Anzeigeelemente auf verschiedene Zustände der Anordnung aufmerksam zu machen. Durch einen Farbwechsel der Anzeigelemente und/oder eine Veränderung der Leuchtintensität und/oder eine Veränderung der Leuchtdauer ist es möglich mit einfachen Mitteln eine Vielzahl von unterschiedlichen Zustandsinformationen für die Insassen bereit zu stellen. Optische Informationssignale, welche sich in der Leuchtintensität und/oder im Leuchtrhythmus unterscheiden sind auch für farbenblinde Insassen problemlos verständlich.

Eine vorteilhafte Ausführung des Erfindungsgegenstandes sieht vor, die Leuchtelemente kranz- bzw. ringförmig an der Halterung anzuordnen, wobei die Leuchtelement vorzugsweise das gleiche Signal abgeben. Hierdurch ist das Signal unabhängig vom Einbauort der Halterung nach allen Seiten hin sichtbar. Beim Einsatz von mehreren Leuchtelementen, welche die gleiche Information anzeigen, ist auch ein rollierender Betrieb der Leuchtelemente vorgesehen. In diesem Betrieb geben die einzelnen Leuchtelemente die anzuzeigende Information nacheinander wieder. Dies ermöglicht eine zurückhaltende und dennoch die Aufmerksamkeit der Insassen weckende Anzeige von Informationen.

Vorteilhafte und zweckmäßige Ausführungsbeispiele der Erfindung sind in den Zeichnungen angegeben und werden in der nachfolgenden Beschreibung der Ausführungsbeispiele unter Angabe weiterer Vorteile erläutert.

Es zeigen:
- Figur 1: eine Seitenansicht einer erfindungsgemäßen Anordnung,
- Figur 2: einen Schnitt durch eine Befestigungseinrichtung,
- Figur 3: eine perspektivische Darstellung der in Figur 2 gezeigten Befestigungseinrichtung,
- Figur 4: eine perspektivische Darstellung einer weiteren Befestigungseinrichtung,
- Figur 5: eine weitere Darstellung einer erfindungsgemäßen Anordnung mit einem Mobiltelefon,
- Figur 6: eine Seitenansicht einer erfindungsgemäßen Anordnung mit eingesetztem Mobiltelefon,
- Figur 7: eine Stirnansicht der in Figur 6 dargestellten Anordnung,
- Figur 8: eine Draufsicht auf die in Figur 6 dargestellte Gehäusehalterung ohne Mobiltelefon,
- Figur 9: eine perspektivische Ansicht einer weiteren erfindungsgemäßen Anordnung,
- Figur 10: eine schematische Ansicht einer erfindungsgemäßen Anordnung,
- Figur 11: eine perspektivische Ansicht einer weiteren erfindungsgemäßen Anordnung,
- Figur 12: eine Draufsicht auf eine Gerätehalterung, die mit einer Befestigungseinrichtung verbunden ist,
- Figur 13: einen Schnitt durch die in Figur 12 dargestellte Anordnung entlang der Schnittlinie XIII-XIII,
- Figur 14: einen Schnitt durch die in Figur 12 dargestellte Anordnung entlang der Schnittlinie XIV-XIV,
- Figur 15: eine perspektivische Unteransicht der in Figur 12 dargestellten Gerätehalterung,
- Figur 16: eine weitere perspektivische Unteransicht der in Figur 12 dargestellten Gerätehalterung,
- Figur 17: eine Seitenansicht der in Figur 12 dargestellten Befestigungseinrichtung in Explosionsdarstellung,
- Figur 18: eine Ansicht der in Figur 17 dargestellten Befestigungseinrichtung aus einer Pfeilrichtung XVIII,
- Figur 19: eine perspektivische Ansicht der in den Figuren 17 und 18 gezeigten Explosionsdarstellungen der Befestigungseinrichtung,
- Figur 20: eine perspektivische Ansicht einer Ausführungsvariante einer Befestigungseinrichtung,
- Figur 21: eine weitere perspektivische Ansicht der in Figur 20 dargestellten Befestigungseinrichtung,
- Figur 22: eine perspektivische Ansicht der in den Figuren 20 und 21 dargestellten Befestigungseinrichtung in einer geschwenkten Stellung,
- Figur 23: eine Draufsicht auf die in Figur 22 dargestellte Befestigungseinrichtung,
- Figur 24: eine Unteransicht der in Figur 20 dargestellten Befestigungseinrichtung,
- Figur 25: eine Draufsicht auf die in Figur 20 dargestellte Befestigungseinrichtung,
- Figur 26: einen Schnitt durch die in Figur 25 dargestellte Befestigungseinrichtung entlang der Schnittlinie XXVI-XXVI,
- Figur 27: eine Seitenansicht einer Ausführungsvariante einer erfindungsgemäßen Anordnung, welche aus einer Befestigungseinrichtung und einer Integrationseinheit besteht,
- Figur 28: eine perspektivische Ansicht einer Befestigungseinrichtung mit Anzeigemitteln,
- Figur 29: eine perspektivische Ansicht einer Befestigungseinrichtung mit Schaltern,
- Figur 30: eine Ansicht einer weiteren Gerätehalterung mit eingelegtem Mobiltelefon,
- Figur 31: eine perspektivische Ansicht der in Figur 30 dargestellten Gerätehalterung von hinten und einer zur dieser gehörenden, getrennt dargestellten Befestigungseinrichtung,
- Figur 32: eine perspektivische Ansicht der in den Figuren 30 und 31 dargestellten Bauteile in gekuppeltem Zustand,
- Figur 33: eine Ausführungsvariante zu den in den Figuren 13 bis 25 beschriebenen elektrischen und mechanischen Kontaktierungen zwischen Gerätehalterung und Befestigungseinrichtung,
- Figur 34: eine weitere Ausführungsvariante zu Figur 33,
- Figur 35: eine weitere Ausführungsvariante zu Figur 33,
- Figur 36: eine weitere Ausführungsvariante zu Figur 33 und
- Figur 37: eine Darstellung der in Figur 36 abgebildeten Ausführungsvariante zusammen mit einer Befestigungseinrichtung im eingebauten Zustand.

### Beschreibung der Erfindung:

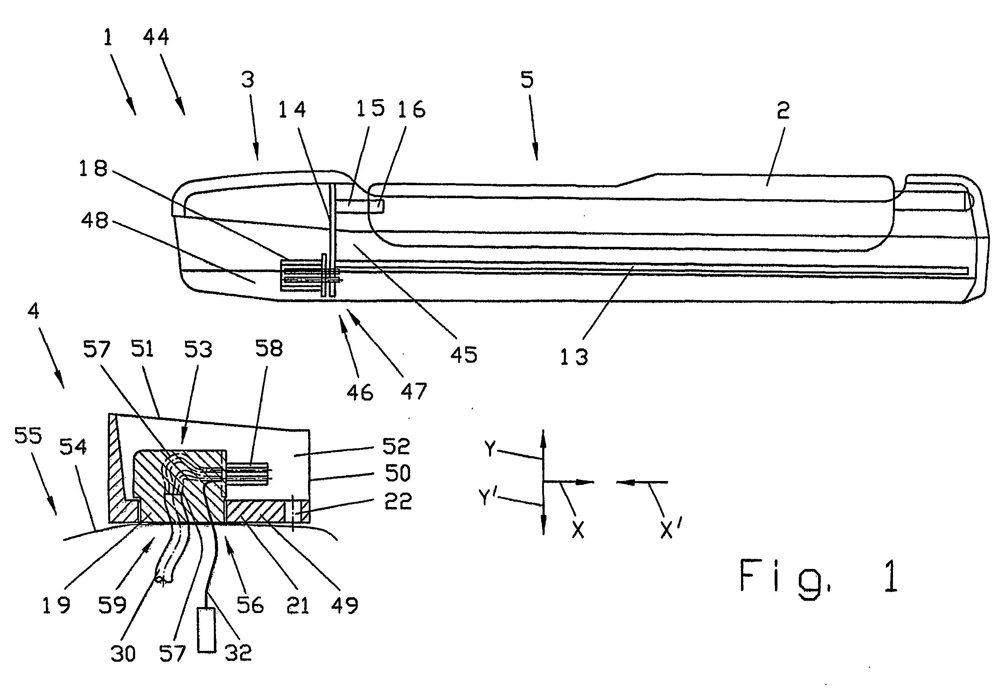

In Figur 1 ist eine erfindungsgemäße Anordnung 1 mit einem Mobiltelefon 2 in Seitenansicht dargestellt. Die erfindungsgemäße Ansicht umfasst im Wesentlichen eine Gerätehalterung 3, in welche das Mobiltelefon 2 eingelegt ist, und eine Befestigungseinrichtung 4. Die Gerätehalterung 3 nimmt das Mobiltelefon 2 in einer wannenförmigen Ausnehmung 5 auf und bildet mit diesem eine handliche Gebrauchseinheit 44, welche im Wesentlichen die Form eines leicht vergrößerten Mobiltelefons aufweist. Die Gerätehalterung 3 ist mit in verschiedenen Ebenen verlaufenden Seitenansichten dargestellt. In einem Innenraum 45 der Gerätehalterung 3 sind zwei miteinander verbundene Platinen 13, 14 angeordnet. Die Platine 13 trägt nicht dargestellte elektronische Bauteile, durch welche beispielsweise ein Audioverstärker zur Verstärkung von Audiosignalen für im Fahrzeug befindliche Lautsprecher oder eine Ladeschaltung zur Aufladung von Akkumulatoren des Mobiltelefons 2 verwirklicht ist. Durch die nicht dargestellten elektronischen Bauteile kann auch beispielsweise ein nicht dargestelltes Rauschunterdrückungssystem oder ein Spracherkennungssystem verwirklicht sein, das im Innenraum 45 der Gerätehalterung 3 angeordnet ist. An der Platine 14 ist ein Systemstecker 15 angeordnet, der bei eingelegtem Mobiltelefon 2 mit einem Anschlussstecker 16 des Mobiltelefons 2 in Kontakt steht. Über nicht dargestellte, auf der Platine 14 befindliche Leiterbahnen steht der Systemstecker 15 in Verbindung mit einem Steckerelement 18, das ebenfalls auf der Platine 14 angeordnet ist. Das Steckerelement 18 steht weiterhin in Verbindung mit den auf der Platine 13 angeordneten Systemen, wobei auch zwischen dem Systemstecker 15 und diesen Systemen Verbindungen bestehen. In Bereich des Steckerelements 18 weist die Gerätehalterung 3 in einem der wannenförmigen Ausnehmung 5 gegenüberliegenden Bodenbereich 46 eine Ausnehmung 47 auf, welche einen das Steckerelement 18 umgebenden Raum 48 bildet. Die Befestigungseinrichtung 4 besteht im Wesentlichen aus einer Auflage 49 und einem Steckerelement 19. Die Befestigungseinrichtung 4 öffnet sich zu einer Seitenfläche 50 hin in Richtung eines Pfeils x und zu einer Deckfläche 51 hin in Richtung eines Pfeils y. Weiterhin weist die Befestigungseinrichtung 4 etwa parallel zueinander verlaufende Seitenwände 52 auf (in der Schnittansicht, in der die Befestigungseinrichtung 4 dargestellte ist, ist nur eine Seitenwand sichtbar), welche in Draufsicht, in Richtung eines Pfeils y' betrachtet, einen Abstand aufweisen, der größer ist als die Breite der Gerätehalterung 3. Das Steckerelement 19 bildet einen Vorsprung 53, welcher über eine Grundplatte 21 der Auflage 49 in die Pfeilrichtung y hinaussteht. Die Grundplatte 21 weist eine Durchgangsbohrung 22 auf, durch welche die Befestigungseinrichtung 4 mit einem Armaturenbrett 54 des Fahrzeugs 55 verschraubt ist. Das Steckerelement 19 ist in einer Ausnehmung 56 der Auflage 49 gehalten, vorzugsweise verrastet. Das Steckerelement 19 weist elektrische Leitungen 57 und ein Kontaktelemente 58 auf. Die elektrischen Leitungen stehen in Verbindung mit dem Kontaktelement 58 und sind zu einer Unterseite 59 hin über eine Kabeleinrichtung 30 und ein Antennenkabel 32 aus dem Steckerelement 19 in das Fahrzeug 55 geführt. Eine Kontaktierung der Steckerelemente 18, 19 und ein Festlegen der Gerätehalterung 3 an der Befestigungseinrichtung 4 bzw. am Fahrzeug 55 erfolgt über eine kombinierte Aufsetz- und Aufschiebbewegung. Zunächst erfolgt eine Bewegung der Gerätehalterung 3 in die Pfeilrichtung y'. Bei dieser Bewegung übergreift die Gerätehalterung 3 mit der Ausnehmung 47 das Steckerelement 19 und kommt zwischen den Seitenwänden 52 der Befestigungseinrichtung 4 zu liegen. Das Steckerelement 19 ist dann im Raum 48 der Gerätehalterung 3 aufgenommen. Durch eine nachfolgende Bewegung in Richtung eines Pfeils x' erfolgt ein Aufschieben der Gerätehalterung 3 mit dem Steckerelement 18 auf das Steckerelement 19. Dies führt zu einer Kontaktierung der Steckerelemente 18, 19 und zu einer mechanischen Arretierung der Gerätehalterung 3 an der Befestigungseinrichtung 4 mittels der Steckerelemente 18, 19.

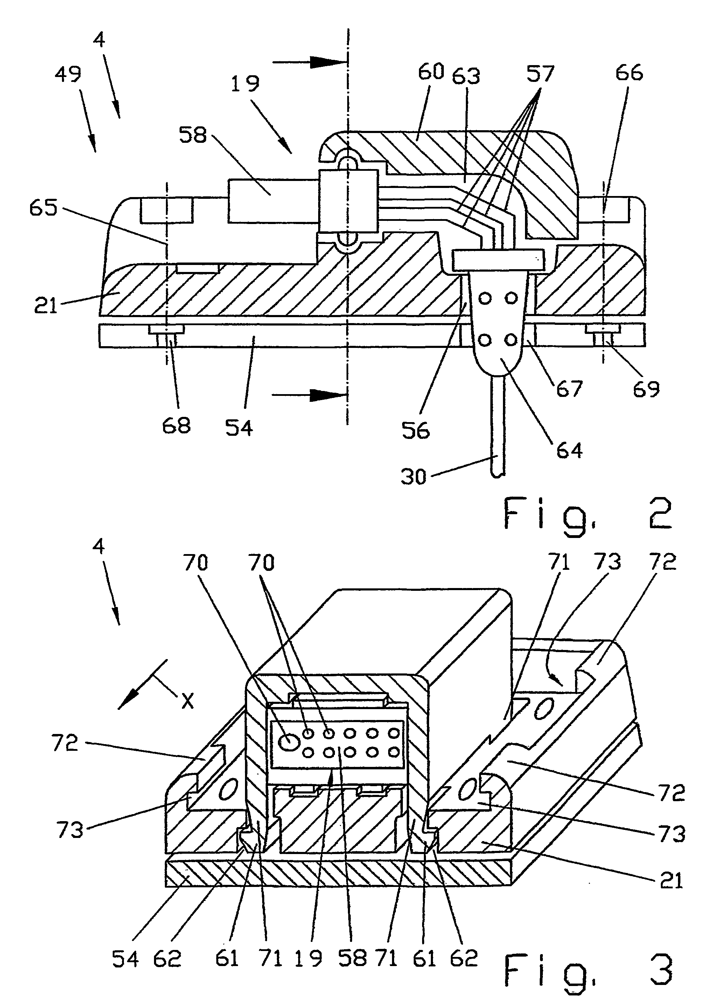

In Figur 2 ist ein Schnitt durch eine Befestigungseinrichtung 4 bzw. eine Auflage 49 dargestellt. Die Auflage 49 besteht aus einer Grundplatte 21 einem Deckel 60 und einem Steckerelement 19. Die Grundplatte 21 und der Deckel 60 sind vorzugsweise als zwei Spritzgussbauteile ausgeführt, welche durch mit Rastnasen 61 zusammenwirkende Rücksprünge 62 miteinander verbunden sind (siehe Figur 3). Das Steckerelement 19 ist in einem durch den Deckel 60 und die Grundplatte 21 umgrenzten, tunnelförmigen Innenraum 63 angeordnet. Im Einzelnen setzt sich das Steckerelement 19 aus einem Kontaktelement 58, elektrischen Leitungen 57 und einer Zugentlastung 64 zusammen. Die elektrischen Leitungen 57 sind in der Zugentlastung 64 gebündelt und in einem mehradrigen Kabel 30 fortgeführt. Die Grundplatte 21 ist mit einem Armaturenbrett 54 (als Ausschnitt dargestellt) entlang von Achsen 65, 66 verschraubt. Das Armaturenbrett 54 weist für die Zugentlastung 64 eine Durchgangsbohrung 67 auf. Für die Aufnahme der nicht dargestellten Schrauben sind im Armaturenbrett 54 Gewinde 68, 69 vorgesehen.

In Figur 3 ist die in Figur 2 gezeigte Befestigungseinrichtung 4 in perspektivischer Ansicht abgebildet. Das Kontaktelement 58 zeigt elf in Richtung eines Pfeils x ausgerichtete Kontakte 70. Der Deckel 60 ist garagenförmig ausgebildet und ist über Füße 71 in der Grundplatte 21 verankert. Unterhalb der Grundplatte 21 liegt das als Ausschnitt dargestellte Armaturenbrett 54. Der Zusammenbau der Befestigungseinrichtung 4 erfolgt durch ein Einlegen bzw. Einfädeln des Steckerelements 19 in die Grundplatte 21, wobei das Kabel 30 mit der Zugentlastung 64 durch eine Ausnehmung 56 (siehe Figur 2) in der Grundplatte 21 gezogen wird. Anschließend wird das Steckerelement 19 durch ein Aufschnappen des Deckels 60 fixiert. Insbesondere wird das Kontaktelement 58 und die Zugentlastung 64 formschlüssig zwischen den Bauteilen 21, 60 eingeklemmt. Die Grundplatte 21 weist weiterhin Nasen 72 auf, durch welche Hintergriffe 73 ausgebildet sind, welche eine entsprechend ausgebildete, nicht dargestellte Gerätehalterung hintergreifen. Insofern ist die Grundplatte 21 für die Verrastung der Gerätehalterung ähnlich einem Polschuh eines Fotoapparates ausgebildet. Gemäß einer nicht dargestellten Ausführungsvariante ist es vorgesehen, die Befestigungseinrichtung 4 als einteiliges Spritzgussteil mit eingegossenen elektrischen Leitungen und eingegossenem Kontaktelement auszubilden.

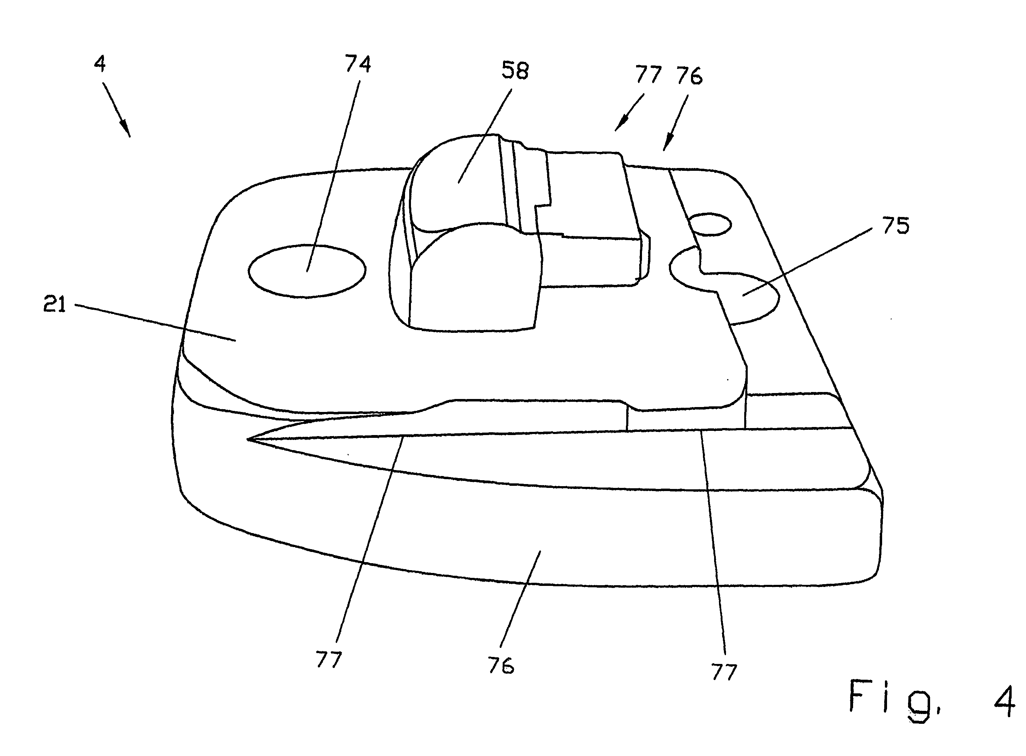

Figur 4 zeigt eine perspektivische Darstellung einer weiteren Befestigungseinrichtung 4. Bei dieser ragt ein Kontaktelement 58 über eine Grundplatte 21 hervor. Die Grundplatte 21 weist Bohrungen 74, 75 für den Durchtritt von nicht dargestellten Befestigungsschrauben auf. An Seitenflächen 76 der Grundplatte 21 sind Führungen 77 für den Hintergriff durch eine nicht dargestellte Gerätehalterung ausgebildet.

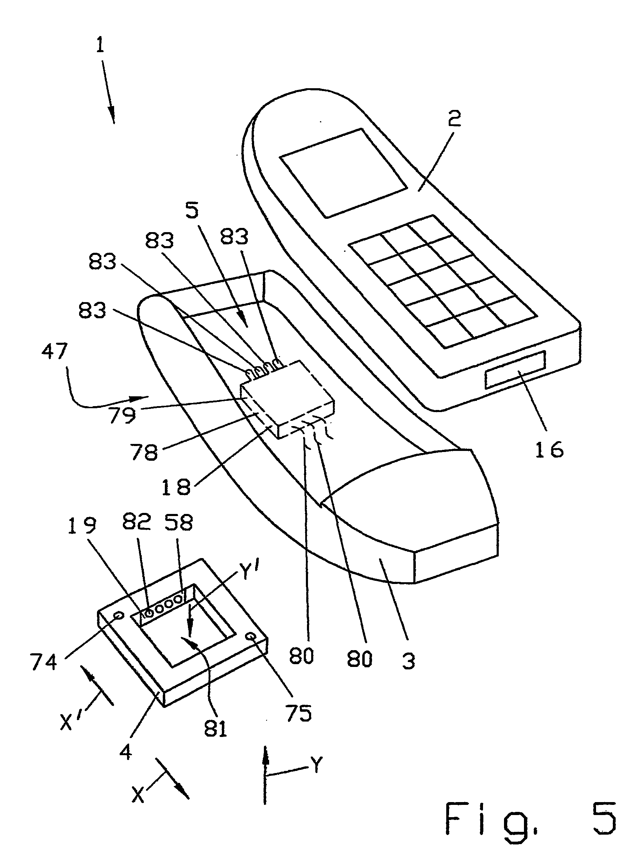

Figur 5 zeigt eine perspektivische Ansicht einer weiteren erfindungsgemäßen Anordnung 1 mit einem zu dieser gehörenden Mobiltelefon 2. Die Anordnung 1 besteht im Wesentlichen aus einer Gerätehalterung 3 und einer Befestigungseinrichtung 4. Das Mobiltelefon 2 ist für den Einsatz in eine wannenförmige Aufnahme 5 der Gerätehalterung 3 vorgesehen und tritt dort über einen Anschlussstecker 16 in Verbindung mit in der Gerätehalterung 3 angeordneten elektrischen bzw. elektronischen Bauelementen auf. An einem Bodenbereich 46 der Gerätehalterung 3 ist ein mit gestrichelten Linien dargestellter Vorsprung 78 angeordnet, der als Steckerelement 18 ausgebildet ist. Das Steckerelement 18 besteht im Wesentlichen aus einem Kontaktelement 79 und von diesem ausgehenden elektrischen Leitungen 80, die zu den in der Gerätehalterung 3 angeordneten elektrischen bzw. elektronischen Bauteilen führen. Beim Ankuppeln der Gerätehalterung 3 mit oder ohne Mobiltelefon 2 tritt das Steckerelement 18 in eine Ausnehmung 81 des Befestigungselements 4 in Richtung eines Pfeils y' ein. Durch eine anschließende Bewegung der Gerätehalterung 4 in eine Richtung eines Pfeils x' erfolgt eine Kontaktierung des Steckerelements 18 mit einem in der Befestigungseinrichtung angeordneten Steckerelement 19. Ein Kontaktelement 58 des Steckerelements 18 weist hülsenförmige Kontakte 82 auf, in welche stiftförmige Kontakte 83 des Steckerelements 18 eintreten und eine formschlüssige Verbindung zwischen der Gerätehalterung 3 und der Befestigungseinrichtung 4 bewirken. Ein Abnehmen der Gerätehalterung 3 von der durch Bohrungen 74, 75 mit einem nicht dargestellten Armaturenbrett verschraubten Befestigungseinrichtung 4 erfolgt durch ein Zurückziehen der Gerätehalterung 3 in Richtung eines Pfeils x und ein anschließendes Anheben der Gerätehalterung 3 in Richtung eines Pfeils y. Gemäß einer nicht dargestellten Ausführungsvariante ist es vorgesehen, die Gerätehalterung schräg, im Wesentlichen in einer Richtung auf die Befestigungseinrichtung aufzuschieben. Hierzu sind die Steckerelemente entsprechend ausgerichtet. Eine weitere Ausführungsvariante sieht eine Art Bajonettverschluss zwischen der Gerätehalterung 3 und der Befestigungseinrichtung 4 vor. Hierbei erfolgt ein ineinander greifen von Gerätehalterung 3 und Befestigungseinrichtung 4 durch eine Aufsetzbewegung und eine anschließende Drehbewegung über aufeinander abgestimmte Nasen und Nuten. Zur Kontaktierung der Steckerelemente sind vorzugsweise gefederte Kontaktstifte oder Kontaktkugeln vorgesehen, welche mit Kontaktflächen zusammenwirken.

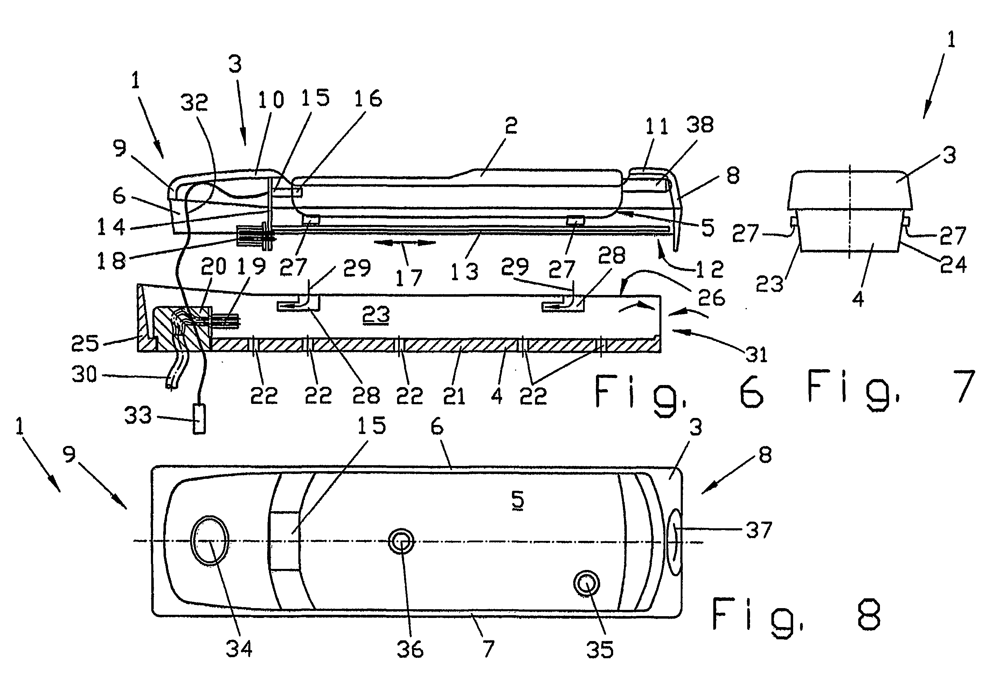

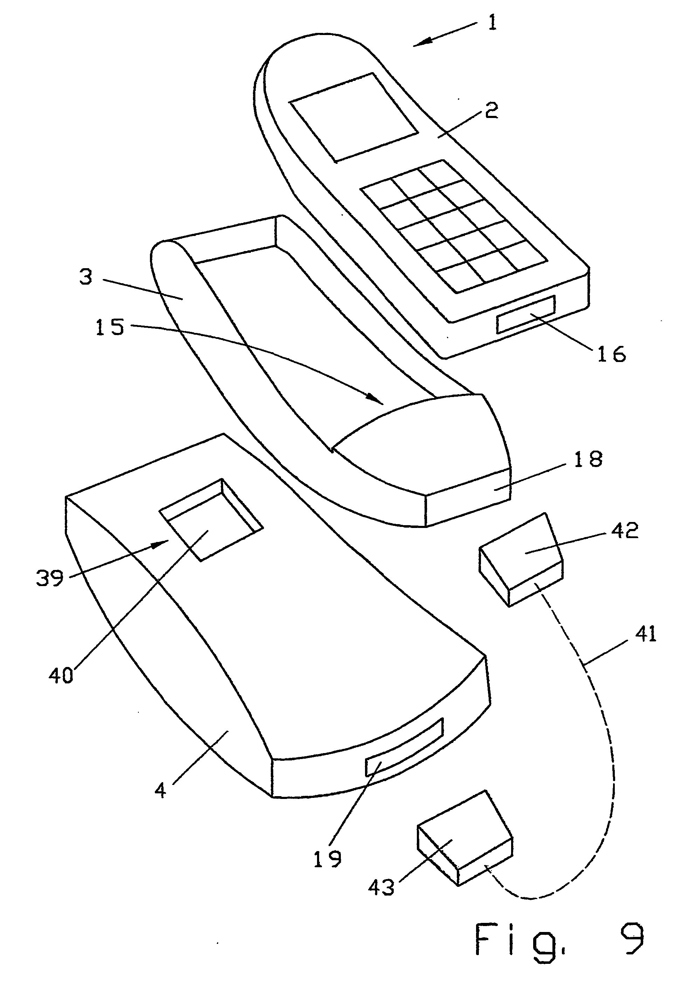

Die Figur 6 zeigt eine erfindungsgemäße Anordnung 1 für ein Mobiltelefon 2 welches in einem Kraftfahrzeug Verwendung findet. Die Anordnung 1 besteht aus einer Gerätehalterung 3 welche als Aufnahmegehäuse bzw. Oberteil ausgebildet ist und einer Befestigungseinrichtung 4, welche ein Unterteil bildet. In der Figur 6 sind diese beide Bauteile 3, 4 im nicht zusammengebauten Zustand übereinander dargestellt, wobei die Gerätehalterung 3 in Seitenansichten, welche in verschiedenen Ebenen verlaufen, abgebildet ist. Die Figur 7 zeigt den zusammengebauten Zustand der beiden Bauteile 3, 4 in einer Stirnansicht. Eine Draufsicht auf die zusammengebaute Anordnung 1, jedoch ohne Handy, ist in der Figur 8 dargestellt.

Wie aus den Figuren 6 und 8 erkennbar, ist das Aufnahmegehäuse bzw. die Gerätehalterung 3 an ihrer Oberseite schalenförmig aufgebaut. Die Gerätehalterung 3 weist an der Oberseite eine wannenförmige Ausnehmung 5 auf, in welche ein Mobiltelefon in herkömmlicher Weise einsetzbar ist. In der Draufsicht nach Figur 8 ist das Mobiltelefon weggelassen, so dass die wannenförmige Ausnehmung 5 in Draufsicht erkennbar ist. Das Aufnahmegehäuse 3 ist im Übrigen als längliche Gerätehalterung 3 mit Längsseitenwandungen 6, 7, mit schmalen stirnseitigen Wandungen 8, 9 und mit oberen Abdeckwandungen 10, 11 ausgebildet, so dass diese ein nach unten hin offenes Oberteil 3 mit einer unteren Öffnung 12 (siehe Figur 6) ergibt. In diese Gerätehalterung 3 ist eine längliche erste Platine 13 eingesetzt, die elektronische Bauelemente aufweist, die zur spezifischen Anpassung des jeweils einzusetzenden Mobiltelefons 2 an die im Kraftfahrzeug enthaltenen Funktionseinrichtungen, wie Mikrofon, Lautsprecher, Stromversorgung, Notruffunktionen, Spracherkennung usw. dienen. Im speziellen Ausführungsbeispiel ist zur Anpassung an ein spezielles Mobiltelefon die Platine 13 an ihrem einen stirnseitigen Ende mit einer zweiten, hierzu vertikal ausgerichteten Platine 14 verbunden, die ihrerseits einen Systemstecker 15 aufweist, der mit einem Anschlussstecker 16 des Mobiltelefons 2 zusammen wirkt. Ein erstes Steckerelement 19, das zur Befestigungseinrichtung 4 gehört, wirkt mit einem am unteren Ende der Platine 14 angebrachten, in Längsrichtung (Pfeil 17) weisenden zweiten Steckerelement 18 zusammen.

Ist die Gerätehalterung 3 als nach unten hin offene, im Querschnitt U-förmige Schale ausgebildet, so ist die Befestigungseinrichtung 4 als entsprechend angepasstes, nach oben hin offenes, im Querschnitt U-förmiges Gehäuse ausgebildet. Die Befestigungseinrichtung 4 besteht demzufolge aus einer ebenen Grundplatte 21 mit einer Reihe von Durchgangsbohrungen 22 zur Befestigung der Grundplatte im Kraftfahrzeug. Seitlich der Grundplatte 21 erheben sich Seitenwandungen 23, 24, sowie im Ausführungsbeispiel eine stirnseitige Seitenwandung 25. Nach oben hin ist die Befestigungseinrichtung 4 offen (Öffnung 26), damit die Gerätehalterung 3 und die Befestigungseinrichtung 4 mit ihren Öffnungen 12, 26 zusammengesetzt werden können. Hierzu weißt die Gerätehalterung 3 an ihren Seitenwandungen 6, 7 vier seitlich vorstehende, im Querschnitt rechteckförmige Verbindungsnocken 27 auf, die beim Zusammenführen von Gerätehalterung 3 und Befestigungseinrichtung 4 in jeweils eine, nach oben hin offene und L-förmig ausgebildete Aufnahmenut 28 in den Seitenwandungen 23, 24 der Befestigungseinrichtung 4 mit einer L-förmigen Bewegung eingreifen. Die Bewegung dieses Eingriffs mit einer zunächst vertikalen Abwärtsbewegung und einer horizontalen Schiebe- bzw. Schließbewegung ist mit Pfeilen 29 symbolisch dargestellt. Das Zusammenführen der Gerätehalterung 3 und der Befestigungseinrichtung 4 über die Verbindungsmittel 27, 28 ist derart ausgebildet, dass die Steckerelemente 18, 19 während der horizontalen Längsbewegung (Pfeil 17) miteinander zusammengeführt bzw. auseinandergezogen werden. Hierfür ist ein Steckergehäuse 20 für das Steckerelement 19 in der Befestigungseinrichtung 4 im Bereich der stirnseitigen Wandung 25 in die Grundplatte 21 eingelassen bzw. eingeklippst, wobei Kabelanschlüsse 30 zu den entsprechenden Funktionseinrichtungen im Kraftfahrzeug führen. Um das Zusammenschieben der Gerätehalterung 3 und der Befestigungseinrichtung 4 einfach zu bewerkstelligen, ist die Befestigungseinrichtung 4 an der der stirnseitigen Seitenwandung 25 gegenüberliegenden Seite 31 offen ausgebildet, wobei die heruntergezogene stirnseitige Seitenwandung 8 der Gerätehalterung 3 diesen Bereich der Befestigungseinrichtung 4 im zusammengebauten Zustand abschließt. Auf der anderen Seite wird die zusammengebaute Anordnung von der stirnseitigen Seitenwandung 25 begrenzt, so dass der obere Seitenwandungsteil 9 kurz ausgebildet ist.

Die Figurendarstellung zeigt weiterhin ein Antennenkabel 32, welches vom Anschlussstecker 16 über den Systemstecker 15 und über eine Durchlassöffnung in der Grundplatte 21 zu einem Verbindungsstecker 33 für den Antennenanschluss führt. Hier handelt es sich um einen Hochfrequenzstecker (HF-Stecker). Die Steckerelemente 18, 19 sind als genormte, sogenannte D-Sub-Stecker ausgebildet. Die Gerätehalterung 3 kann weiterhin optional eine zusätzliche Funktionstaste 34 aufweisen, um zusätzliche Funktionen, wie Notruf oder dergleichen zu aktivieren. Ein zusätzlicher HF-Stecker 35 in der Gerätehalterung 3 kann zum Anschluss des Antennensteckers des Mobiltelefons 2 dienen. Über eine Befestigungsschraube 36 kann die Gerätehalterung 3 mit der Befestigungseinrichtung verschraubt werden. Eine zusätzliche Auswurftaste 37 kann zur Entriegelung des Mobiltelefons 2 und damit zum Herausnehmen aus der Gerätehalterung 3 dienen. Die Antenne des Mobiltelefons 2 ist mit dem Bezugszeichen 38 versehen. Wie aus der Figurendarstellung (Figuren 6 bis 8)erkennbar, wird insbesondere die Befestigungseinrichtung 4 bzw. das Unterteil als äußerst einfach aufgebautes und universell verwendbares Teil mit einem genormten Stecker ausgebildet, welches z.B. werksseitig in ein Kraftfahrzeug als Universalhalterung eingebaut werden kann. Das Aufnahmegehäuse bzw. die Gerätehalterung 3 ist in seinen Abmessungen genau auf das Unterteil 4 angepasst, so dass beim Zusammenfügen beider Teile eine einteilig wirkende Anordnung 1 entsteht. Dabei werden alle spezifischen Eigenschaften des Mobiltelefons 2 mittels der Platinenanordnung 13, 14 berücksichtigt, so dass je nach Art des Mobiltelefons 2 eine hieran angepasste Gerätehalterung 3 zur Verfügung gestellt wird. Klippst man beide Teile über den Verschluss mit L-förmiger Schließbewegung zusammen, so ist auf einfachste Weise und vor allem äußerst kostengünstig eine Anordnung 1 für ein Mobiltelefon 2 geschaffen, welche dieses in das Kraftfahrzeug integriert.

In Figur 9 ist eine Anordnung 1 in perspektivischer Explosionsdarstellung abgebildet. Eine Gerätehalterung 3 bzw. ein Adapter zur Aufnahme eines Mobiltelefons 2 weist einen Systemstecker 15 zur Aufnahme eines Anschlusssteckers 16 des Mobiltelefons 2 auf. Die Gerätehalterung 3 ist für ein Zusammenwirken mit einer Befestigungseinrichtung 4 vorgesehen, welche zur mechanischen Halterung der Gerätehalterung 3 eine Ausnehmung 39 aufweist, in der ein Magnet 40 angeordnet ist, welcher mit einem an einer Unterseite der Gerätehalterung angeordneten magnetischen Bestandteil zusammenwirkt. Der Adapter 3 und die Befestigungseinrichtung 4 sind an Steckerelementen 18, 19 über ein Kabel 41 mit Steckern 42, 43 verbunden. Die Gerätehalterung 3 enthält eine auf das Mobiltelefon 2 angepasste Elektronik, welche weitere mobiltelefonspezifische elektronische Bauteile im Fahrzeug oder in der Befestigungseinrichtung überflüssig macht. Von der Schnittstelle 19 aus verlaufen nicht dargestellte Kabel durch die Befestigungseinrichtung 4 zu im Fahrzeug eingebauten elektrischen Komponenten wie Lautsprecher und Mikrofon.

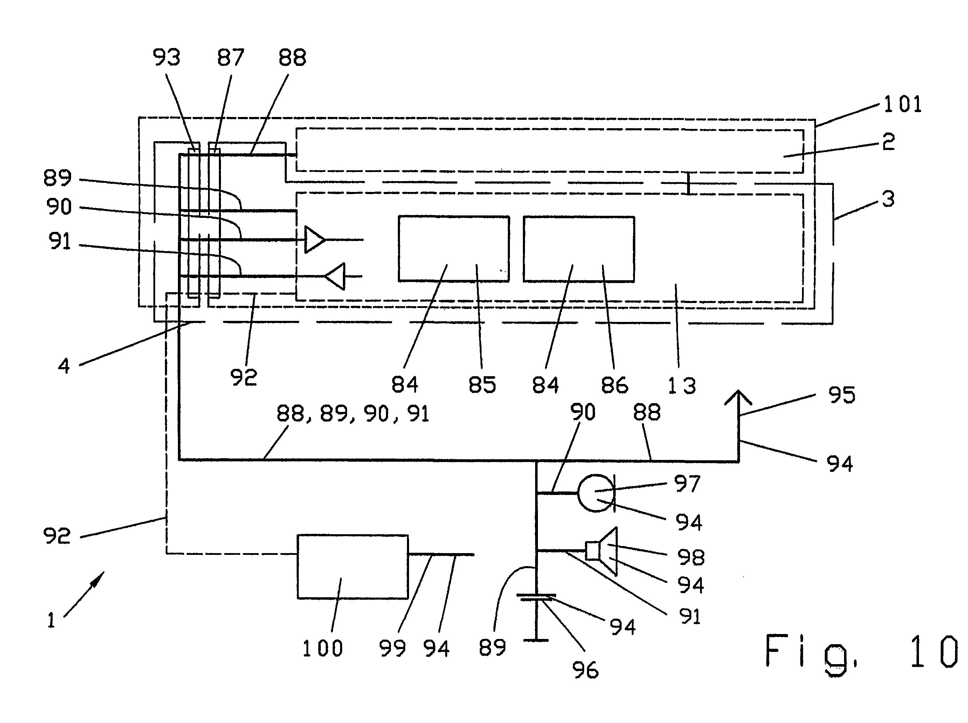

In Figur 10 ist eine erfindungsgemäße Anordnung 1 und deren Einbindung in ein Fahrzeug schematisch dargestellt. Die Anordnung 1 umfasst eine Gerätehalterung 3 und eine Befestigungseinrichtung 4. In die Gerätehalterung 3 ist ein Mobiltelefon 2 eingelegt diese steht mit einer in der Gerätehalterung 3 angeordneten Platine 13 in Kontakt. Die elektrische Platine 13 enthält als elektrische bzw. elektronische Bauteile 84 einen Audioverstärker 85 und eine Ladeschaltung 86. Weiterhin ist ein Antennenkabel 88 in die Gerätehalterung 3 geführt, das beispielsweise zu einem nicht dargestellten Signalverstärker geführt ist. Über eine Schnittstelle 87 sind Antennenkabel 88, Stromversorgungskabel 89 (Plus, Masse, Zündung), Mikrofonkabel 90, Lautsprecherkabel 91 und optional eine Datenleitung 92 bzw. serielle oder parallel Steuerleitung zu einer Schnittstelle 93 der Befestigungseinrichtung 4 geführt. Von der Befestigungseinrichtung 4 sind die Leitungen 88 bis 92 zu den entsprechenden Funktionseinrichtungen 94 geführt. Dies sind Fahrzeugantenne 95, Stromversorgung 96 mit Batterie und Zündung, Mikrofon 97, Lautsprecher 98 und Datenbus 99 des Fahrzeugs. Weiterhin ist beispielsweise eine nicht dargestellte Leitung von der Gerätehalterung 3 über die Befestigungseinrichtung 4 zu einer Audioanlage des Fahrzeugs geführt, welche ein Stummschaltungssignal (sogenanntes Mute-Signal) zur Stummschaltung der Audioanlage bei Freisprechbetrieb übermittelt. Die Datenleitung 92 ist über eine Schnittstelle 100 auf den Datenbus 99 des Fahrzeugs (Fahrzeugbus) geführt. Die Datenleitung 92 ermöglicht es bei Verbindung mit dem Datenbus 99 sogenannte erweiterte Komforteinrichtungen zu verwirklichen, welche es beispielsweise erlauben, das Mobiltelefon über an einem Lenkrad angeordnete Tasten zu bedienen, oder den Displayinhalt des Mobiltelefons auf dem Bildschirm eines Navigationssystems anzuzeigen. Somit handelt es sich beim Fahrzeugbus aus der Sicht der Gerätehalterung um eine elektronische Komponente zur Aus- und Eingabe von Daten. Durch einen mit gestrichelten Linie angedeuteten Kasten 101 sind die im Fahrzeug sichtbaren Bauteile gekennzeichnet.

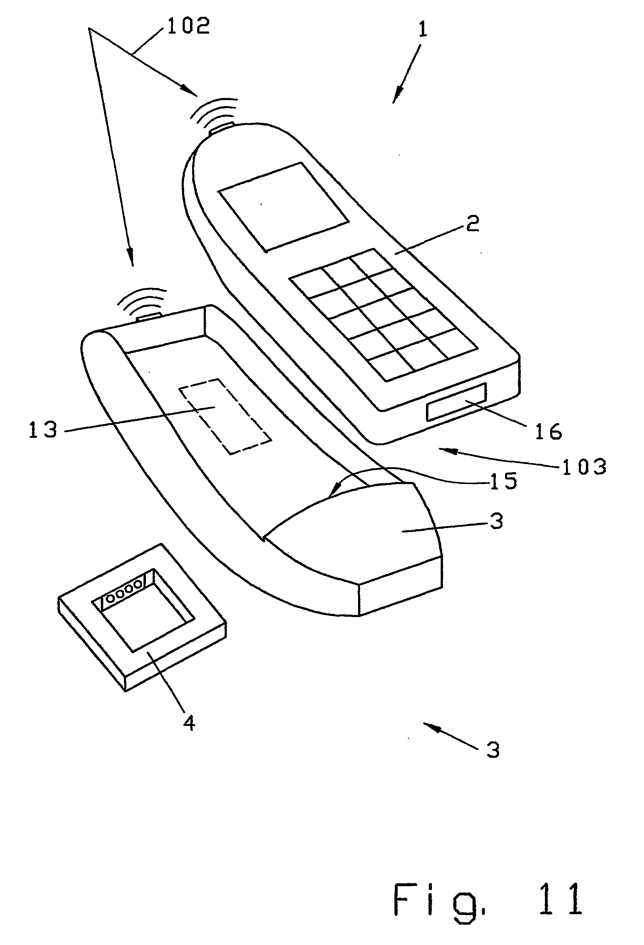

Figur 11 zeigt eine perspektivische Ansicht einer weiteren erfindungsgemäßen Anordnung 1. Die Anordnung 1 besteht aus einer Gerätehalterung 3, welche die formschlüssige Aufnahme eines Mobiltelefons 2 erlaubt, und einer Befestigungseinrichtung 4, an welcher die Gerätehalterung 3 mechanisch und elektrisch kontaktierbar ist. Das Mobiltelefon 2 ist über eine Schnittstelle 102a drahtlos mit einer Schnittstelle 102b der Gerätehalterung 3 verbunden, wobei die Schnittstellen 102a, 102b als Sende- und/oder Empfangsschnittstellen für Infrarot- oder elektromagnetische Wellen, zum Beispiel nach dem Funkstandard Blue Tooth, ausgebildet sind. Die drahtlose Verbindung der Gerätehalterung 3 mit dem Mobiltelefon 2 erlaubt, das Mobiltelefon 2 auch während des Betriebs aus der Gerätehalterung 3 zu entnehmen. Somit steht das Mobiltelefon 2 stets mit der Gerätehalterung 3 bzw. mit einer in der Gerätehalterung 3 angeordneten elektronischen Schaltung 13 über eine Funkverbindung 102 in Kontakt. Es ist vorgesehen, über die Funkverbindung 102 Sprachsignale und Daten auszutauschen. Zusätzlich ist optional die mechanische Kontaktierung eines Anschlusssteckers 16 des Mobiltelefons 2 durch einen in der Gerätehalterung 3 angeordneten, nicht sichtbaren Systemstecker 15 vorgesehen. Die Stecker 15, 16 bilden eine Schnittstelle 103 über welche die Übertragung eines Antennensignals und/oder eine Stromversorgung vorgesehen ist. Sofern der Nutzer auf eine Übertragung des Antennensignals und auf eine Stromversorgung verzichtet ist es auch möglich das Mobiltelefon an jedem beliebigen Ort im Fahrzeug abzulegen und dennoch sämtliche Komforteinrichtungen bzw. erweiterten Komforteinrichtungen, wie zum Beispiel die Freisprecheinrichtung bzw. die Steuerung des Mobiltelefons über Tasten am Lenkrad, zu nutzen, welche durch die elektronische Schaltung 13 in der Gerätehalterung 3 verfügbar ist. Gemäß einer nicht dargestellten Ausführungsvariante ist es auch vorgesehen mehr als ein Mobiltelefon 2 über die Gerätehalterung 3 zu betreiben. Bei einer entsprechenden Auslegung der elektronischen Schaltung 13 ist dann auch der parallele Betrieb von Mobiltelefonen möglich. Hierzu werden von bzw. über der elektronischen Schaltung 13 für jeden Anwender bestimmte Mikrofone und Lautsprecher angesteuert.

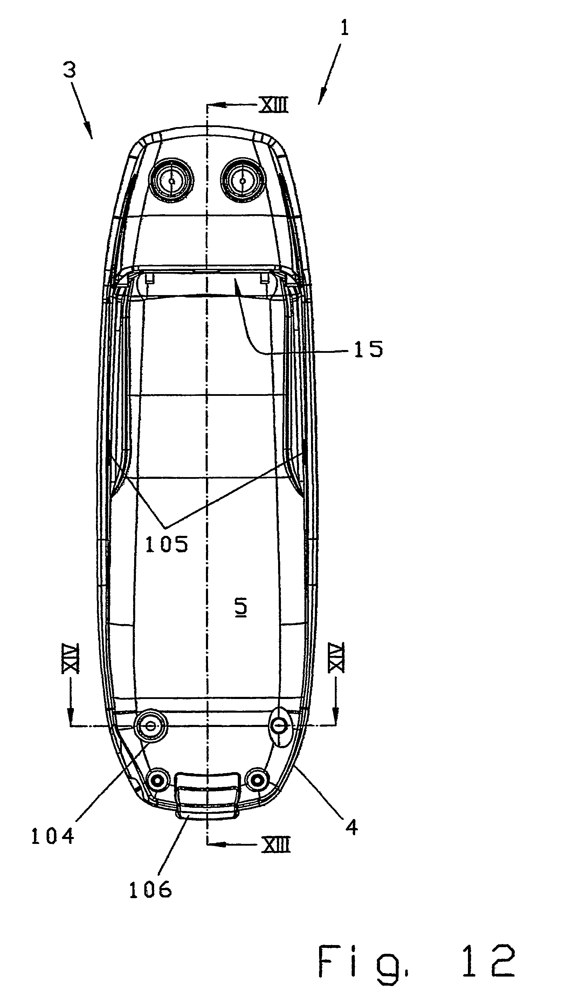

Figur 12 zeigt eine Draufsicht auf eine weitere Anordnung 1 mit einer Gerätehalterung 3, welche mit einer in Figur 12 durch die Gerätehalterung 3 verdeckten Befestigungseinrichtung 4 verbunden ist. Die Gerätehalterung 3 weist einen Aufnahmeraum 5 für ein nicht dargestelltes Mobiltelefon auf, in welchem dieses durch einen Anschlussstecker 15 kontaktierbar ist. Weiterhin befindet sich im Aufnahmeraum 5 ein Antennenstecker 104, durch welchen ein Antennenanschluss des nicht dargestellten Mobiltelefons kontaktierbar ist. Über Nasen 105, welche durch einen Schieber 106 gesteuert sind erfolgt eine mechanische Fixierung des nicht dargestellten Mobiltelefons im eingelegten Zustand.

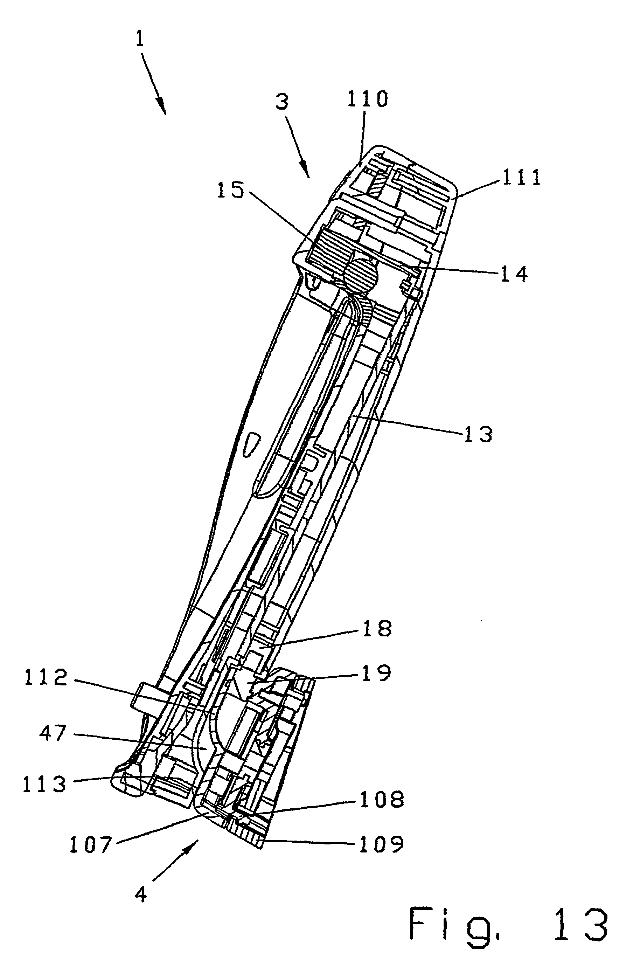

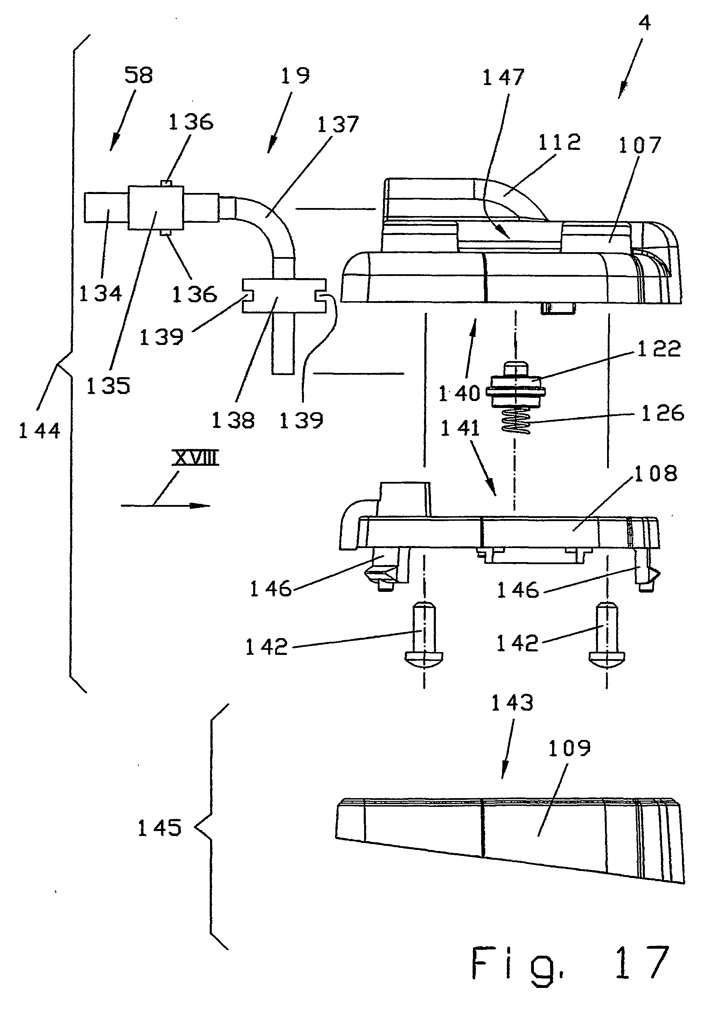

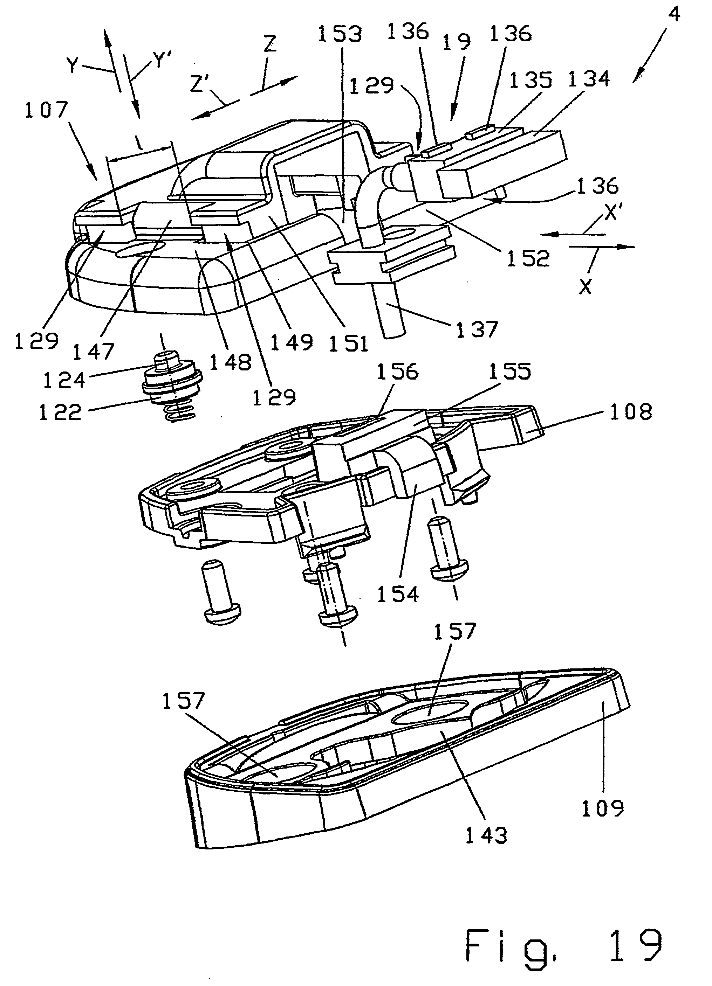

Figur 13 zeigt einen Schnitt durch die in Figur 12 dargestellte Anordnung 1 entlang der Schnittlinie XIII-XIII. Im Schnitt ist in der Gerätehalterung 3 eine Hauptplatine 13 und eine senkrecht zu dieser angeordnete weitere Platine 14 zu sehen, an welcher der Systemstecker 15 zur Kontaktierung des Mobiltelefons angeordnet ist. Gegenüber der zweiten Platine 14 trägt die Hauptplatine 13 einen weiteren Systemstecker 18, welcher mit einem Steckerelement 19 (hier nicht vollständig dargestellt, siehe zum Steckerelement 19 insbesondere Figuren 17 und 19) in Verbindung steht. Das Steckerelement 19 ist in der Befestigungseinrichtung 4 gehalten. Die Befestigungseinrichtung 4 ist im Wesentlichen vierteilig aufgebaut und besteht aus dem Steckerelement 19, einem Auflagekörper 107, einer Bodenplatte 108 und einem Flansch 109. Die Gerätehalterung 3 ist im Wesentlichen zweiteilig ausgebildet und besteht aus einer oberen Halbschale 110 und einer unteren Halbschale 111. Die Gerätehalterung 3 weist im Bereich der unteren Halbschale 111 eine Ausnehmung 47 auf, in welche die Befestigungseinrichtung 4 bzw. ein Kopfbereich 112 des Auflagekörpers 107 im gekuppelten Zustand eintaucht. In einem Kontaktbereich 113 liegen die Gerätehalterung 3 und die Befestigungseinrichtung 4 im gekuppelten Zustand aneinander an.

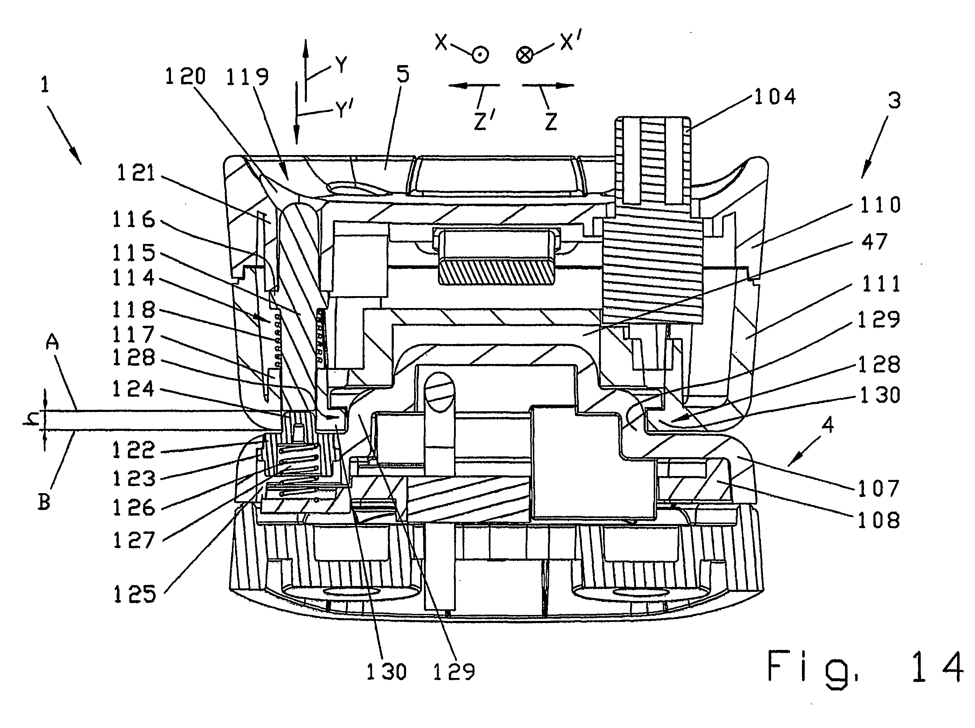

Figur 14 zeigt einen Schnitt durch die in Figur 12 dargestellte Anordnung 1 entlang der Schnittlinie XIV-XIV. Der Schnitt XIV-XIV durch die Gerätehalterung 3 und die Befestigungseinrichtung 4 verläuft im Bereich des Antennensteckers 104 und eines Rastmechanismus 114. Der Rastmechanismus 114 verriegelt die Gerätehalterung 3 und die Befestigungseinrichtung 4 im zusammengesteckten, in Figur 14 gezeigten Zustand gegeneinander, um ein ungewolltes Lösen der Gerätehalterung 3 aus der Befestigungseinrichtung 4 zu vermeiden. Der Rastmechanismus 114 besteht aus einem in der oberen Halbschale 110 und in der unteren Halbschale 111 der Gerätehalterung 3 geführten Stift 115. Der Stift 115 weist einen Bund 116 auf. Zwischen dem Bund 116 und einem mit der unteren Halbschale 111 verbundenen Hohlzylinder 117 ist eine Spiralfeder 118 angeordnet, welche den Stift 115 in eine Pfeilrichtung y zu einer Öffnung 119 der oberen Halbschale 110 drückt. Die Öffnung 119 öffnet sich in den Aufnahmeraum 5 für das Mobiltelefon und ist durch eine flexible Kappe 120 abgedeckt, um den Eintritt von Staub und Schmutz in einen Hohlzylinder 121 zu verhindern, in welchem der Stift 115 in der oberen Halbschale 110 geführt ist. Dieser Hohlzylinder 121 dient auch zur Begrenzung der Bewegung des Stifts 115 in die Pfeilrichtung y. In der Befestigungseinrichtung 4 ist ebenfalls ein Stift 122 angeordnet. Dieser besitzt einen Bund 123 und eine Nase 124. Der Stift 122 ist in einer Ausnehmung 125 des Auflagekörpers 107 geführt und stützt sich über eine Spiralfeder 126, welche in einer Bohrung 127 des Stifts 122 gelagert ist, gegen die Bodenplatte 108 ab. Eine Hubbewegung der Stifts 122 in Pfeilrichtung y' ist durch ein Anliegen des Bundes 123 an dem Auflagekörper 107 begrenzt. In der in Figur 14 gezeigten verrasteten Stellung der Gerätehalterung 3 mit der Befestigungseinrichtung 4 taucht die Nase 124 des Stifts 122 in den in der unteren Halbschale 111 angeordneten Hohlzylinder 117 ein und verhindert zusammen mit einer zwischen der Gerätehalterung 3 und der Befestigungseinrichtung 4 ausgebildeten formschlüssigen Verbindung 128 eine Bewegung der Gerätehalterung 3 relativ zur Befestigungseinrichtung 4 in eine Richtung x oder x'. Ein Lösen des Rastmechanismus 114 erfolgt durch ein manuelles Niederdrücken der flexiblen Kappe 120 in eine Pfeilrichtung y' aus einer Stellung A in eine Stellung B um einen Weg h. Hierdurch wird die Nase 124 des Stifts 122 vom Stift 115 aus dem Hohlzylinder 117 der Gerätehalterung 3 gedrückt und diese kann von der Befestigungseinrichtung 4 aus der Zeichnungsebene heraus in Pfeilrichtung x abgezogen werden. Sobald der Stift 122 nicht mehr zentrisch zum Hohlzylinder 117 steht kann der Druck auf die flexible Kappe 120 und damit auf den Stift 115 aufgehoben werden. Bei einem Aufschieben der Gerätehalterung 3 auf die Befestigungseinrichtung 4 wird die Nase 124 des Stifts 122 durch das abgerundete Gehäuse der Gerätehalterung 3 in eine niedergedrückte Position gebracht, aus der der Stift 122 dann in den Hohlzylinder 117 springt. Die formschlüssige Verbindung 128 zwischen der Gerätehalterung 3 und der Befestigungseinrichtung 4 ist durch parallel zueinander verlaufende, sich in entgegengesetzte Richtungen z, z' öffnende U-Führungen 129 und darin laufende Stege 130 realisiert. Die Stege 130 sind aus der in Figur 14 gezeigten Stellung aus der Zeichnungsebene heraus in Pfeilrichtung x in den U-Führungen 129 verfahrbar. Aus der Pfeilrichtung y' betrachtet umklammert die Gerätehalterung 3 mit den an der unteren Halbschale 111 angeordneten Stegen 130 die Befestigungseinrichtung 4 bzw. den Auflagekörper 107 und nimmt diesen teilweise in der Ausnehmung 47 auf. Das heißt, die mechanische und elektrische Kontaktierung zwischen der Gerätehalterung 3 und der Befestigungseinrichtung 4 erfolgt innerhalb bzw. im Inneren der Gerätehalterung 3, nämlich in der Ausnehmung 47.

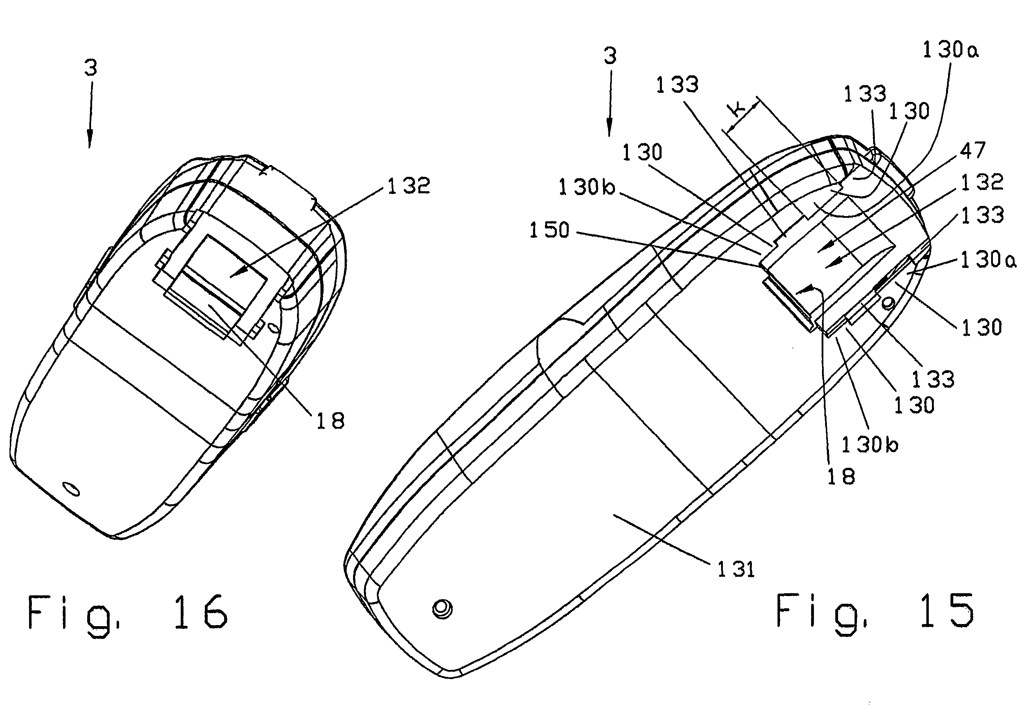

Figur 15 zeigt eine perspektivische Unteransicht der in den Figur 12 bis 14 dargestellten Gerätehalterung 3. Die Ausnehmung 47 ist als ein sich zu einer Unterseite 131 der Gerätehalterung 3 öffnender zu fünf Seiten geschlossener Kontakt- und Halteraum 132 ausgebildet. Die sich gegenüberliegenden Stege 130 weisen Unterbrechungen 133 auf, zwischen denen die in Figur 15 nicht dargestellten U-Führungen 129 der Befestigungseinrichtung 4 zwischen diese treten können. Das Steckerelement 18 der Gerätehalterung 3 ist etwa senkrecht zur Unterseite 131 in der Ausnehmung 47 angeordnet.

Figur 16 zeigt die Gerätehalterung 3 aus einer im Vergleich zu Figur 15 leicht gedrehten Ansicht. In dieser Ansicht ist der Blick auf das Steckerelement 18 freigegeben, wobei dieses nur vereinfacht dargestellt ist. Die perspektivischen Unteransichten der Figuren 15 und 16 zeigen die fließende Form der Gerätehalterung 3, welche auch im Bereich des Kontakt- und Halteraums 132 keine störenden Vorsprünge oder Kanten aufweist und sich somit auch bestens dafür eignet mit dem eingelegten Mobiltelefon beispielsweise von Fahrzeug zu Fahrzeug transportiert zu werden, ohne dass sich die Gerätehalterung 3 in einer Jacken- oder Hosentasche verhakt oder Bekleidungsstücke beschädigt. Diese Eigenschaft der Gerätehalterung 3 ist insbesondere im Hinblick auf die universelle Einsetzbarkeit der Gerätehalterung wichtig, da bei einer derartigen Verfügbarkeit regelmäßig ein Transport der Befestigungseinrichtung beispielsweise vom Privatfahrzeug zum Firmenfahrzeug oder zu einem Mitfahrzeug erfolgen wird. Weiterhin sieht die Erfindung auch vor, die erfindungsgemäße Anordnung insbesondere die Befestigungseinrichtung im Wohn- und Bürobereich oder in öffentlichen Gebäuden und Verkehrsmitteln für jedermann zur Verfügung zu stellen.

Figur 17 zeigt eine Seitenansicht der in Figur 12 bzw. 13 und 14 dargestellten Befestigungseinrichtung 4 in seitlicher Explosionsdarstellung. Aus dieser Ansicht geht der mehrteilige Aufbau der Befestigungseinrichtung nochmals detailliert hervor. Neben dem Steckerelement 19 besteht die Befestigungseinrichtung 4 aus dem Auflagekörper 107, der Bodenplatte 108 und dem Flansch 109. Das Steckerelement 19 weist ein Kontaktelement 58 auf, über welches der elektrische Kontakt mit dem Systemstecker 18 der Gerätehalterung 3 (siehe Figur 12) hergestellt wird. Das Kontaktelement 58 besitzt einen Kontaktbereich 134 und einen Haltebereich 135 mit Nasen 136, welcher in ein Kabel 137 übergeht. Das Kabel 137 ist mit einem Halteelement 138 mit gegenüberliegenden Nuten 139 umspritzt. Im zusammengebauten Zustand der Befestigungseinrichtung 3 ist der Haltebereich 135 des Kontaktelements 58 formschlüssig im Kopfbereich 112 des Auflagekörpers 107 gehalten. Hierdurch sind der Kontaktbereich 134 und dessen nicht dargestellte Einzelkontakte in einer definierten Position fixiert. Eine weitere Fixierung des Steckerelements 19 erfolgt über das Halteelement 138 in der Bodenplatte 108, wobei diese formschlüssig in die Nuten 139 greift. Nachdem das Steckerelement 19 durch Durchbrüche 140, 141 in der Auflage 107 und der Bodenplatte 108 geführt und an diesen fixiert ist erfolgt ein Zusammenstecken und Verschrauben der Auflage 107 mit der Bodenplatte 108. Zur Verschraubung dienen die vereinfacht dargestellten Schrauben 142. Weiterhin wird zuvor noch der Stift 122 und die Spiralfeder 126 zwischen der Auflage 107 und der Bodenplatte 108 in Position gebracht. Der Flansch 109 weist ebenfalls einen Durchbruch 143 auf, durch welchen das Kabel 137 im zusammengebauten Zustand der Befestigungseinrichtung 4 geführt ist. Eine Festlegung einer im Wesentlichen aus dem Steckerelement 19, der Auflage 107, der Bodenplatte 108, dem Stift 122 und der Spiralfeder 126 gebildeten Oberschale 144 an einer im Wesentlichen durch den Flansch 109 gebildeten Unterschale 145 erfolgt mittels an der Bodenplatte 108 angeordneten Rastarmen 146. Die Rastarme 146 verhaken sich in nicht sichtbaren Rücksprüngen des Flansches 109, der beispielsweise mittels Schrauben oder einer weiteren Rastverbindung am Fahrzeug festgelegt ist.

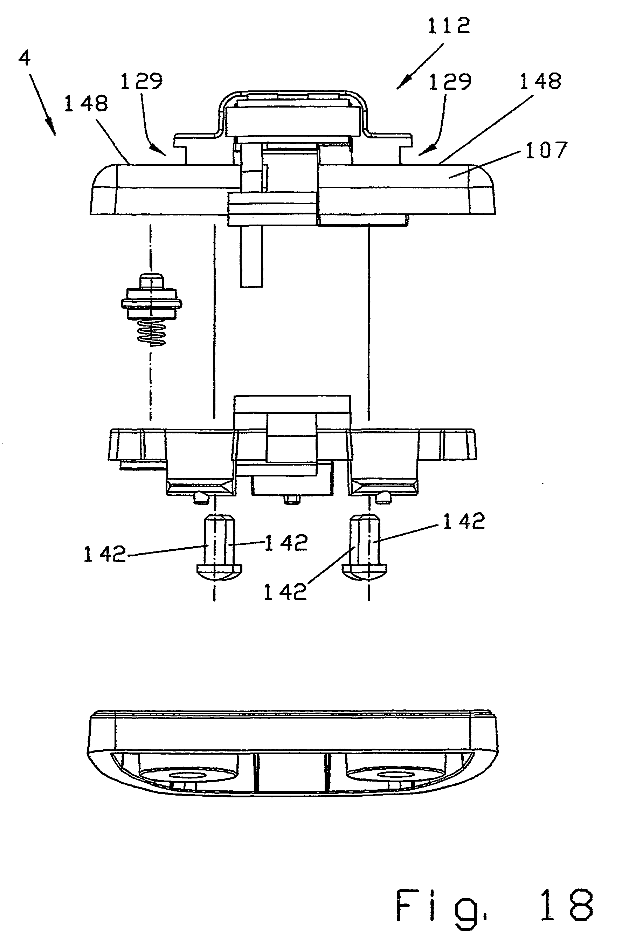

Figur 18 zeigt die in Figur 17 dargestellte Explosionsansicht der Befestigungseinrichtung 4 aus einer um 90° gedrehten Blickrichtung. In dieser Ansicht sind die am Kopfbereich 112 der Auflage 107 ausgebildeten U-Führungen 129 deutlich sichtbar.

Figur 19 zeigt eine perspektivische Ansicht der in den Figuren 17 und 18 gezeigten Explosionsdarstellungen der Befestigungseinrichtung 4. Die an der Auflage 107 ausgebildeten U-Führungen 129 weisen Unterbrechungen 147 auf. Die Unterbrechungen 147 besitzen ein Länge 1, welche den Durchtritt der ersten Stege 130a der Gerätehalterung 4 erlauben (siehe auch Figur 15). Die ersten Stege 130a weisen eine Länge k auf. Für das Verhältnis der Längen gilt k < 1. Somit erfolgt die Befestigung der Gerätehalterung 3 auf der Befestigungseinrichtung 4 zunächst mit einer Bewegung der Gerätehalterung 3 in die Pfeilrichtung y' auf die Befestigungsplatte 4. Bei dieser Bewegung in die Pfeilrichtung y' tauchen die ersten, gegenüberliegenden Stege 130a durch die gegenüberliegenden Unterbrechungen 147 der U-Führungen 129 der Befestigungseinrichtung 4 ein bis sie auf Sockelflächen 148 der Befestigungseinrichtung 4 aufliegen. Auch die zweiten, gegenüberliegenden Stege 130b der Gerätehalterung 3 liegen in der erreichten Stellung bereichsweise in einem Kantenbereich 149 auf den Sockelflächen 148 der Befestigungseinrichtung 4 auf. Aus dieser auf die Befestigungseinrichtung 4 ausgerichteten Position der Gerätehalterung 3 erfolgt eine Verschiebung der Gerätehalterung 3 in eine Pfeilrichtung x', wobei die Stege 130 bzw. 130a und 130b in die U-Führungen 129 der Befestigungseinrichtung 4 einfahren. Gleichzeitig mit dieser Einfahrbewegung bzw. nachdem schon ein Teilstück des Einfahrweges zurückgelegt ist erfolgt das Aufeinandertreffen des Kontaktbereichs 134 des Steckerelements 19 auf das an der Gerätehalterung angeordnete Steckerelement 18 und das anschließende Ineinanderschieben. Die in Richtung x bzw. x' zurückversetzte Anordnung der Steckerelemente 18, 19 gegenüber den U-Führungen 129 bzw. Stegen 130 erlaubt es, zunächst durch das Zusammenwirken der U-Führungen 129 mit den Stegen 130 eine Zentrierung der Gerätehalterung 3 auf die Befestigungseinrichtung 4 durch die mechanischen Kontaktierungselemente, nämlich die U-Führungen 129 und die Stege 130 herbeizuführen. Dies bewirkt eine Schonung der elektrischen Kontaktierungselemente, der Steckerelemente 18, 19, da diese keine Zentrierbelastungen übernehmen müssen. Die Einschiebebewegung in die Pfeilrichtung x' endet mit dem Auftreffen einer Seitenfläche 150 der Ausnehmung 47 (siehe Figur 15) auf eine Frontfläche 151 des Auflagekörpers 107 bzw. mit dem vollständigen Zusammenschieben der Kontaktierungselemente. Beim Erreichen dieser vollständig gekuppelten Stellung der Gerätehalterung 3 mit der Befestigungseinrichtung 4 tritt dann der in der Befestigungseinrichtung 4 angeordnete Stift 122 mit seiner Nase 124 in den Hohlzylinder 117 der Gerätehalterung 3 (siehe Figur 14). Diese Verriegelung führt zu einer sicheren Festlegung der Gerätehalterung 3 an der Befestigungseinrichtung 4, da hierdurch ein Abziehen der Gerätehalterung 3 in die Pfeilrichtung x verhindert ist. Eine Bewegung der Gerätehalterung 3 relativ zur Befestigungseinrichtung 4 in die Richtungen x, y, y', z, z' ist durch das mechanische Zusammenwirken der beiden Bauteile 3, 4 verhindert. Ein Trennen der beiden Bauteile 3, 4 kann erst nach einem Lösen der durch den Stift 122 bewirkten Rastverbindung erfolgen. Das Abnehmen der Gerätehalterung 3 von der Befestigungseinrichtung 4 erfolgt durch eine L-förmige Bewegung in die Richtungen x und y.
Um das Einführen des Steckerelements 19 in den Auflagekörper 107 zu erleichtern weist dieser in einem Sockelbereich 152 einen Schlitz 153 auf, durch den das Kabel 137 in den Auflagekörper 107 eingeschoben werden kann. Somit entfällt für den Auflagekörper 107 ein Durchfädeln der Steckerelements 19. Der Schlitz 153 ist im zusammengebauten Zustand der Befestigungseinrichtung 4 durch eine an der Bodenplatte 108 angeordnete Blende 154 verdeckt, welche an einem Sockel 155 angeordnet ist, der einen Rücksprung 156 aufweist. In diesen Rücksprung 156 greift eine in Figur 19 nicht sichtbare Nase 136 des Haltebereichs 135 des Steckerelements 19 im zusammengesetzten Zustand der Befestigungseinrichtung 4 ein und sorgt für die Fixierung des Haltebereichs 135 bzw. des Kontaktbereichs 134 zwischen dem Auflagekörper 107 und der Bodenplatte 108. Weitere Nasen 136 greifen in nicht sichtbare Rücksprünge des Auflagekörpers 107 ein. Der Flansch 109 weist seitlich des Durchbruchs 143 für die Durchführung des Kabels 137 des Steckerelements 19 zwei Durchgangsbohrungen 157 auf, welche für den Durchtritt nicht dargestellter Schrauben vorgesehen sind, um den Flansch 109 am Fahrzeug festzulegen.

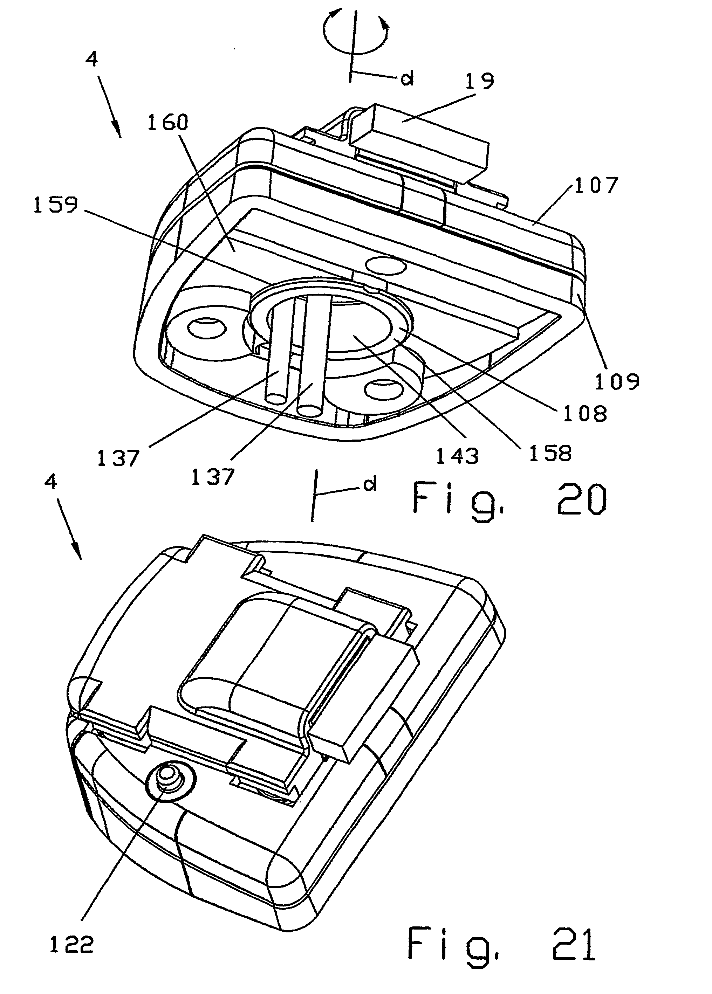

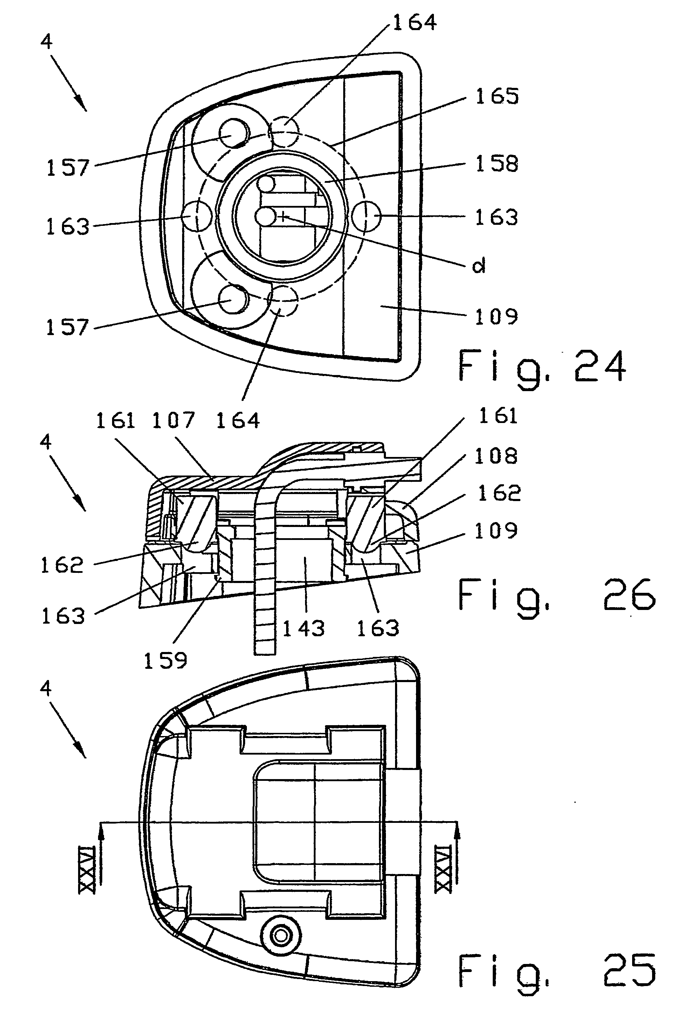

Figur 20 zeigt eine perspektivische Ansicht einer Ausführungsvariante einer Befestigungseinrichtung 4. Diese besteht im Wesentlichen aus einem Steckerelement 19, einem Auflagekörper 107 einem Flansch 109 und einer Bodenplatte 108. Bei dieser Variante sind der Auflagekörper 107 und die Bodenplatte 108, welche das Steckerelement 19 halten, drehbar mit dem Flansch 109 verbunden (siehe insbesondere auch Figur 26). Die Bodenplatte 108 ist mit dem Auflagekörper 107 mittels nicht sichtbarer Schrauben verschraubt. Weiterhin durchgreift die Bodenplatte 108 mit einem hohlzylindrischen Fortsatz 158 einem im Querschnitt ringförmigen Durchbruch 143 des Flansches 109. Ein an dem Fortsatz 158 angeordneter ringförmiger Wulst 159 übergreift eine Bodenfläche 160 des Flansches 109 und sorgt so für eine drehbare Verbindung um eine Achse d zwischen dem Flansch 109 und den übrigen Bauteilen der Befestigungseinrichtung 4. Diese Verbindung ist ähnlich einem Drehkranz aufgebaut. Durch den hohlzylindrischen Fortsatz 158 sind zum Steckerelement 19 gehörende Kabel 137 in das Fahrzeug bzw. zu elektrischen bzw. elektronischen Komponenten des Fahrzeugs geführt.

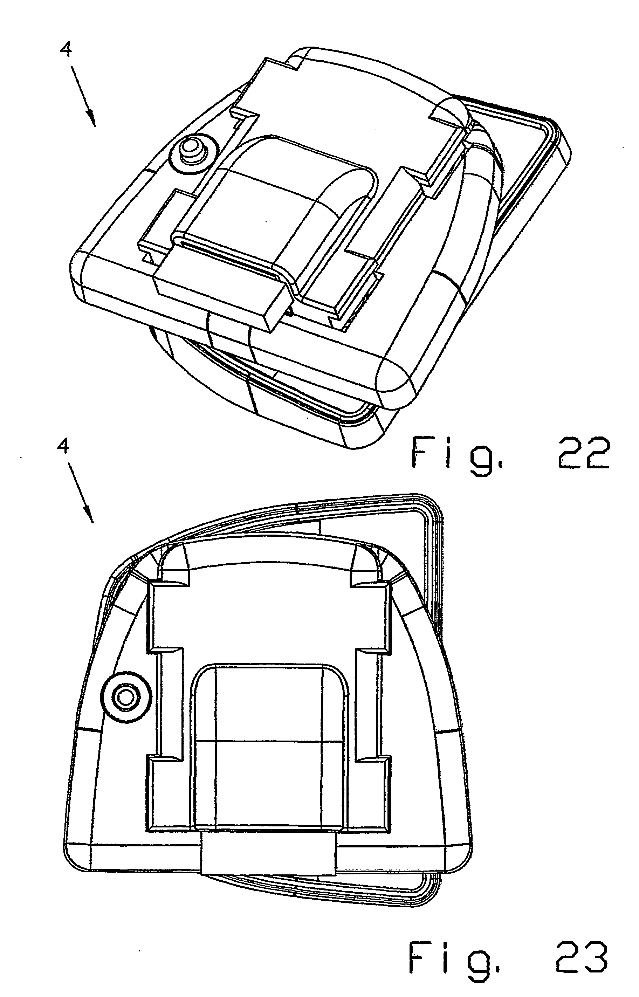

Figur 21 zeigt eine weitere perspektivische Ansicht der in Figur 20 dargestellten Befestigungseinrichtung 4. Diese Ansicht zeigt, dass die Befestigungseinrichtung 4 hinsichtlich des Zusammenwirkens mit einer nicht dargestellten Gerätehalterung analog zu der in den Figuren 12 bis 19 beschriebenen Befestigungseinrichtung aufgebaut ist. Die Befestigungseinrichtung 4 weist ebenfalls einen Stift 122 zur Verrastung mit der Gerätehalterung auf.

Figur 22 zeigt eine perspektivische Ansicht der in den Figuren 20 und 21 dargestellten Befestigungseinrichtung 4 in einer um etwa 90° nach links gedrehten Stellung. Figur 23 zeigt eine Draufsicht auf die in Figur 22 dargestellte Befestigungseinrichtung 4.

Figur 24 zeigt eine Unteransicht der in Figur 20 dargestellten Befestigungseinrichtung 4. In dieser Ansicht sind an dem Flansch 109 angeordnete Durchgangsbohrungen 157 sichtbar, durch welche der Flansch 109 am Fahrzeug mittels nicht dargestellter Schrauben befestigbar ist. Die Drehachse d ist durch den hohlzylindrischen Fortsatz 158 bestimmt, welcher als Dreh- und Verbindungsmittel dient.

Figur 25 zeigt eine Draufsicht auf die in Figur 20 dargestellte Befestigungseinrichtung 4. Figur 26 zeigt einen Schnitt durch die in Figur 25 dargestellte Befestigungseinrichtung 4 entlang der Schnittlinie XXVI-XXVI. In dieser Schnittansicht sind zwischen dem Auflagekörper 107 und der Bodenplatte 108 angeordnete Rastkörper 161 sichtbar.

Die Rastkörper 161 greifen mit halbkugelförmigen Köpfen 162 in in dem Flansch 109 angeordnete Durchgangsbohrungen 163 ein. Auf diese Weise erfolgt eine mechanische Festlegung des Auflagekörpers 107 bzw. aller mit diesem fest verbundener Bauteile gegenüber dem Flansch 109 in der in Figur 26 gezeigten Grundstellung der Befestigungseinrichtung 4. Durch die Anordnung weiterer Bohrungen im Flansch 109 kann ein Verrasten der Befestigungseinrichtung 4 in weiteren Stellungen (beispielsweise in der in den Figuren 22 und 23 gezeigten Stellung) erfolgen. In Figur 24 ist mit gestrichelten Linien die Lage zweier weiterer Bohrungen 164 angedeutet. Diese wären für eine Verrastung des Auflagekörpers 107 bzw. aller mit diesem fest verbundener Bauteile in der in den Figuren 22 und 23 gezeigten Stellung erforderlich. Eine nicht dargestellte Ausführungsvariante sieht die Anordnung weiterer Durchgangsbohrungen oder Vertiefungen in dem Flansch vor, welche auf einem mit gestrichelten Linien angedeuteten, konzentrischen Kreis 165 um die Drehachse d angeordnet sind. Eine drehbare Befestigungseinrichtung ist insbesondere dann von Vorteil, wenn das Mobiltelefon in verschiedenen Stellungen vom Nutzer benötigt wird. Eine weitere Ausführungsvariante sieht eine Kugelgelenkverbindung zwischen dem Flansch und dem Auflagekörper vor, so dass dieser gemeinsam mit dem Steckerelement in alle Raumrichtungen zum Flansch verschwenkt bzw. verdreht werden kann. Gemäß einem weiteren nicht dargestellten Ausführungsbeispiel ist es vorgesehen, den Flansch in einer geraden und/oder gebogenen Schiene verschiebbar anzuordnen. Hierbei ist auch daran gedacht, die einzelnen Adern des Kabels über Gleitkontakte mit auf der Schiene angeordneten Kontaktflächen zu kontaktieren. Eine derartige Befestigungseinrichtung erlaubt das freie Verschieben entlag dem Verlauf der Schiene.

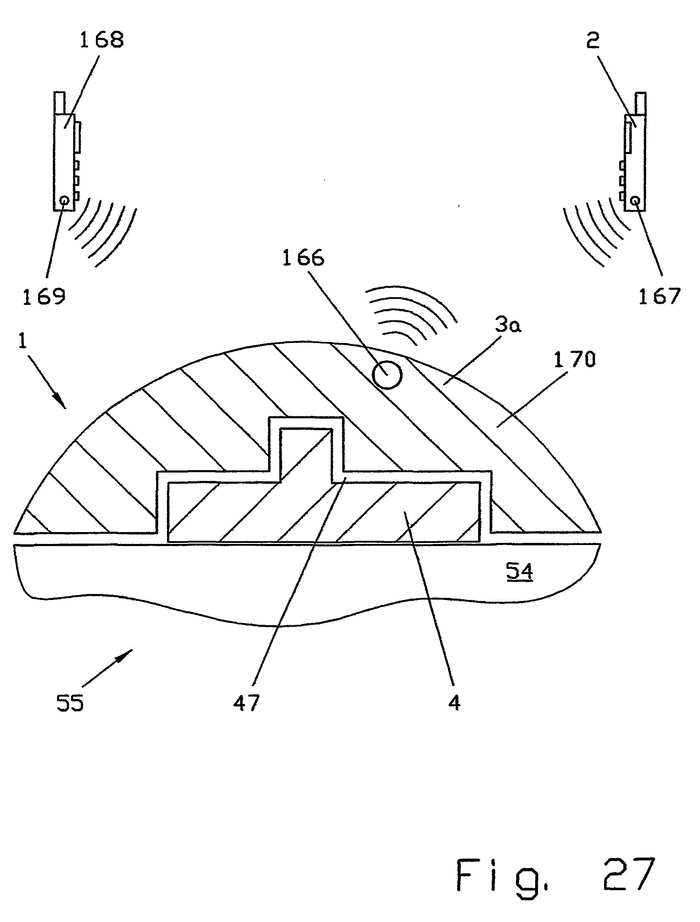

Figur 27 zeigt eine schematische, vereinfachte Seitenansicht einer Ausführungsvariante einer erfindungsgemäßen Anordnung 1. Diese besteht aus einer Befestigungseinrichtung 4 und einer Integrationseinheit 3a. Die Befestigungseinrichtung 4 ist fest mit einem Armaturenbrett 54 eines Fahrzeugs 55 verbunden. Die Integrationseinrichtung 3a enthält über die für einen Betrieb bzw. eine Steuerung einer Komforteinrichtung erforderlichen elektronischen Komponenten hinaus ein Sende- und Empfangsmodul 166, das für eine drahtlose Kommunikation mit einem Mobiltelefon 2 ausgelegt ist. Das Mobiltelefon 2 verfügt ebenfalls über ein entsprechendes Sende- und Empfangsmodul 167. Die Sende- und Empfangsmodule 166 und 167 übertragen sich gegenseitig wenigstens alle für den Betrieb der Komforteinrichtung, zum Beispiel der Freisprechfunktion über einen im Fahrzeug eingebauten Lautsprecher und ein im Fahrzeug eingebautes Mikrofon, erforderlichen Daten. Hierbei sieht die Erfindung auch die Nutzung der Anordnung 1 durch ein zweites Mobiltelefon 168 vor, welches ebenfalls über ein Sende- und Empfangsmodul 169 verfügt. Selbstverständlich ist es auch vorgesehen, die Anordnung 1 mit mehr als zwei Mobiltelefonen bzw. Kommunikationsgeräten zu nutzen. Die Integrationseinheit 3a ist in Form einer Abdeckkappe 170 ausgestaltet, welche die Befestigungseinrichtung 4 mit einer Ausnehmung 47 überdeckt. Alternativ ist auch eine, keine Elektronik enthaltende Abdeckkappe vorgesehen, um die Befestigungseinrichtung während deren Nichtnutzung zu schützen und eine gestalterische Integration in das Fahrzeug zu bewirken. Diese gestalterischen Integration ist selbstverständlich auch beim Einsatz der Integrationseinheit vorgesehen. Deren Oberfläche und Form ist dann im Fahrzeug vorhandenen gestalterischen Elementen angepasst oder als optischer Blickfang ausgebildet.

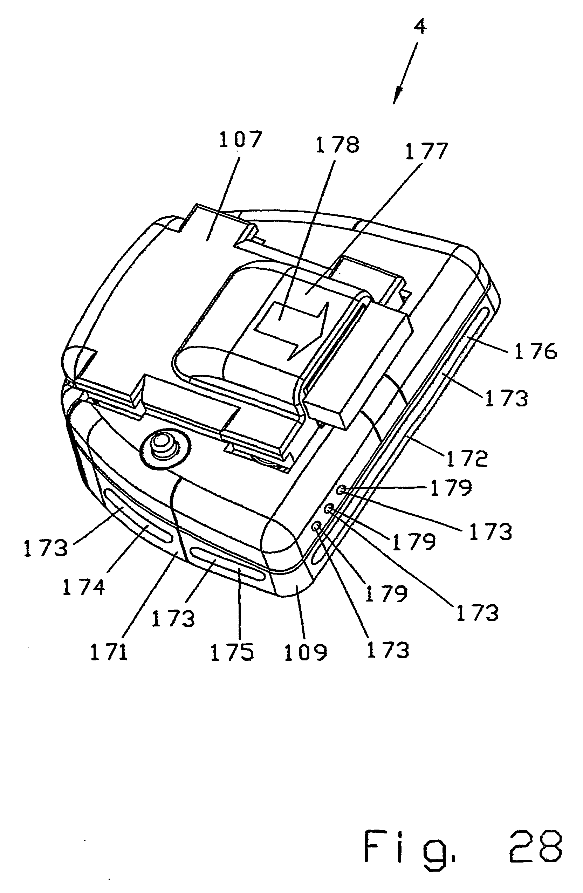

Figur 28 zeigt eine weitere Befestigungseinrichtung 4, welche im Wesentlichen entsprechend der in den Figuren 20 bis 26 dargestellten Befestigungseinrichtung aufgebaut ist. Die Befestigungseinrichtung 4 weist an Seitenflächen 171, 172 eines Flansches 109 Anzeigemittel 173 auf, welche als längliche Leuchtdioden 174, 175 und als Lichtleiter 176 ausgebildet sind. An einer Oberseite 177 eines Auflagekörpers 107 der Befestigungseinrichtung 4 ist ein weiteres Anzeigemittel dargestellt, das in Form eines Pfeils 178 ausgebildet ist. Durch den Pfeil 178 wird dem Nutzer angezeigt an welcher Stelle die Gerätehalterung bzw. die Integrationseinheit (hier nicht dargestellt) mit der Befestigungseinrichtung 4 zu verbinden ist. Weiterhin ist es auch vorgesehen, die Anzeigemittel 173 durch in die Befestigungseinrichtung 4 eingebrachte Bohrungen 179 und wenigstens eine dahinter angeordnete Lichtquelle (hier nicht sichtbar) auszubilden.

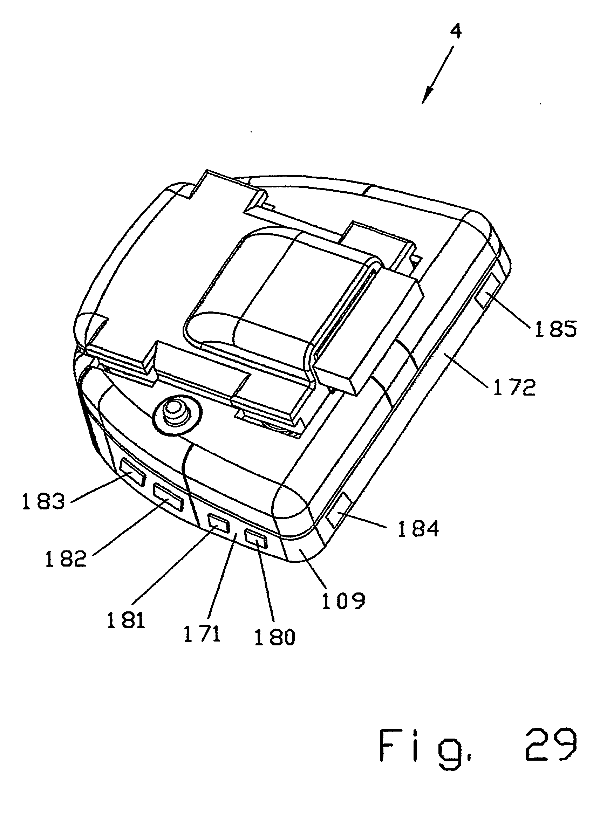

Figur 29 zeigt eine weitere Befestigungseinrichtung 4, welche im Wesentlichen entsprechend der in den Figuren 20 bis 26 dargestellten Befestigungseinrichtung aufgebaut ist. Die Befestigungseinrichtung 4 weist an einer Seitenflächen 171 eines Flansches 109 Tastschalter 180 - 183 auf, welche dafür vorgesehen sind, Sondereinrichtungen, wie zum Beispiel Notruf, Pannenruf oder Fahrzeugverriegelung, in Betrieb zu nehmen. An einer Seitenfläche 172 des Flansches 109 ist eine ergänzende oder alternative Ausführungsvariante gezeigt. Hier sind berührungssensitive Schalter (Sensoren) 184, 185 angeordnet, über welche das Nutzen von Sondereinrichtungen möglich ist. Gemäß einer nicht dargestellten Ausführungsvariante ist auch die Anordnung von Tastschaltern bzw. Sensoren und Anzeigemitteln an der Befestigungseinrichtung vorgesehen. Eine weitere Ausführungsvariante sieht zusätzlich oder alternativ, die Anordnung von Anzeigemitteln und/oder Schaltern an der Gerätehalterung bzw. der Integrationseinheit vor.

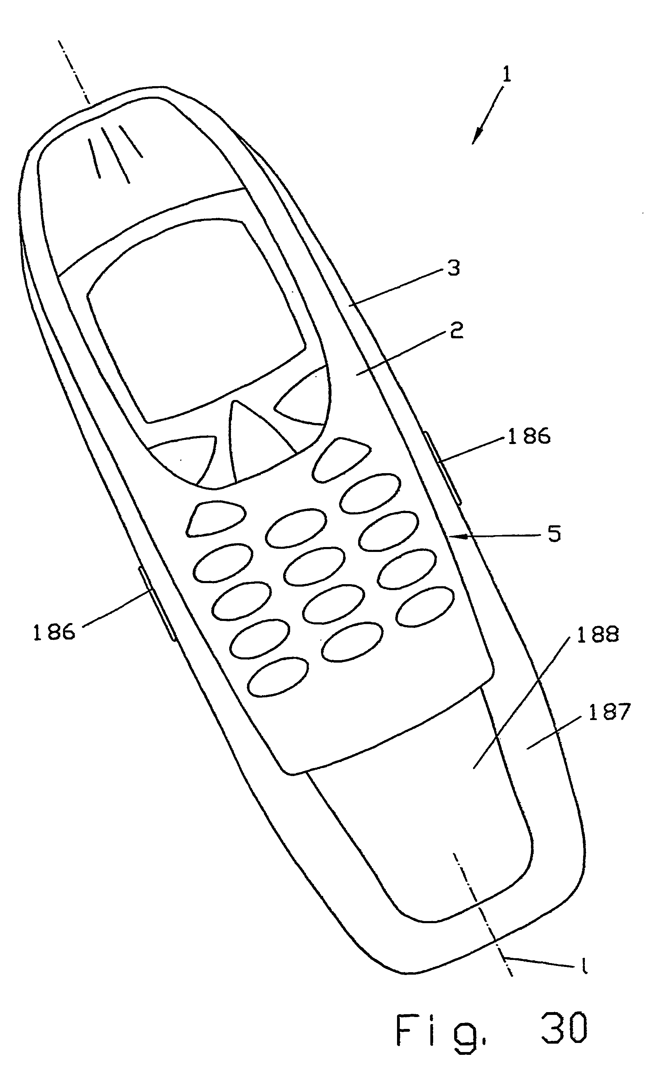

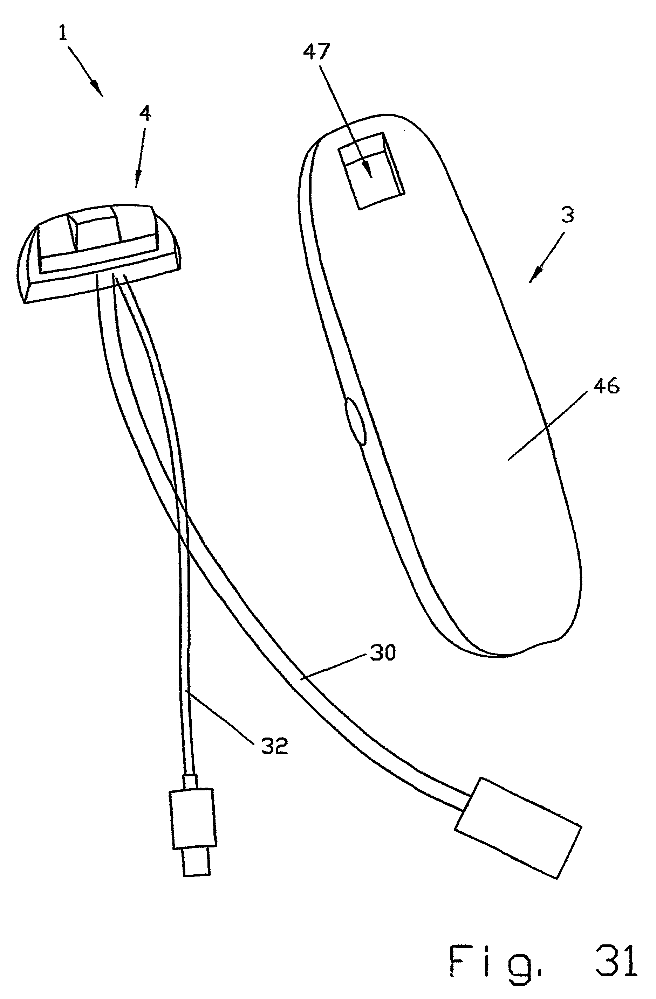

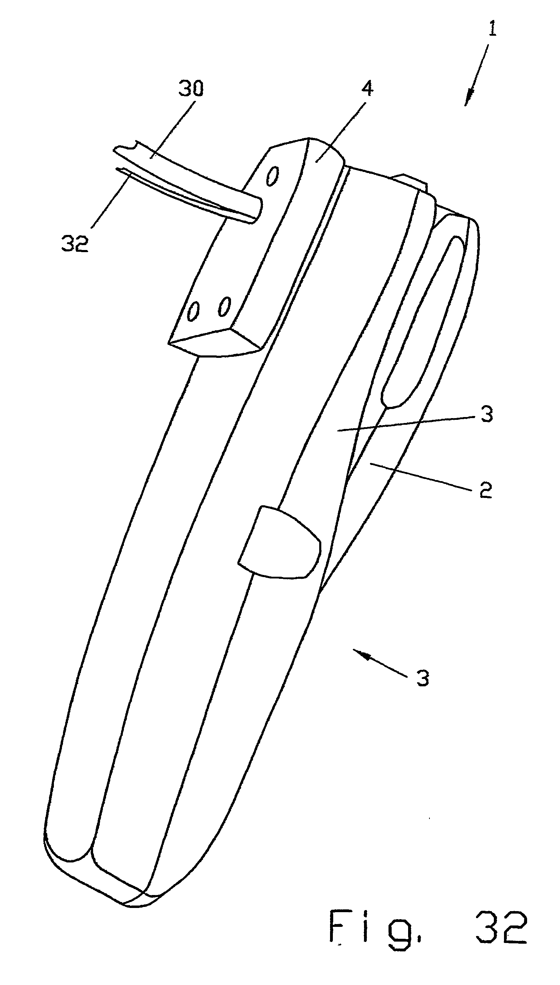

Die in den Figur 30 bis 32 dargestellte erfindungsgemäße Anordnung 1 hat als Halterung für ein Handfunktelefon 2 in einem Fahrzeug eine Handschale 3 sowie ein an deren Rückseite 46 in einen Kupplungsteil 47 einklinkbares Steckerelement 4.

Das Steckerelement 4 weist zwei Kabel 30 und 32 (Antennensignal, Stromversorgung, NF für Lautsprecher/Mikrofon, Datenschnittstelle) auf, welche möglichst direkt über entsprechende Stecker mit standardisierten Schnittstellen des Fahrzeugs verbindbar sind. Das Steckerelement 4 ist als "Steckerkonsole" beispielsweise auf der Innenraumverkleidung eines Fahrzeugs angeordnet und dient somit zum Halten der auf ihm aufgesteckten bzw. eingeklinkten Handschale 3. Die gesamte Elektronik (Freisprechen, Freihören, serielles Interface, ...) ist auf einer Platine in der Handschale 3 untergebracht. Die Handschale 3 stellt zwar die Signale für Freihören und - sprechen zur Verfügung, hat aber selber kein Mikrofon und keinen Lautsprecher. In der Handschale 3 wird das Handfunktelefon 2 mit zwei senkrecht zu einer Handschalenlängsachse 1 verschiebbaren Haltebacken 186 gehalten. Die Backen 186 haben auf ihrer Innenseite Nocken (nicht sichtbar), welche in Ausnehmungen in den Längsseiten des Handfunktelefons 2 eingreifen. Die Handschale 3 hat einen vertieften, nach oben offenen, aber seitlich und nach unten geschlossenen Aufnahmeraum 5 für das Handfunktelefon 2. Die Handschale 2 weist in Draufsicht (Figur 30) eine annähernd ovale Kontur auf. Handfunktelefone sind in der Regel mit einer dachziegelartigen Kontur versehen. An der geraden unteren Stirnseite des Handfunktelefons 2 sind elektrische Kontakte angeordnet (nicht sichtbar). Zu diesen Kontakten passend hat die Handschale 3 in einer unteren Begrenzungswand des Aufnahmeraumes 5 ebenfalls elektrische Kontakte (nicht sichtbar). An diese Kontakte anschließend erstreckt sich fluchtend ein abgerundeter Appendix bzw. Fortsatz 187, der mit einem abnehmbaren Deckel 188 verschlossen ist. Infolge der Abnehmbarkeit des Deckels 188 können einmal unterschiedliche Kontaktanordnungen eingesetzt werden sowie auch hierzu passende unterschiedliche Verdrahtungen vorgenommen werden. Auch können unter dem Deckel 188 auswechselbare elektronische Schaltungen bzw. Anpassungsschaltungen vorgesehen werden. Der Aufnahmeraum 5 der Handschale 3 ist derart ausgebildet, dass das Handfunkgerät 2 über dessen Rand 189 nach oben hervorsteht. Die erfindungsgemäße Anordnung 1 ist derart ausgebildet, dass das Handfunktelefon 2 unter Vornahme galvanischer elektrischer Verbindungen in die Handschale 3 einsteckbar und die Handschale 3 ebenfalls unter Vornahme galvanischer elektrischer Verbindungen auf das Steckerelement 4 steckbar ist.

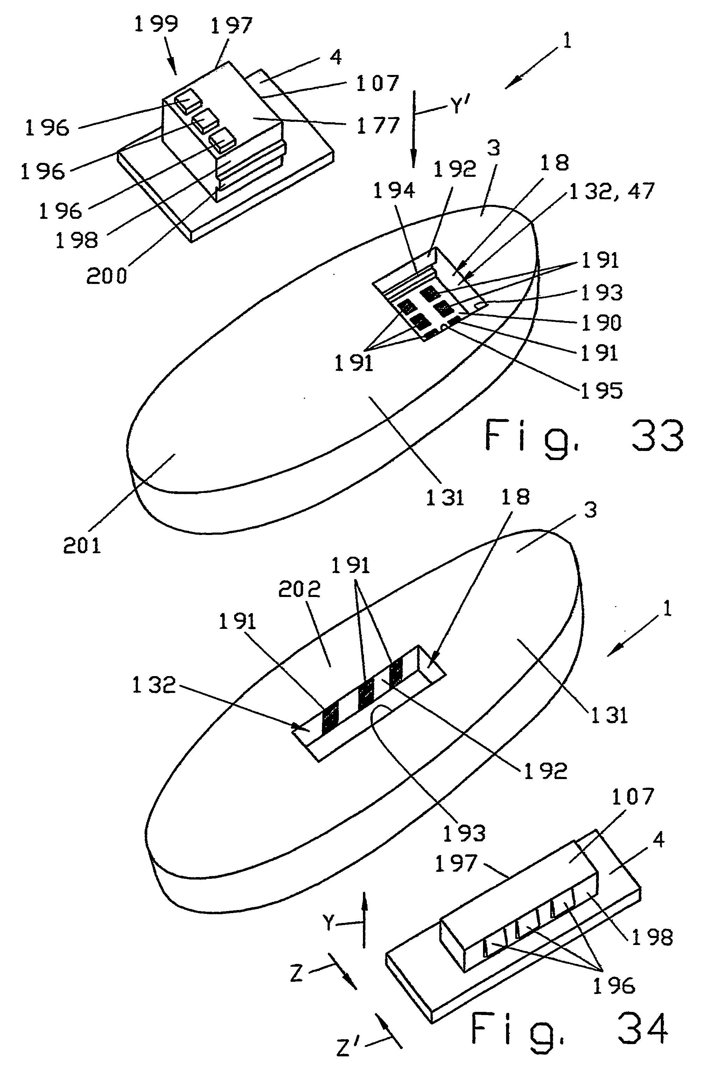

Figur 33 zeigt eine Anordnung 1, die aus einer Gerätehalterung 3 und einer zu der Gerätehalterung 3 passenden Befestigungseinrichtung 4 besteht. Die Gerätehalterung 3 ist in perspektivischer Ansicht auf eine Unterseite 131 dargestellt und weist in Analogie zu der in den Figuren 15 und 16 dargestellten Gerätehalterung einen Kontakt- und Halteraum 132 auf, der als Ausnehmung 47 ausgebildet ist. Der Kontakt- und Halteraum 132 weist eine Bodenfläche 190 mit sechs Kontaktflächen 191 auf, die zusammen eine Schnittstelle 18 zur Befestigungseinrichtung 4 bilden. An gegenüberliegenden Seitenwänden 192, 193 des Kontakt- und Halteraums 132 sind Rücksprünge 194, 195 ausgebildet. Die Befestigungseinrichtung 4, welche im Verhältnis zur Gerätehalterung 3 vergrößert dargestellt ist, weist einen Auflagekörper 107 auf, auf dessen Oberseite 177 in Pfeilrichtung y' gefederte Kontaktstifte 196 (hier sind nur drei Kontaktstifte exemplarisch dargestellt) angeordnet sind. Weiterhin weist der Auflagekörper 107 an gegenüberliegenden Seitenflächen 197, 198 Vorsprünge 199, 200 auf. Im aufgesetzten Zustand der Gerätehalterung 3 auf die Befestigungseinrichtung 4 treffen die Kontaktflächen 191 auf die Kontaktstifte 196 und drücken diese in Pfeilrichtung y' in den Auflagekörper 107 leicht ein, um eine sichere Kontaktierung zu erhalten. In dieser Position sind die Vorsprünge 199, 200 in die Rücksprünge 194, 195 eingeschnappt und halten die Befestigungseinrichtung 4 und die Gerätehalterung 3 formschlüssig in der gekuppelten Position. Der Formschluss zwischen der Befestigungseinrichtung 4 und der Gerätehalterung 3 lässt sich auf Grund abgerundeter Kanten und geringer Tiefen der Vorsprünge bzw. Rücksprünge durch ein Anheben der Gerätehalterung 3 an einem freien Ende 201 leicht lösen.

In Figur 34 ist eine Ausführungsvariante zu der in Figur 33 dargestellten Anordnung abgebildet. Eine Gerätehalterung 3 weist auf einer Unterseite 131 einen Kontakt- und Halteraum 132 auf, welcher in einem Mittelbereich 202 symmetrisch auf der Unterseite 131 der Gerätehalterung 3 angeordnet ist. In dem Kontakt- und Halteraum 132 sind an gegenüberliegenden Seitenwänden 192, 193 Kontaktflächen 191 angeordnet. Diese bilden eine Schnittstelle 18 zu Kontakten 196, welche an gegenüberliegenden Seitenflächen 197, 198 eines Auflagekörpers 107 einer Befestigungseinrichtung 4 angeordnet sind. Die Befestigungseinrichtung 4 ist selbstverständlich über nicht dargestellte Befestigungsmittel an einem Fahrzeug befestigt. Die Kontakte 196 stehen giebelartig über die Seitenflächen 197, 198 in Pfeilrichtungen z bzw. z' vor. Beim Aufsetzen der Gerätehalterung 3 auf die Befestigungseinrichtung 4 erfolgt durch die auf den Auflagekörper 107 angepasste Geometrie des Kontakt- und Halteraums 132 ein Einschieben der Kontakte 196 in den Auflagekörper 107 gegen Federkräfte. Die Kontakte 196 stehen bei aufgesetzter Gerätehalterung 3 unter Spannung und bewirken einen die Gerätehalterung 3 auf der Befestigungseinrichtung 4 haltenden Reibschluss. Gemäß einer nicht dargestellten Ausführungsvariante ist es vorgesehen, dass die Kontakte 196 in auf den Kontakten 191 angeordnete Kerben einrasten und hierdurch einen Formschluss bewirken. Die durch den Reibschluss bzw. den Formschluss erzeugten Haltekräfte sind so ausgelegt, dass die Gerätehalterung 3 durch eine in Pfeilrichtung y wirkende, leicht erhöhte Hebekraft abnehmbar ist.

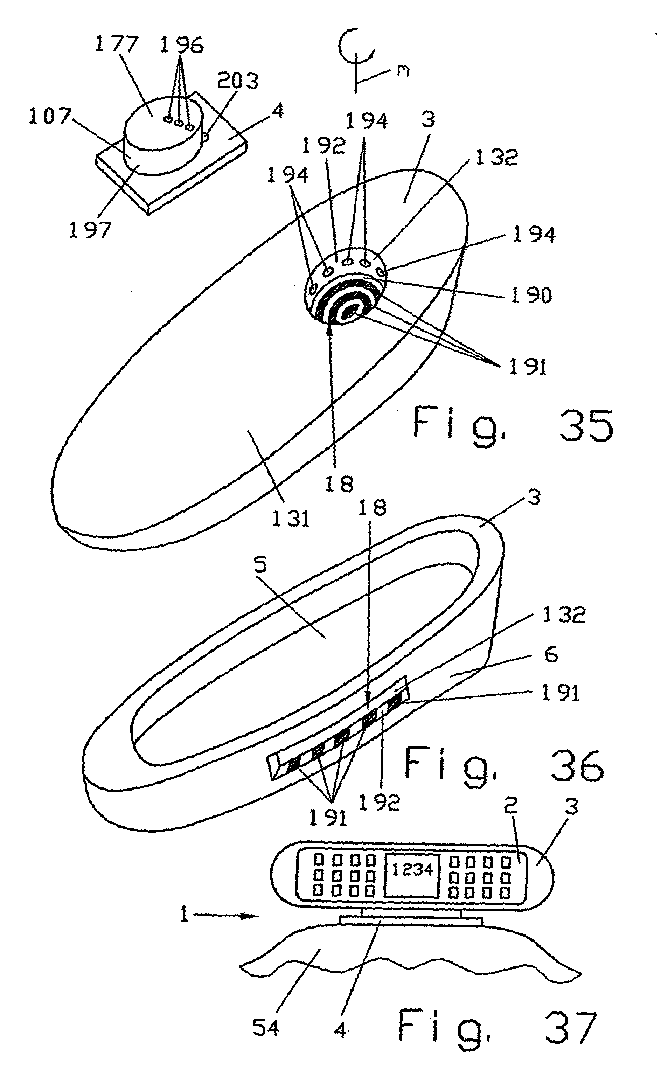

Figur 35 zeigt eine weitere Ausführungsvariante zu der in Figur 33 dargestellten Anordnung. Eine Gerätehalterung 3 weist auf einer Unterseite 131 einen zylinderförmigen Kontakt- und Halteraum 132 auf. In dem Kontakt- und Halteraum 132 sind auf einer Bodenfläche 190 drei konzentrisch zu einer Mittelachse m des zylinderförmigen Kontakt- und Halteraums 132 liegende ringförmige bzw. kreisförmige Kontaktflächen 191 angeordnet. Diese bilden eine Schnittstelle 18 zu Kontaktstiften 196 (vereinfacht dargestellt), welche auf einer Oberseite 177 eines zylindrischen Auflagekörpers 107 einer Befestigungseinrichtung 4 sitzen. Der zylindrische Auflagekörper 107 weist an einer Seitenfläche 197 eine gefedert gelagerte Rastkugel 203 auf. Im zusammengesetzten Zustand von Gerätehalterung 3 und Befestigungseinrichtung 4 kontaktieren die gefederten Kontaktstifte 196 die Kontaktflächen 191. Weiterhin rastet die Rastkugel 203 in einen der an einer Seitenwand 192 des Kontakt- und Halteraums 132 angeordneten Rücksprünge 194 ein. Hierdurch erfolgt eine formschlüssige Festlegung der Gerätehalterung 3 an der Befestigungseinrichtung 4. Durch ein Verdrehen der Gerätehalterung 3 um die Achse m ist es möglich, die Rastkugel 203 aus einem der Rücksprünge 194 zu lösen und in einen der benachbarten Rücksprünge 194 einrasten zu lassen. Auf diese Weise ist der Winkel, in welchem die Gerätehalterung 3 zur Befestigungseinrichtung 4 liegt schrittweise in Stufen verstellbar. Ein Abheben der Gerätehalterung 3 von der Befestigungseinrichtung 4 erfolgt durch eine leichtes Drehen der Gerätehalterung 3 um die Achse m (Lösen der Rastkugel 203 aus dem Rücksprung 194) und ein anschließendes Abheben der Gerätehalterung 3 von der Befestigungseinrichtung 4. Gemäß einer nicht dargestellten Ausführungsvariante ist auch eine stufenlose Winkelverstellung der Gerätehalterung 3 gegenüber der Befestigungseinrichtung 4 vorgesehen. Hierzu ist an der Seitenwand 192 ein parallel zur Bodenfläche 190 verlaufender ringförmiger offener Kanal vorgesehen, in welchem die Rastkugel 203 gleitet. Selbstverständlich können an der Befestigungseinrichtung 4 auch mehrere Rastkugeln 203 angeordnet sein, um eine Verteilung der aufzunehmenden Kräfte zu bewirken.

Figur 36 zeigt eine Gerätehalterung 3. Diese besitzt einen Aufnahmeraum 5 für ein nicht dargestelltes Mobiltelefon und weist an einer Längsseite 6 einen Kontakt- und Halteraum 132 auf. Der Kontakt- und Halteraum 132 ist quaderförmig ausgebildet und besitzt an einer Seitenwand 192 Kontaktflächen 191, die eine Schnittstelle 18 zu einer nicht dargestellten Befestigungseinrichtung bilden.

In Figur 37 ist die Gerätehalterung 3 aus Figur 36 in auf eine zugehörige Befestigungseinrichtung 4 aufgesetzter Position dargestellt. Die Befestigungseinrichtung 4 ist auf einem Armaturenbrett 54 montiert und in die Grätehalterung 3 ist ein Mobiltelefon 2 eingelegt. Die so gebildete Anordnung 1 dient insbesondere zur Aufnahme eines im "Querformat" ausgebildeten Mobiltelefons.

Die Anordnung ist nicht auf das dargestellte und beschriebene Ausführungsbeispiel beschränkt. Sie umfasst auch alle fachmännischen Ausgestaltungen im Rahmen der Schutzrechtsansprüche. Die Nennung des Begriffs Mobiltelefon ist jeweils stellvertretend für sämtliche Kommunikationsmittel zu verstehen.

### Bezugszeichenliste:

- 1: Anordnung
- 2: Mobiltelefon
- 3: Gerätehalterung / Oberteil / Handschale
- 3a: Integrationseinheit
- 4: Befestigungseinrichtung / Unterteil /Steckerelement
- 5: Wannenförmige Ausnehmung / Aufnahmeraum
- 6: Längsseitenwandung
- 7: Längsseitenwandung
- 8: stirnseitige Wandung
- 9: stirnseitige Wandung
- 10: obere Abdeckwandung
- 11: obere Abdeckwandung
- 12: Öffnung
- 13: Platine / Hauptplatine
- 14: Platine
- 15: Systemstecker an 3 bzw. 14
- 16: Anschlussstecker an 2
- 17: Pfeil / Längsrichtung
- 18: erstes Steckerelement / Systemstecker an 3 bzw. 14
- 19: zweites Steckerelement an 4
- 20: Steckergehäuse
- 21: Grundplatte von 4
- 22: Durchgangsbohrung in 21
- 23: Seitenwandung
- 24: Seitenwandung
- 25: stirnseitige Seitenwand
- 26: Öffnung
- 27: Verbindungsnocken
- 28: L-förmige Aufnahmenut
- 29: Pfeil
- 30: Kabeleinrichtung
- 31: gegenüberliegende Seite
- 32: Antennenkabel
- 33: Verbindungsstecker
- 34: Funktionstaste
- 35: HF-Stecker
- 36: Befestigungsschraube
- 37: Auswerftaste
- 38: Antenne des Mobiltelefons
- 39: Ausnehmung
- 40: Magnet
- 41: Kabel
- 42: Stecker von 41
- 43: Stecker von 41
- 44: Gebrauchseinheit
- 45: Innenraum von 3
- 46: Bodenbereich von 3 / Rückseite von 3
- 47: Ausnehmung in 3 bzw. 3a / Kupplungsteil
- 48: Raum
- 49: Auflage
- 50: Seitenfläche von 4
- 51: Deckfläche von 4
- 52: Seitenwand von 4
- 53: Vorsprung
- 54: Armaturenbrett
- 55: Fahrzeug
- 56: Ausnehmung in 49
- 57: elektrische Leitung von 19
- 58: Kontaktelement von 19
- 59: Unterseite von 19
- 60: Deckel
- 61: Rastnase
- 62: Rücksprung
- 63: Innenraum von 19
- 64: Zugentlastung
- 65: Achse
- 66: Achse
- 67: Durchgangsbohrung
- 68: Gewinde in 54
- 69: Gewinde in 54
- 70: Kontakt
- 71: Fuß
- 72: Nase
- 73: Hintergriff
- 74: Bohrung
- 75: Bohrung
- 76: Seitenfläche von 21
- 77: Führung
- 78: Vorsprung von 3
- 79: Kontaktelement von 18
- 80: elektrische Leitung
- 81: Ausnehmung in 4
- 82: hülsenförmiger Kontakt
- 83: stiftförmiger Kontakt
- 84: Bauteil
- 85: Audioverstärker
- 86: Ladeschaltung
- 87: Schnittstelle von 3
- 88: Antennekabel
- 89: Stromversorgungskabel
- 90: Mikrofonkabel
- 91: Lautsprecherkabel
- 92: Datenleitung
- 93: Schnittstelle von 4
- 94: Funktionseinrichtung
- 95: Fahrzeugantenne
- 96: Stromversorgung
- 97: Mikrofon
- 98: Lautsprecher
- 99: Datenbus
- 100: Schnittstelle
- 101: Kasten
- 102: Funkverbindung zwischen 2 und 3 bzw. 3a
- 102a: Schnittstelle
- 102b: Schnittstelle
- 103: Schnittstelle aus 15, 16
- 104: Antennestecker in 3
- 105: Nase
- 106: Schieber
- 107: Auflagekörper von 4
- 108: Bodenplatte von 4
- 109: Flansch von 4
- 110: obere Halbschale von 3
- 111: untere Halbschale von 3
- 112: Kopfbereich von 107
- 113: Kontaktbereich
- 114: Rastmechanismus
- 115: Stift in 3
- 116: Bund an 115
- 117: Hohlzylinder in 3
- 118: Spiralfeder in 3
- 119: Öffnung in 3
- 120: flexible Kappe an 3
- 121: Hohlzylinder in 3
- 122: Stift in 4
- 123: Bund an 122
- 124: Nase von 122
- 125: Ausnehmung in 107
- 126: Spiralfeder in 4
- 127: Bohrung in 122
- 128: formschlüssige Verbindung zwischen 3 und 4
- 129: U-Führung an 4 bzw. 107
- 130: Steg an 3 bzw. 111
- 130a: erster Steg
- 130b: zweiter Steg
- 131: Unterseite von 3
- 132: Kontakt- und Halteraum an 3
- 133: Unterbrechung in 130
- 134: Kontaktbereich
- 135: Haltebereich
- 136: Nase
- 137: Kabel
- 138: Halteelement
- 139: Nut
- 140: Durchbruch in 107
- 141: Durchbruch in 108
- 142: Schraube
- 143: Durchbruch in 109
- 144: Oberschale
- 145: Unterschale
- 146: Rastarm
- 147: Unterbrechung
- 148: Sockelfläche
- 149: Kantenbereich
- 150: Seitenfläche von 47
- 151: Frontfläche von 107
- 152: Sockelbereich von 107
- 153: Schlitz in 107 bzw. 152
- 154: Blende an 108
- 155: Sockel an 108
- 156: Rücksprung in 155
- 157: Durchgangsbohrung in 109
- 158: hohlzylindrischer Fortsatz von 108
- 159: ringförmiger Wulst von 158
- 160: Bodenfläche von 109
- 161: Rastkörper in 4
- 162: halbkugelförmiger Kopf von 161
- 163: Durchgangsbohrung in 109
- 164: Durchgangsbohrung in 109
- 165: Kreis um d
- 166: Sende- und Empfangsmodul in 3a
- 167: Sende- und Empfangsmodul in 2
- 168: zweites Mobiltelefon
- 169: Sende- und Empfangsmodul in 168
- 170: Abdeckkappe
- 171: Seitenfläche von 109
- 172: Seitenfläche von 109
- 173: Anzeigemittel
- 174: Leuchtdiode
- 175: Leuchtdiode
- 176: Lichtleiter
- 177: Oberseite von 107
- 178: Pfeil
- 179: Bohrung
- 180 - 183: Tastschalter
- 184, 185: berührungssensitiver Schaler / Sensor
- 186: Haltebacke an 3
- 187: Appendix / Fortsatz
- 188: Deckel für 187
- 189: Rand von 3
- 190: Bodenfläche von 132
- 191: Kontaktfläche an 3
- 192, 193: Seitenwand von 132
- 194, 195: Rücksprung in 192, 193
- 196: Kontaktstift
- 197, 198: Seitenfläche von 107
- 199, 200: Vorsprung an 197, 198
- 201: freies Ende von 3
- 202: Mittelbereich von 3
- 203: Rastkugel an 4

## Patentansprüche

1. Anordnung (1) zur Handhabung eines Kommunikationsgerätes, wie Mobiltelefon (2, 168), Personal Digital Assistent oder dergleichen, insbesondere zur Verwendung in einem Fahrzeug (55), bestehend aus einer das Kommunikationsgerät (2) aufnehmenden Gerätehalterung (3) und einer an die Gerätehalterung (3) mechanisch angepassten Befestigungseinrichtung (4), wobei die Gerätehalterung (3) eine geometrische bzw. mechanische Anpassung an das Kommunikationsgerät (2) aufweist und mit diesem in Kommunikationsverbindung steht, wobei eine elektronische Schaltung (13, 14, 84) innerhalb der Gerätehalterung (3) vorgesehen ist, welche wenigstens alle für einen Betrieb bzw. eine Steuerung einer Komforteinrichtung erforderlichen elektronischen Komponenten (13, 14, 84) umfasst und wobei eine universelle, mechanische Standardisierung bzw. Anpassung zur Verbindung der Gerätehalterung (3) mit der Befestigungseinrichtung (4) vorgesehen ist, **dadurch gekennzeichnet, dass** zusätzlich zur mechanischen, eine universelle elektrische Standardisierung bzw. Anpassung der Gerätehalterung (3) an die Befestigungseinrichtung erfolgt, wobei der Befestigungseinrichtung (4) lediglich elektrische bzw. elektronische Komponenten (97, 98) zur Ein- und/oder Ausgabe von Sprache und/oder Daten nachgeschaltet sind.

2. Anordnung nach Anspruch 1, **dadurch gekennzeichnet, dass** die Kommunikationsverbindung zwischen dem Konmunikationsgerät (2) und der Gerätehalterung (3) mittels einer Funkverbindung (102, 102a, 102b; 166, 167 bzw. 168), insbesondere einer sogenannten Blue Tooth Verbindung oder einer Infrarotverbindung erfolgt.

3. Anordnung nach einem der vorhergehenden Ansprüche, **dadurch gekennzeichnet; dass** für unterschiedliche Kommunikationsgeräte (2) unterschiedliche Gerätehalterungen (3) und gleiche Befestigungseinrichtungen (4) vorgesehen sind.

4. Anordnung nach einem der vorhergehenden Ansprüche, **dadurch gekennzeichnet, dass** die Befestigungseinrichtung (4) etwa 1/8 bis 1/3 des Volumens der Gerätehalterung (3) aufweist.

5. Anordnung nach einem der vorhergehenden Ansprüche, **dadurch gekennzeichnet, dass** die elektronische Schaltung (13, 14, 84) in der Gerätehälterung (3) eine, für das Mobiltelefon (2) spezifische Anpassung an die im Kraftfahrzeug (55) enthaltenen elektrischen bzw. elektronischen Komponenten, wie z. B. Mikrofon (97), Lautsprecher (98), Stromversorgung (96), Datenbus (99) vornimmt.

6. Anordnung nach einem der vorhergehenden Ansprüche, **dadurch gekennzeichnet, dass** die Gerätehalterung (3) einen insbesondere variablen, schalenförmigen oberen Aufnahmeraum (5) aufweist, der an die Formgebung eines jeweils verwendbaren Konmnmikationsgeräts (2) angepasst ist.

7. Anordnung nach einem der vorhergehenden Ansprüche, **dadurch gekennzeichnet, dass** der Platine (13, 14) in der Gerätehalterung (3) für das Mobiltelefon (2) ein Steckerelement (15) zum Anschluss an einen Anschlussstecker (16) des Mobiltelefons (2) zugeordnet ist.

8. Anordnung nach Anspruch 7, **dadurch gekennzeichnet, dass** das der Platine (13), zugeordnete Steckerelement (15) zur Verbindung mit dem Mobiltelefon (2) auf einer weiteren Platine (14), angeordnet ist, die mit der ersten Platine (13) vorzugsweise in senkrechter Verbindung steht.

9. Anordnung nach einem der vorhergehenden Ansprüche, **dadurch gekennzeichnet, dass** die Gerätehalterung (3) einen Anschlussstecker (15, 104) für einen Antennenanschluss zum Mobiltelefon (2) aufweist, wobei vorzugsweise ein separates Kabel (32) über die Gerätehalterung (3) und über die Befestigungseinrichtung (4) zum Kraftfahrzeug (55) bzw. zu einem Antennenanschluss führt.

10. Anordnung nach einem der vorhergehenden Ansprüche, **dadurch gekennzeichnet, dass** die Gerätehalterung (3) ein Ladegerät (86) für eine Energiequelle des Mobiltelefons (2) umfasst.

11. Anordnung nach einem der vorhergehenden Ansprüche, **dadurch gekennzeichnet, dass** die Gerätehalterung (3) alle erforderlichen elektrischen und elektronischen Bauteile (84) enthält, derart, dass im Fahrzeug (55) lediglich Lautsprecher (98) und Mikrofon (97) benötigt sind, wobei ergänzend insbesondere Antenne (95) und Stromversorgung (96) verfügbar sind.

12. Vorrichtung nach einem der vorhergehenden Ansprüche, **dadurch gekennzeichnet, dass** die Gerätehalterung (3) das Kommunikationsgerät (2) formschlüssig und/oder kraftschlüssig hält.

13. Vorrichtung nach einem der vorhergehenden Ansprüche, **dadurch gekennzeichnet, dass** die Gerätehalterung (3) über ein Steckerelement (15) eine Stromversorgung und/oder einen Antennenanschluss zur Verfügung stellt.

14. Vorrichtung nach einem der vorhergehenden Ansprüche, **dadurch gekennzeichnet, dass** das Kommunikationsgerät (2) mittels wenigstens einer beweglichen Klemmbacke (106) an der Gerätehalterung (3) gehalten ist.

15. Anordnung (1) zur Handhabung eines Kommunikationsgerätes, wie Mobiltelefon (2), Personal Digital Assistent (PDA) oder dergleichen, insbesondere zur Verwendung in einem Fahrzeug (55) bestehend aus einer mit dem Kommunikationsgerät (2) in Verbindung stehenden Integrationseinheit (3a) und einer an die Integrationseinheit (3a) mechanisch angepassten Befestigungseinrichtung (4) wobei eine elektronische Schaltung (13, 14, 84) innerhalb der Integrationseinheit (3a) vorgesehen ist, welche wenigstens alle für einen Betrieb bzw. eine Steuerung einer Freisprecheinrichtung bzw. Komforteinrichtung erforderlichen elektronischen Komponenten (13, 14, 84) umfasst und wobei eine universelle, mechanische Standardisierung bzw. Anpassung zur Verbindung der Integrationseinheit (3a) mit der Befestigungseinrichtung (4) vorgesehen ist, **dadurch gekennzeichnet, dass** zusätzlich zur mechanischen, eine universelle elektrische Standardisierung bzw. Anpassung der Integrationseinheit (3a) an die Befestigungseinrichtung (4) erfolgt, wobei der Befestigungseinrichtung (4) lediglich elektrische bzw. elektronische Komponenten zur Ein- und/oder Ausgabe von Sprache und/oder Daten nachgeschaltet sind und wobei die Kommunikationsverbindung zwischen dem Kommunikationsgerät (2) und der Integrationseinheit (3a) mittels einer Funkverbindung (102; 166, 167 bzw. 168), insbesondere einer sogenannten Blue Tooth Verbindung oder einer Infrarotverbindung, erfolgt.

16. Anordnung nach einem der vorhergehenden Ansprüche, **dadurch gekennzeichnet, dass** die Komforteinrichtung als Freisprecheinrichtung und/oder Telematikanwendung ausgebildet ist.

17. Anordnung nach einem der vorhergehenden Ansprüche, **dadurch gekennzeichnet, dass** die Befestigungseinrichtung (4) eine Auflage (49, 107) mit einem ersten Steckerelement (19) umfasst, wobei das erste Steckerelement (19) mit einem an der Gerätehalterung (3) bzw. der Integrationseinheit (3a) angeordneten zweiten Steckerelement (18) zusammenwirkt und wobei die Befestigungseinrichtung (4)als universelle, standardisierte, mechanische Auflage (49) zur Aufnahme der Gerätehalterung (3) bzw. die Integrationseinheit (3a) und als universelles, standardisiertes Steckerelement (19) zum Kontaktieren des Steckerelements (18) der Gerätehalterung (3) bzw. die Integrationseinheit (3a) ausgebildet ist.

18. Anordnung nach einem der vorhergehenden Ansprüche, **dadurch gekennzeichnet, dass** die Befestigungseinrichtung (4) fest, insbesondere durch eine Verschraubung und/oder Verklebung und/oder Verrastung, mit dem Fahrzeug (55), insbesondere einem Armaturenbrett (54) oder einer Mittelkonsole oder einem Dachbereich, verbunden ist.

19. Anordnung nach einem der vorhergehenden Ansprüche 1 bis 14 oder 15 bis 18, **dadurch gekennzeichnet, dass** die Gerätehalterung (3) bzw. die Integrationseinheit (3a) die Befestigungseinrichtung (4) mit einer Ausnehmung (47, 132) wenigstens teilweise übergreift.

20. Anordnung nach einem der vorhergehenden Ansprüche, **dadurch gekennzeichnet, dass** die Gerätehalterung (3) bzw. die Integrationseinheit (3a) mit einem Vorsprung (78) in einen Rücksprung (81) der Befestigungseinrichtung (4) eingreift.

21. Anordnung nach einem der vorhergehenden Ansprüche, **dadurch gekennzeichnet, dass** die Befestigungseinrichtung (4) die Gerätehalterung (3) bzw. die Integrationseinheit (3a) im zusammengesetzten Zustand in Draufsicht vollständig überdeckt.

22. Anordnung nach einem der vorhergehenden Ansprüche 7, 8, 13, 17, **dadurch gekennzeichnet, dass** das erste Steckerelement (19) insbesondere Leitungen (57) für die Durchleitung von Antennensignalen (88), Versorgungsstrom (89), Mikrofonsignalen (90) und Lautsprechersignalen (91) aufweist.

23. Anordnung nach einem der vorhergehenden Ansprüche 7, 8, 13, 17, 22, **dadurch gekennzeichnet, dass** das erste Steckerelement (19) Leitungen (57) für die Durchleitung von seriellen oder parallelen Steuersignalen aufweist.

24. Anordnung nach Anspruch 23, **dadurch gekennzeichnet, dass** die seriellen oder parallelen Steuersignale bzw. Datensignale über eine oder mehrere von der Befestigungsplatte (4) ausgehende Leitungen (92) von und zu einem im Fahrzeug (55) angeordneten Bussystem (99) geführt sind, um eine Kommunikation zwischen dem Mobiltelefon (2) und dem Datenbus (99) des Fahrzeugs (55) zu ermöglichen und das Mobiltelefon (2) funktionell in die Fahrzeugelektronik zu integrieren.

25. Anordnung nach einem der vorhergehenden Ansprüche, **dadurch gekennzeichnet, dass** die Gerätehalterung (3) bzw. die Integrationseinheit (3a) auf der Platine (13, 14) vorzugsweise die mobiltelefonische Schaltung einer Freisprecheinrichtung enthält.

26. Anordnung nach einem der vorhergehenden Ansprüche, **dadurch gekennzeichnet, dass** die Gerätehalterung (3) bzw. die Integrationseinheit (3a) eine Vorrichtung und/oder Software (84, 85) zur Anpassung des Pegels der Sprachsignale aufweist.

27. Anordnung nach einem der vorhergehenden Ansprüche, **dadurch gekennzeichnet, dass** die Gerätehalterung (3) bzw. die Integrationseinheit (3a) eine Schnittstelle (87) zur Befestigungseinrichtung (4) aufweist, die eine Vorrichtung und/oder Software umfasst, die als Protokollmodul für das Netzwerk (99) des Fahrzeugs (55) und als Protokollmodul für das Mobiltelefon (2) arbeitet und eine Initialisierungsroutine für die Abstimmung auf den Datenbus des Mobiltelefons (2) umfasst.

28. Vorrichtung nach-einem-der vorhergehenden Ansprüche, **dadurch gekennzeichnet, dass** die Gerätehalterung (3) bzw. die Integrationseinheit (3a) und die Befestigungseinrichtung (4) im gekuppelten Zustand zusätzlich durch eine lösbare Rastverbindung (114) miteinander verbunden sind.

29. Anordnung nach einem der vorhergehenden Ansprüche, **dadurch gekennzeichnet**e dass die zwischen die Befestigungseinrichtung (4) und das Mobiltelefon (2) geschaltete Gerätehalterung (3) bzw. Integrationseinheit (3a) ein austauschbares Speichermedium (84) umfasst, das zur Speicherung anwenderspezifischer Funktionen wie Freisprechen und/oder Verbindung zum Fahrzeugbus (99) und/oder Geräuschauslöschung und/oder Echoauslöschung und/oder Spracherkennung und/oder Textumwandlung in Sprache und/oder Sprachumwandlung in Text einsetzbar ist.

30. Anordnung nach Anspruch 29, **dadurch gekennzeichnet, dass** das Speichermedium (84) anwenderspezifische Funktionen, die im Mobiltelefon (2) vorhanden sind, wie Spracherkennung und/oder Geräuschauslöschung und/oder Bchoauslöschung für den Betrieb des Mobiltelefons (2) im Fahrzeug (55) verfügbar macht.

31. Anordnung nach einem der vorhergehenden Ansprüche 29, 30, **dadurch gekennzeichnet, dass** das Speichermedium (84) als entnehmbares und/oder wiederbeschreibbares Speichermedium, wie Speicherkarte oder Steckmodul ausgebildet ist.

32. Anordnung nach einem der vorhergehenden Ansprüche 29 bis 31, **dadurch gekennzeichnet, dass** das Speichermedium (84) über eine Funkverbindung wiederbeschreibbar ist.

33. Anordnung nach einem der vorhergehenden Ansprüche 29 bis 32, **dadurch gekennzeichnet, dass** das Speichermedium (84) ergänzende Daten zu anwenderspezifischen Funktionen des Mobiltelefons (2) und/oder der Gerätehälterung (3) bzw. die Integrationseinheit (3a) aufnimmt, insbesondere einen erweiterten Wortschatz für die Textumwandlung in Sprache und/oder die Sprachumwandlung in Text.

34. Anordnung nach einem der vorhergehenden Ansprüche, **dadurch gekennzeichnet, dass** die Befestigungseinrichtung (4) Leitungen (57, 137) für Lautsprecher (98) und/oder Mikrofon (97) und/bder Antenne (95) und/oder Stromversorgung (96) und/oder Zündkontakt und/oder Stummschaltung der Audioanlage und/oder Datenaustausch für den Austausch von Daten zwischen dem Kommunikationsgerät (2) und einem zum Fahrzeug (55) gehörenden Bussystem (99) aufweist.

35. Anordnung nach einem der vorhergehenden Ansprüche, **dadurch gekennzeichnet, dass** die Gerätehalterung (3) bzw. die Integrationseinheit (3a) und die Befestigungseinrichtung (4) gemeinsam eine im wesentlichen die Abmessungen der Gerätehalterung (3) bzw. der Integrationseinheit (3a) auf weisende Einheit (1) bilden, wobei vorzugsweise mechanische Verbindungsmittel (27, 28, 72, 73; 129, 130; 114) die Anordnungsbestandteile (3 bzw. 3a, 4) miteinander verbinden.

36. Anordnung nach einem der vorhergehenden Ansprüche, **dadurch gekennzeichnet, dass** die Befestigungseinrichtung (4) als im Querschnitt U-förmiges Befestigungsgehäuse (4) bzw. Unterteil (4) ausgebildet ist, dessen Seitenwände (23, 24) vorzugsweise zur mechanischen Verbindung mit der Gerätehalterung (3) bzw. die Integrationseinheit (3a) dienen.

37. Anordnung nach einem der vorhergehenden Ansprüche, **dadurch gekennzeichnet, dass** die Befestigungseinrichtung (4) und die Gerätehalterung (3) bzw. die Integrationseinheit (3a) durch eine Längsverschiebung (Pfeil 17, Pfeil x') miteinander mechanisch und/oder elektrisch verbindbar sind.

38. Anordnung nach einem der vorhergehenden Ansprüche 7, 8, 13, 17, 22, 23, **dadurch gekennzeichnet, dass** die Steckerelemente (18, 19) in der Gerätehalterung (3) bzw. die Integrationseinheit (3a) und der Befestigungseinrichtung (4) vorzugsweise als D-Sub-Stecker ausgebildet sind.

39. Anordnung nach einem der vorhergehenden Ansprüche, **dadurch gekennzeichnet, dass** in der Gerätehalterung (3) bzw. der Integrationseinheit (3a) die elektronische Schaltung (13, 14) für das Mobiltelefon (2) angeordnet ist, und wenigstens eine Platine (13, 14) elektronische Bauelemente (84) umfasst, wobei die Platine (13, 14) vorzugsweise ein Steckerelement (18) besitzt, welches mit einem zugehörigen Steckerelement (19) der Befestigungseinrichtung (4) zusammenwirkt.

40. Anordnung nach einem der vorhergehenden Ansprüche, **dadurch gekennzeichnet, dass** die mechanischen Kopplungselemente (27, 130) und das elektrische Steckerelement der Gerätehalterung (3) bzw. Integrationseinheit (3a) in der Ausnehmung (47, 132) angeordnet sind, welcher diese das elektrische Steckerelement (19) und die mechanischen Kopplungselemente (28; 72, 73; 129) der Befestigungseinrichtung (4) im gekuppelten Zustand übergreifen.

41. Anordnung nach einem der vorhergehenden Ansprüche, **dadurch gekennzeichnet, dass** die Gerätehalterung (3) bzw. die Integrationseinheit (3a) und die Befestigungseinrichtung elektrische Steckerelemente (18, 19) aufweisen, welche gegenüber den mechanischen Kopplungselementen (28, 29; 72, 73; 129, 130) in Wirkrichtung (x bzw. x') zurückversetzt sind.

42. Anordnung nach einem der vorhergehenden Ansprüche, **dadurch gekennzeichnet, dass** die mechanische Kopplungselemente (28, 29; 72, 73; 129, 130) im Wesentlichen senkrecht zu einer Öffnungsrichtung (y') der Ausnehmung (47, 132) gegeneinander verschiebbar sind.

43. Anordnung nach einem der vorhergehenden Ansprüche, **dadurch gekennzeichnet, dass** ein Verbinden der Gerätehalterung (3) bzw. der Integrationseinheit (3a) mit der Befestigungseinrichtung (4) durch ein Aufsetzen der Gerätehalterung (3) bzw. der Integrationseinheit (3a) entgegen der Öffnungsrichtung (y') der Ausnehmung (47, 132) auf die Befestigungseinrichtung und ein anschließendes Verschieben der Gerätehalterung (3) bzw. die Integrationseinheit (3a) senkrecht zur Aufsetzrichtung erfolgt.

44. Anordnung nach einem der vorhergehenden Ansprüche, **dadurch gekennzeichnet, dass** die Ausnehmung (47, 132) vorzugsweise auf einer Unterseite der Gerätehalterung (3) bzw. der Integrationseinheit (3a) angeordnet ist, wobei die Unterseite einem Aufnahmeraum (5) für das Kommunikationsgerät (2) gegenüber liegt.

45. Anordnung nach einem der vorhergehenden Ansprüche, **dadurch gekennzeichnet, dass** sich die Ausnehmung (47, 132) zur Unterseite (131) und insbesondere zu einer Seitenfläche (9) der Gerätehalterung (3) bzw. der Integrationseinheit (3a) öffnet.

46. Anordnung nach einem der vorhergehenden Ansprüche 1, **dadurch gekennzeichnet, dass** die Ausnehmung (47, 132) insbesondere durch einen Schieber und/oder eine Klappe und/oder einen Deckel verschließbar ist.

47. Anordnung nach einem der vorhergehenden Ansprüche, **dadurch gekennzeichnet, dass** die Befestigungseinrichtung (4) aus mehreren Teilen aufgebaut ist, wobei wenigstes zwei Teile (107, 108) im montierten Zustand einen Käfig (144) für die Aufnahme und Fixierung des elektrischen Steckerelements (19) bilden und wobei ein weiteres Teil (109) zur Verbindung des Käfigs (144) mit dem Fahrzeug vorgesehen ist.

48. Anordnung nach einem der vorhergehenden Ansprüche, **dadurch gekennzeichnet, dass** die Gerätehalterung (3) bzw. die Integrationseinheit (3a) und/oder die Befestigungseinrichtung (4) Anzeigemittel (173), insbesondere Display, Leuchtdiode (174, 175) oder Lichtleiter (176) aufweisen, welche insbesondere über Betriebszustände des Mobiltelefons (2) und/oder der Gerätehalterung (3) bzw. der Integrationseinheit (3a) Auskunft geben.

49. Anordnung nach Anspruch 48, **dadurch gekennzeichnet, dass** die Anzeigemittel (173) der Befestigungseinrichtung (4) vorzugsweise seitlich (171), in einem Bereich, der trotz aufgesetzter Gerätehalterung (3) bzw. Integrationseinheit (3a) sichtbar ist, angeordnet sind.

50. Anordnung nach Anspruch 48 oder 49, **dadurch gekennzeichnet, dass** die Anzeigemittel (173) durch Blinken und/oder Leuchten mit unterschiedlicher Frequenz und/oder Intensität und/oder Farbe und/oder Folge unterschiedliche Ereignisse, wie ankommender Anruf oder Nachrichteneingang beschreiben.

51. Anordnung nach Anspruch 48 bis 50, **dadurch gekennzeichnet, dass** die Anzeigemittel (173) kranz- oder ringförmig an der Befestigungseinrichtung (4) angeordnet sind.

52. Anordnung nach einem der vorhergehenden Ansprüche, **dadurch gekennzeichnet, dass** die Gerätehalterung (3) bzw. die Integrationseinheit (3a) und/oder die Befestigungseinrichtung (4) Tastschalter (180 - 183) und/oder Sensoren (184, 185) aufweisen, welche zum Auslösen von Sondereinrichtungen, wie Notruf, Pannenruf oder Fahrzeugverriegelung dienen.

53. Anordnung nach einem der vorhergehenden Ansprüche, **gekennzeichnet durch** ein an einer Wand, insbesondere an einer Fahrzeuginnenverkleidung, ortsfest befestigbares Steckerelement (4), wobei das Steckerelement (4) und die Handschalenrückseite (46) zueinander passende Kupplungsteile zur lösbaren mechanischen und elektrischen Verbindung aufweisen und die Handschale (3) derart ausgebildet ist, dass bei eingestecktem Handfunktelefon (2) dessen Kontur im oberhalb der Mitte des Handfunktelefons (2) liegenden Bereich nicht sowie im unteren seitlichen Bereich lediglich unwesentlich überschritten wird und die Handschalenkontur mit einem Fortsatz (187) den unteren Handschalenbereich bildend verlängert ist, wodurch die Handschale (3) eine ansprechende, schlanke Form mit einer guten Griffigkeit ihrerseits sowie für das zu entnehmende Handfunktelefon (2) erhält.

54. Anordnung nach einem der vorhergehenden Ansprüche, **dadurch gekennzeichnet, dass** die Handschale (3) einen Aufnahmeraum (5) für das Handfunktelefon (2) hat, dessen Rand (189) nur so hoch ausgebildet ist, dass er bei eingelegtem Handfunktelefon (2) immer unter dessen, vorzugsweise Tasten aufweisenden Oberseite bleibt.

55. Anordnung nach einem der vorhergehenden Ansprüche, **dadurch gekennzeichnet, dass** das eine Kupplungsteil (47) in der Handschale (3) für das Steckerelement (4) im oberen Bereich der Rückseite (46) der Handschale (3) angeordnet ist und vorzugsweise die Kontur des Steckerelements (4) derart ausgebildet ist, dass es bei eingeklinkter Handschale (3) deren Kontur nicht überschreitet.

56. Anordnung nach einem der vorhergehenden Ansprüche, **dadurch gekennzeichnet, dass** eine Oberseite der Appendix (187) einen im Montagebetrieb abnehmbaren Deckel (188) aufweist, damit bei abgenommenem Deckel (188) eine Anpassung eines Steckers (15) und einer elektronischen Schaltung (13, 14) für ein vorgegebenes Handfunktelefon (2) vorgenommen werden kann.

## Claims

1. Arrangement (1) for handling a communication device, such as a mobile phone (2, 168), Personal Digital Assistant or the like, in particular for use in a vehicle (55), comprising a device holder (3) which mounts the communication device (2), and an attachment device (4) which is mechanically fitted to the device holder (3), whereby the device holder (3) is fitted dimensionally and mechanically to the communication device (2) and is connected thereto for communication, whereby an electronic circuit (13, 14, 84) is provided inside the device holder (3), which comprises at least all of the electronic components (13, 14, 84) required for the operation and/or control of a convenience device, and whereby a universal, mechanical standardisation and/or fitting to connect the device holder (3) to the attachment device (4) is provided, **characterised in that** in addition to the mechanical there is a universal electrical standardisation and/or fitting of the device holder (3) to the attachment device, whereby only electric or electronic components (97, 98) are connected after the attachment device (4) for the input and/or output of speech and/or data.

2. Arrangement according to claim 1, **characterised in that** the communication connection between the communication device (2) and the device holder (3) is provided by means of a radio connection (102, 102a, 102b; 166, 167 or 168), in particular a so-called Bluetooth connection or an infrared connection.

3. Arrangement according to one of the preceding claims, **characterised in that** different device holders (3) and identical attachment devices (4) are provided for the various communication devices (2).

4. Arrangement according to one of the preceding claims, **characterised in that** the volume of the attachment device (4) is approximately 1/8 to 1/3 of the volume of the device holder (3).

5. Arrangement according to one of the preceding claims, **characterised in that** the electronic circuit (13, 14, 84) in the device holder (3) performs an adjustment specific to the mobile phone (2) to the electric and/or electronic components contained in the vehicle (55), such as e.g. a microphone (97), loudspeaker (98), power supply (96) or databus (99).

6. Arrangement according to one of the preceding claims, **characterised in that** the device holder (3) has an, in particular variable, shell-like upper mounting space (5) which is matched to the shape of a usable communication device (2).

7. Arrangement according to one of the preceding claims, **characterised in that** a plug element (15) is assigned to the board (13, 14) in the holding device (3) for the mobile phone (2) for connection to a connecting plug (16) of the mobile phone (2).

8. Arrangement according to claim 7, **characterised in that** the plug element (15) allocated to the board (13) is arranged for connecting with the mobile phone (2) on an additional board (14), which is preferably connected to the first board (13) at right angles.

9. Arrangement according to one of the preceding claims, **characterised in that** the device holder (3) has a connecting plug (15, 104) for an aerial connection to the mobile phone (2), whereby preferably a separate cable (32) leads via the device holder (3) and via the attachment device (4) to the vehicle (55) or to an aerial connection.

10. Arrangement according to one of the preceding claims, **characterised in that** the device holder (3) comprises a charging device (86) for a power source to the mobile phone (2).

11. Arrangement according to one of the preceding claims, **characterised in that** the device holder (3) contains all the necessary electrical and electronic components (84), so that only a loudspeaker (98) and microphone (97) are required in the vehicle (55), whereby in addition an aerial (95) and power supply (96) are available in particular.

12. Arrangement according to one of the preceding claims, **characterised in that** the device holder (3) holds the communication device (2) in a form-closed and/or force-closed manner.

13. Arrangement according to one of the preceding claims, **characterised in that** the device holder (3) provides a plug element (15), a power supply and/or an aerial connection.

14. Arrangement according to one of the preceding claims, **characterised in that** the communication device (2) is held onto the device holder (3) by at least one moveable clamping jaw (106).

15. Arrangement (1) for handling a communication device, such as a mobile phone (2), a Personal Digital Assistant (PDA) or the like, in particular for use in a vehicle (55), comprising an integration unit (3a) which is connected to the communication device (2) and an attachment device (4) mechanically fitted to the integration unit (3a), whereby an electronic circuit (13, 14, 84) is provided inside the integration unit (3a) which comprises at least all of the electronic components (13, 14, 84) required for operation and/or control of a hands-free device and/or convenience device, and whereby a universal, mechanical standardisation and/or fitting is provided to connect the integration unit (3a) to the attachment device (4), **characterised in that** in addition to the mechanical, a universal electrical standardisation or fitting of the integration unit (3a) to the attachment device (4) is performed, whereby only electric or electronic components for the input and/or output of speech and/or data are connected after the attachment device (4), and whereby the communication connection between the communication device (2) and the integration unit (3a) is performed by means of a radio connection (102; 166, 167 or 168), in particular a so-called Bluetooth connection or an infrared connection.

16. Arrangement according to one of the preceding claims, **characterised in that** the convenience device is in the form of a hands-free device and/or telematics application.

17. Arrangement according to one of the preceding claims, **characterised in that** the attachment device (4) comprises a mount (49, 107) with a first plug element (19), in which the first plug element (19) interacts with a second plug element (18) arranged on the device holder (3) or the integration unit (3a), and in which the attachment device (4) is in the form of a universal, standardised mechanical mount (49) for mounting the device holder (3) or the integration unit (3a) and in the form of a universal, standardised plug element (19) for contacting the plug element (18) of the device holder (3) or the integration unit (3a).

18. Arrangement according to one of the preceding claims, **characterised in that** the attachment device (4) is connected securely, in particular by screws and/or adhesion and/or interlocking, to the vehicle (55), in particular a dashboard (54) or a central console or a roof area.

19. Arrangement according to one of the preceding claims 1 to 14 or 15 to 18, **characterised in that** the device holder (3) or the integration unit (3a) at least partly engages over the attachment device (4) by means of a recess (47, 132).

20. Arrangement according to one of the preceding claims, **characterised in that** the device holder (3) or the integration unit (3a) has a projection (78) which engages in a depression (81) in the attachment device (4).

21. Arrangement according to one of the preceding claims, **characterised in that** the attachment device (4) completely covers the device holder (3) and/or the integration unit (3a) in the assembled state as seen in plan view.

22. Arrangement according to one of the preceding claims 7, 8, 13, 17, **characterised in that** the first plug element (19) in particular has lines (57) for the passage of aerial signals (88), a supply current (89), microphone signals (90) and loudspeaker signals (91).

23. Arrangement according to one of the preceding claims 7, 8, 13, 17, 22, **characterised in that** the first plug element (19) comprises lines (57) for the passage of serial or parallel control signals.

24. Arrangement according to claim 23, **characterised in that** the serial or parallel control signals or data signals are directed through one or more lines (92) originating from the attachment plate (4), from and to a bus system (99), which is arranged in the vehicle (55), in order to integrate a communication between the mobile phone (2) and the databus (99) in the vehicle (55) and to integrate the mobile phone (2) functionally into the vehicle's electronics.

25. Arrangement according to one of the preceding claims, **characterised in that** the device holder (3) or the integration unit (3a) preferably contains the mobile phone circuit of a hands-free device on the board (13, 14).

26. Arrangement according to one of the preceding claims, **characterised in that** the device holder (3) or the integration unit (3a) has a device and/or software (84, 85) for adjusting the level of the speech signals.

27. Arrangement according to one of the preceding claims, **characterised in that** the device holder (3) or the integration unit (3a) has an interface (87) for the attachment device (4), which comprises a device and/or software which operates as a protocol module for the network (99) of the vehicle (55), and as a protocol module for the mobile phone (2), and comprises an initialisation routine for matching to the databus of the mobile phone (2).

28. Arrangement according to one of the preceding claims, **characterised in that** the device holder (3) and/or the integration unit (3a) and the attachment device (4) are additionally connected to one another by a detachable locking connection (114) when they are in the coupled state.

29. Arrangement according to one of the preceding claims, **characterised in that** the device holder (3) or the integration unit (3a) which is connected between the attachment device (4) and the mobile phone (2) has a replaceable storage medium (84) which can be used to store user-specific functions such as a hands-free facility and/or a connection to the vehicle bus (99), and/or noise cancellation and/or echo cancellation and/or speech recognition and/or text conversion to speech and/or speech conversion to text.

30. Arrangement according to claim 29, **characterised in that** the storage medium (84) provides user-specific functions, which are available in the mobile phone (2), such as speech recognition and/or noise cancellation and/or echo cancellation, for operation of the mobile phone (2) in the vehicle (55).

31. Arrangement according to one of the preceding claims 29, 30, **characterised in that** the storage medium (84) is in the form of a removable and/or rewritable storage medium, such as a memory card or plug-in module.

32. Arrangement according to one of the preceding claims 29 to 31, **characterised in that** the storage medium (84) is rewritable via a radio connection.

33. Arrangement according to one of the preceding claims 29 to 32, **characterised in that** the storage medium (84) records supplementary data for user-specific functions of the mobile phone (2) and/or the device holder (3) or the integration unit (3a) in particular an expanded vocabulary for text conversion into speech and/or speech conversion into text.

34. Arrangement according to one of the preceding claims, **characterised in that** the attachment device (4) comprises lines (57, 137) for a loudspeaker (98) and/or a microphone (97) and/or an aerial (95) and/or a power supply (96) and/or for an ignition contact, and/or for a mute circuit for the audio system and/or data interchange for exchanging data between the communication device (2) and a bus system (99) belonging to the vehicle (55).

35. Arrangement according to one of the preceding claims, **characterised in that** the device holder (3) or the integration unit (3a) and the attachment device (4) together form a unit (1) essentially with the dimensions of the device holder (3) or the integration unit (3a), whereby preferably mechanical connecting means (27, 28, 72, 73; 129, 130; 114) connect the components of the arrangement (3 or 3 a, 4) to one another.

36. Arrangement according to one of the preceding claims, **characterised in that** the attachment device (4) is designed as an attachment housing (4) or lower part (4) that is U-shaped in cross section, the side walls (23, 24) of which are preferably used for mechanical connection with the device holder (3) or the integration unit (3a).

37. Arrangement according to one of the preceding claims, **characterised in that** the attachment device (4) and the device holder (3) or the integration unit (3a) can be connected to one another by a longitudinal displacement (arrow 17, arrow x') mechanically and/or electrically.

38. Arrangement according to one of the preceding claims 7, 8, 13, 17, 22, 23, **characterised in that** the plug elements (18, 19) in the device holder (3) or the integration unit (3a) and the attachment device (4) are preferably in the form of a D-sub-plug.

39. Arrangement according to one of the preceding claims, **characterised in that** the electronic circuit (13, 14) for the mobile phone (2) is arranged in the device holder (3) or the integration unit (3a) and at least one board (13, 14) has electronic components (84), whereby the board (13, 14) preferably has a plug element (18) which interacts with an associated plug element (19) of the attachment device (4).

40. Arrangement according to one of the preceding claims, **characterised in that** the mechanical coupling elements (27, 130) and the electric plug element of the device holder (3) or integration unit (3a) are arranged in the recess (47, 132) and engage over the electrical plug element (19) and the mechanical coupling elements (28; 72, 73; 129) of the attachment device (4) in the coupled state.

41. Arrangement according to one of the preceding claims, **characterised in that** the device holder (3) or the integration unit (3a) and the attachment device comprise electrical plug elements (18, 19) which are recessed in the operating direction (x or x') with respect to the mechanical coupling elements (28, 29; 72, 73; 129, 130).

42. Arrangement according to one of the preceding claims, **characterised in that** the mechanical coupling elements (28, 29; 72, 73; 129, 130) can be displaced relative to one another essentially perpendicular to the opening direction (y') of the recess (47, 132).

43. Arrangement according to one of the preceding claims, **characterised in that** the device holder (3) or the integration unit (3a) is connected to the attachment device (4) by placing the device holder (3) or the integration unit (3a) on the attachment device in the opposite direction to the opening direction (y') of the recess (47, 132) and by subsequently moving the device holder (3) or the integration unit (3a) perpendicular to the direction in which it was placed.

44. Arrangement according to one of the preceding claims, **characterised in that** the recess (47, 132) is arranged preferably on a lower face of the device holder (3) or of the integration unit (3a), with the lower face being opposite a mounting space (5) for the communication device (2).

45. Arrangement according to one of the preceding claims, **characterised in that** the recess (47, 132) opens toward the lower face (131) and, in particular, to a side surface (9) of the device holder (3) or integration unit (3a).

46. Arrangement according to one of the preceding claims, **characterised in that** the recess (47, 132) can be closed in particular by a slide and/or a flap and/or a cover.

47. Arrangement according to one of the preceding claims, **characterised in that** the attachment device (4) is constructed from several parts, whereby at least two parts (107, 108) in the assembled state form a cage (144), for mounting and fixing the electrical plug element (19) and whereby a further part (109) is provided for connecting the cage (144) to the vehicle.

48. Arrangement according to one of the preceding claims, **characterised in that** the device holder (3) or the integration unit (3a) and/or the attachment device (4) comprise display means (173), in particular a display, light-emitting diode (174, 175) or an optical conductor (176), which provide information in particular about operating states of the mobile phone (2) and/or the device holder (3) or the integration unit (3a).

49. Arrangement according to claim 48, **characterised in that** the display means (173) of the attachment device (4) are arranged preferably at the side (171), in a region which is visible despite the device holder (3) or integration unit (3a) being fitted in position.

50. Arrangement according to claim 48 or 49, **characterised in that** the display means (173) describe different events, such as an incoming call or received message, by blinking and/or illuminating at a different frequency and/or with a different intensity and/or colour and/or sequence.

51. Arrangement according to claim 48 to 50, **characterised in that** the display means (173) are arranged in the form of a crown or ring on the attachment device (4).

52. Arrangement according to one of the preceding claims, **characterised in that** the device holder (3) or the integration unit (3a) and/or the attachment device (4) comprise button switches (180-183) and/or sensors (184, 185) which are used for triggering special facilities, such as emergency call, breakdown call or vehicle locking.

53. Arrangement according to one of the preceding claims, **characterised by** a plug element (4) which can be attached in a fixed position to a wall, in particular to the lining of a vehicle interior, whereby the plug element (4) and the hand shell rear face (46) comprise fitting coupling elements for a detachable mechanical and electrical connection, and the hand shell (3) is designed in such a way that when the handheld radio telephone (2) is inserted, its contour is not exceeded in the area above the middle of the handheld radio phone (2), and is exceeded only insignificantly in the lower area at the side, and the hand shell contour is lengthened by an extension (187) forming the lower hand shell area, whereby the hand shell (3) has a suitable, slim shape, with a good grip for the handheld radio phone (2) to be removed from it.

54. Arrangement according to one of the preceding claims, **characterised in that** the hand shell (3) has a mounting space (5) for the handheld radio phone (2) the edge (189) of which is only so high that it always remains under the upper face, preferably with keys when the hand radio phone (2) is inserted.

55. Arrangement according to one of the preceding claims, **characterised in that** one of the coupling parts (47) is arranged in the hand shell (3) for the plug element (4) in the upper region of the rear face (46) of the hand shell (3), and preferably the shape of the plug element (4) is designed in such a way that does not extend beyond the contour of the hand shell (3) when the latter is inserted.

56. Arrangement according to one of the preceding claims, **characterised in that** an upper side of the appendix (187) has a cover (188) that can be removed during assembly so that when the cover (188) is removed, a plug (15) and an electronic circuit (13, 14) can be fitted for a predetermined handheld radio phone (2).

## Revendications

1. Système (1) pour le maniement d'un appareil de communication tel qu'un téléphone mobile (2, 168), d'un assistant numérique personnel ou similaire, notamment pour l'utilisation dans un véhicule (55), comprenant un support d'appareil (3) recevant l'appareil de communication (2) et un dispositif de fixation (4) adapté mécaniquement au support d'appareil (3), dans lequel
- le support d'appareil (3) présente une adaptation géométrique ou mécanique à l'appareil de communication (2) et communique avec celui-ci,
- un circuit électronique (13, 14, 84) prévu à l'intérieur du support d'appareil (3) comprend au moins tous les composants électroniques (13, 14, 84) nécessaires pour le fonctionnement ou la commande d'une installation de confort, et
- une standardisation ou adaptation mécanique universelle relie le support d'appareil (3) au dispositif de fixation (4),
**caractérisé en ce qu'**
en plus de la standardisation ou adaptation mécanique du support d'appareil (3) au dispositif de fixation, une standardisation ou adaptation électrique est réalisée, et
uniquement des composants électriques ou électroniques (97,98) sont montés en aval du dispositif de fixation (4) pour recevoir et/ou émettre un signal vocal et/ou des données.

2. Système selon la revendication 1,
**caractérisé en ce que**
la communication entre l'appareil de communication (2) et le support d'appareil (3) s'effectue au moyen d'une liaison radio (102, 102a, 102b ; 166, 167 ou 168), notamment d'une liaison Blue Tooth ou infrarouge.

3. Système selon l'une quelconque des revendications précédentes,
**caractérisé en ce que**
pour des appareils de communication (2) différents on prévoit des supports d'appareil (3) différents et des dispositifs de fixation (4) identiques.

4. Système selon l'une quelconque des revendications précédentes,
**caractérisé en ce que**
le dispositif de fixation (4) présente 1/8 à 1/3 environ du volume du support d'appareil (3).

5. Système selon l'une quelconque des revendications précédentes,
**caractérisé en ce que**
le circuit électronique (13, 14, 84) dans le support d'appareil (3) effectue une adaptation spécifique du téléphone mobile (2) aux composants électriques ou électroniques contenus dans le véhicule (55), tels que par exemple un microphone (97), des haut-parleurs (98), l'alimentation électrique (96), un bus de données (99).

6. Système selon l'une quelconque des revendications précédentes,
**caractérisé en ce que**
le support d'appareil (3) présente un logement (5) supérieur en forme de coque notamment variable, qui est adaptée à la forme d'un appareil de communication (2) utilisable.

7. Système selon l'une quelconque des revendications précédentes,
**caractérisé en ce qu'**
un élément connecteur (15) est associé à la platine (13, 14) à l'intérieur du support d'appareil (3) pour le téléphone mobile (2) pour la connexion à un connecteur (16) du téléphone mobile (2).

8. Système selon la revendication 7,
**caractérisé en ce que**
l'élément connecteur (15) associé à la platine (13) pour la liaison avec le téléphone mobile (2) est disposé sur une autre platine (14) qui est reliée à la première platine (13) de préférence verticalement.

9. Système selon l'une quelconque des revendications précédentes,
**caractérisé en ce que**
le support d'appareil (3) présente un connecteur (15, 104) pour une connexion d'antenne vers le téléphone mobile (2), de préférence un câble (32) distinct s'étendant à travers le support d'appareil (3) et le dispositif de fixation (4) jusqu'au véhicule (55) ou à une connexion d'antenne.

10. Système selon l'une quelconque des revendications précédentes,
**caractérisé en ce que**
le support d'appareil (3) comprend un chargeur (86) pour une source d'énergie du téléphone mobile (2).

11. Système selon l'une quelconque des revendications précédentes,
**caractérisé en ce que**
le support d'appareil (3) contient tous les composants électriques et électroniques (84) nécessaires de telle sorte que dans le véhicule (55) un haut-parleur (98) et un microphone (97) suffisent, notamment une antenne (95) et une alimentation électrique (96) étant disponibles en complément.

12. Système selon l'une quelconque des revendications précédentes,
**caractérisé en ce que**
le support d'appareil (3) maintient l'appareil de communication (2) par liaison par la forme et/ou la force.

13. Système selon l'une quelconque des revendications précédentes,
**caractérisé en ce que**
le support d'appareil (3) fournit par l'intermédiaire d'un élément connecteur (15) une alimentation électrique et/ou une connexion d'antenne.

14. Système selon l'une quelconque des revendications précédentes,
**caractérisé en ce que**
l'appareil de communication (2) est fixé au support d'appareil (3) au moyen d'au moins une mâchoire de serrage (106) mobile.

15. Système (1) pour le maniement d'un appareil de communication tel qu'un téléphone mobile (2), d'un assistant numérique personnel (PDA) ou similaire, notamment pour l'utilisation dans un véhicule (55), comprenant une unité d'intégration (3a) en liaison avec l'appareil de communication (2) et un dispositif de fixation (4) adapté mécaniquement à l'unité d'intégration (3a), dans lequel un circuit électronique (13, 14, 84) prévu à l'intérieur de l'unité d'intégration (3a) comprend au moins tous les composants électroniques (13, 14, 84) nécessaires pour un fonctionnement ou une commande d'une installation mains-libres ou de confort, avec une standardisation ou adaptation mécanique universelle pour relier l'unité d'intégration (3a) au dispositif de fixation (4),
**caractérisé en ce qu'**
en plus de la standardisation ou adaptation mécanique de l'unité d'intégration (3a) au dispositif de fixation (4), il comporte une standardisation ou adaptation électrique et uniquement des composants électriques ou électroniques sont montés en aval du dispositif de fixation (4) pour recevoir et/ou émettre un signal vocal et/ou des données, et la liaison de communication entre l'appareil de communication (2) et l'unité d'intégration (3a) s'effectue au moyen d'une liaison radio (102 ; 166, 167 ou 168), notamment d'une liaison Blue Tooth ou infrarouge.

16. Système selon l'une quelconque des revendications précédentes,
**caractérisé en ce que**
l'installation de confort est une installation mains-libres et/ou une application télématique.

17. Système selon l'une quelconque des revendications précédentes,
**caractérisé en ce que**
le dispositif de fixation (4) comprend une surface d'appui (49, 107) avec un premier élément connecteur (19) qui coopère avec un deuxième élément connecteur (18) disposé sur le support d'appareil (3) ou l'unité d'intégration (3a), et le dispositif de fixation (4) est configuré comme une surface d'appui (49) mécanique standardisée universelle pour loger le support d'appareil (3) ou l'unité d'intégration (3a) et constitue l'élément connecteur (19) standardisé universel pour la mise en contact de l'élément connecteur (18) du support d'appareil (3) ou de l'unité d'intégration (3a).

18. Système selon l'une quelconque des revendications précédentes,
**caractérisé en ce que**
le dispositif de fixation (4) est relié de manière solidaire notamment par vissage et/ou collage et/ou encliquetage au véhicule (55) en particulier à un tableau de bord (54), une console centrale ou une zone de toit.

19. Système selon l'une quelconque des revendications précédentes 1 à 14 ou 15 à 18,
**caractérisé en ce que**
le support d'appareil (3) ou l'unité d'intégration (3a) recouvre du moins partiellement le dispositif de fixation (4) par un évidement (47, 132).

20. Système selon l'une quelconque des revendications précédentes,
**caractérisé en ce que**
le support d'appareil (3) ou l'unité d'intégration (3a) s'engage par une saillie (78) dans un retrait (81) du dispositif de fixation (4).

21. Système selon l'une quelconque des revendications précédentes,
**caractérisé en ce que**
vu de dessus, le dispositif de fixation (4) recouvre entièrement le support d'appareil (3) ou l'unité d'intégration (3a) à l'état assemblé.

22. Système selon l'une quelconque des revendications précédentes 7, 8, 13, 17,
**caractérisé en ce que**
le premier élément connecteur (19) présente notamment des lignes (57) pour la transmission de signaux d'antenne (88), de courant d'alimentation (89), de signaux de microphone (90) et de signaux de haut-parleurs (91).

23. Système selon l'une quelconque des revendications précédentes 7, 8, 13, 17, 22,
**caractérisé en ce que**
le premier élément connecteur (19) présente des lignes (57) pour la transmission de signaux de commande sériels ou parallèles.

24. Système selon la revendication 23,
**caractérisé en ce que**
les signaux de commande ou de données sériels ou parallèles sont transmis sur une ou plusieurs lignes (92) partant du dispositif de fixation (4) depuis et vers un système de bus (99) disposé dans le véhicule (55) pour permettre une communication entre le téléphone mobile (2) et le bus de données (99) du véhicule (55) et intégrer le téléphone mobile (2) de façon fonctionnelle dans l'électronique du véhicule.

25. Système selon l'une quelconque des revendications précédentes,
**caractérisé en ce que**
le support d'appareil (3) ou l'unité d'intégration (3a) sur la platine (13, 14) comprend de préférence le circuit d'une installation mains-libres pour le téléphone mobile.

26. Système selon l'une quelconque des revendications précédentes,
**caractérisé en ce que**
le support d'appareil (3) ou l'unité d'intégration (3a) présente un dispositif et/ou un logiciel (84, 85) pour l'adaptation du niveau des signaux vocaux.

27. Système selon l'une quelconque des revendications précédentes,
**caractérisé en ce que**
le support d'appareil (3) ou l'unité d'intégration (3a) comprend une interface (87) vers le dispositif de fixation (4) qui comprend un dispositif et/ou un logiciel qui travaille comme module de protocole pour le réseau (99) du véhicule (55) et pour le téléphone mobile (2) et comprend une routine d'initialisation pour l'accordement au bus de données du téléphone mobile (2).

28. Système selon l'une quelconque des revendications précédentes,
**caractérisé en ce qu'**
à l'état accouplé le support d'appareil (3) ou l'unité d'intégration (3a) et le dispositif de fixation (4) sont également reliés l'un à l'autre par un encliquetage amovible (114).

29. Système selon l'une quelconque des revendications précédentes,
**caractérisé en ce que**
le support d'appareil (3) ou l'unité d'intégration (3a) monté entre le dispositif de fixation (4) et le téléphone mobile (2) comprend une mémoire interchangeable (84) qui peut être utilisée pour stocker des fonctions spécifiques de l'utilisateur telles que mains-libres et/ou liaison vers le bus de véhicule (99) et/ou suppression de bruit et/ou suppression d'écho et/ou reconnaissance vocale et/ou transformation de texte en langage et/ou transformation de langage en texte.

30. Système selon la revendication 29,
**caractérisé en ce que**
la mémoire (84) propose des fonctions spécifiques de l'utilisateur existantes dans le téléphone mobile (2), telles que reconnaissance vocale et/ou suppression de bruit et/ou suppression d'écho, pour le fonctionnement du téléphone mobile (2) dans le véhicule (55).

31. Système selon l'une quelconque des revendications précédentes 29, 30,
**caractérisé en ce que**
la mémoire (84) est une mémoire amovible et/ou à réécriture telle qu'une carte mémoire ou un module enfichable.

32. Système selon l'une quelconque des revendications précédentes 29 à 31,
**caractérisé en ce que**
la mémoire (84) peut être réécrite par l'intermédiaire d'une liaison radio.

33. Système selon l'une quelconque des revendications précédentes 29 à 32,
**caractérisé en ce que**
la mémoire (84) reçoit des données complétant des fonctions spécifiques de l'utilisateur du téléphone mobile (2) et/ou du support d'appareil (3) ou de l'unité d'intégration (3a), notamment un vocabulaire étendu pour la transformation de texte en langage et/ou la transformation de langage en texte.

34. Système selon l'une quelconque des revendications précédentes,
**caractérisé en ce que**
le dispositif de fixation (4) présente des lignes (57, 137) pour des haut-parleurs (98) et/ou un microphone (97) et/ou une antenne (95) et/ou l'alimentation électrique (96) et/ou un contact d'allumage et/ou le réglage silencieux de l'installation audio et/ou l'échange de données pour l'échange de données entre l'appareil de communication (2) et un système de bus (99) appartenant au véhicule (55).

35. Système selon l'une quelconque des revendications précédentes,
**caractérisé en ce que**
le support d'appareil (3) ou l'unité d'intégration (3a) et le dispositif de fixation (4) forment conjointement un ensemble (1) présentant en substance les dimensions du support d'appareil (3) ou de l'unité d'intégration (3a), des moyens d'assemblage mécaniques (27, 28, 72, 73 ; 129, 130 ; 114) reliant de préférence les composants de système (3 ou 3a, 4) entre eux.

36. Système selon l'une quelconque des revendications précédentes,
**caractérisé en ce que**
le dispositif de fixation (4) a la forme d'un boîtier de fixation (4) ou d'un élément inférieur (4) en U dans une section transversale, dont les parois latérales (23, 24) servent de préférence à la liaison mécanique avec le support d'appareil (3) ou l'unité d'intégration (3a).

37. Système selon l'une quelconque des revendications précédentes,
**caractérisé en ce que**
le dispositif de fixation (4) et le support d'appareil (3) ou l'unité d'intégration (3a) peuvent être reliés l'un à l'autre mécaniquement et/ou électriquement par un déplacement longitudinal (flèche 17, flèche x').

38. Système selon l'une quelconque des revendications précédentes 7, 8, 13, 17, 22, 23,
**caractérisé en ce que**
les éléments connecteurs (18, 19) dans le support d'appareil (3) ou l'unité d'intégration (3a) et le dispositif de fixation (4) ont de préférence la forme de connecteurs D-Sub.

39. Système selon l'une quelconque des revendications précédentes,
**caractérisé en ce que**
le circuit électronique (13, 14) pour le téléphone mobile (2) est disposé dans le support d'appareil (3) ou l'unité d'intégration (3a), et au moins une platine (13, 14) comprend des composants électroniques (84), la platine (13, 14) possédant de préférence un élément connecteur (18) qui coopère avec un élément connecteur (19) associé du dispositif de fixation (4).

40. Système selon l'une quelconque des revendications précédentes,
**caractérisé en ce que**
les éléments mécaniques de couplage (27, 130) et l'élément connecteur électrique du support d'appareil (3) ou de l'unité d'intégration (3a) sont disposés dans l'évidement (47, 132), ce dernier recouvrant à l'état accouplé l'élément connecteur électrique (19) et les éléments mécaniques de couplage (28 ; 72, 73 ; 129) du dispositif de fixation (4).

41. Système selon l'une quelconque des revendications précédentes,
**caractérisé en ce que**
le support d'appareil (3) ou l'unité d'intégration (3a) et le dispositif de fixation présentent des éléments connecteurs électriques (18, 19) qui sont ramenés en arrière dans la direction d'action (x ou x') par rapport aux éléments mécaniques de couplage (28, 29 ; 72, 73 ; 129, 130).

42. Système selon l'une quelconque des revendications précédentes,
**caractérisé en ce que**
les éléments mécaniques de couplage (28, 29 ; 72, 73 ; 129, 130) sont déplaçables les uns par rapport aux autres en substance perpendiculairement à une direction d'ouverture (y') de l'évidement (47, 132).

43. Système selon l'une quelconque des revendications précédentes,
**caractérisé en ce qu'**
un assemblage du support d'appareil (3) ou de l'unité d'intégration (3a) avec le dispositif de fixation (4) est réalisé par une mise en place du support d'appareil (3) ou de l'unité d'intégration (3a) à l'opposé de la direction d'ouverture (y') de l'évidement (47, 132) sur le dispositif de fixation et ensuite un déplacement du support d'appareil (3) ou de l'unité d'intégration (3a) perpendiculaire à la direction de mise en place.

44. Système selon l'une quelconque des revendications précédentes,
**caractérisé en ce que**
l'évidement (47, 132) est de préférence disposé sur une face inférieure du support d'appareil (3) ou de l'unité d'intégration (3a), la face inférieure faisant face à un logement (5) pour l'appareil de communication (2).

45. Système selon l'une quelconque des revendications précédentes,
**caractérisé en ce que**
l'évidement (47, 132) s'ouvre vers la face inférieure (131) et notamment vers une surface latérale (9) du support d'appareil (3) ou de l'unité d'intégration (3a).

46. Système selon l'une quelconque des revendications précédentes,
**caractérisé en ce que**
l'évidement (47, 132) peut être fermé notamment par un tiroir et/ou un clapet et/ou un couvercle.

47. Système selon l'une quelconque des revendications précédentes,
**caractérisé en ce que**
le dispositif de fixation (4) est composé de plusieurs éléments, dans lequel au moins deux éléments (107, 108) forment à l'état monté une cage (144) pour le logement et la fixation de l'élément connecteur électrique (19) et dans lequel un autre élément (109) est prévu pour relier la cage (144) au véhicule.

48. Système selon l'une quelconque des revendications précédentes,
**caractérisé en ce que**
le support d'appareil (3) ou l'unité d'intégration (3a) et/ou le dispositif de fixation (4) présentent des moyens indicateurs (173) notamment un écran, une diode luminescente (174, 175) ou un guide de lumière (176) qui donnent des informations notamment concernant les états de fonctionnement du téléphone mobile (2) et/ou du support d'appareil (3) ou de l'unité d'intégration (3a).

49. Système selon la revendication 48,
**caractérisé en ce que**
les moyens indicateurs (173) du dispositif de fixation (4) sont de préférence disposés latéralement (171) dans une zone qui reste visible après la mise en place du support d'appareil (3) ou de l'unité d'intégration (3a).

50. Système selon la revendication 48 ou 49,
**caractérisé en ce que**
les moyens indicateurs (173) décrivent par clignotement et/ou allumage à des fréquences et/ou à des intensités et/ou avec des couleurs et/ou dans un ordre différent des événements différents tels qu'un appel entrant ou une entrée d'un message.

51. Système selon la revendication 48 à 50,
**caractérisé en ce que**
les moyens indicateurs (173) sont disposés en forme de couronne ou d'anneau sur le dispositif de fixation (4).

52. Système selon l'une quelconque des revendications précédentes,
**caractérisé en ce que**
le support d'appareil (3) ou l'unité d'intégration (3a) et/ou le dispositif de fixation (4) présentent des palpeurs (180 à 183) et/ou des capteurs (184, 185) qui servent au déclenchement de dispositifs spéciaux tels qu'un appel d'urgence, un appel de dépannage ou un verrouillage de véhicule.

53. Système selon l'une quelconque des revendications précédentes,
**caractérisé par**
un élément connecteur (4) pouvant être fixé de manière stationnaire à une paroi, notamment à un habillage intérieur de véhicule, dans lequel l'élément connecteur (4) et la face arrière de support d'appareil (46) présentent des éléments de couplage adaptés les uns aux autres pour une liaison mécanique et électrique amovible, et le support d'appareil (3) est configuré de telle sorte que lorsque le téléphone mobile (2) est placé dessus, le contour de celui-ci dans la zone située au-dessus du centre du téléphone mobile (2) n'est pas dépassé ou n'est dépassé que de façon négligeable dans la zone latérale inférieure, et le contour du support d'appareil est prolongé par un appendice (187) formant la zone de support d'appareil inférieure, ce qui confère au support d'appareil (3) une forme mince esthétique avec une bonne prise en main de celui-ci ainsi que du téléphone mobile (2).

54. Système selon l'une quelconque des revendications précédentes,
**caractérisé en ce que**
le support d'appareil (3) présente un logement (5) pour le téléphone mobile (2), dont le bord (189) ne présente qu'une hauteur telle qu'il reste toujours en dessous de la face supérieure, présentant de préférence des touches, du téléphone mobile (2) raccroché.

55. Système selon l'une quelconque des revendications précédentes,
**caractérisé en ce qu'**
un élément de couplage (47) dans le support d'appareil (3) pour l'élément connecteur (4) est disposé dans la zone supérieure de la face arrière (46) du support d'appareil (3), et le contour de l'élément connecteur (4) présente une forme telle qu'il ne dépasse pas le contour du support d'appareil (3) enclenché.

56. Système selon l'une quelconque des revendications précédentes,
**caractérisé en ce qu'**
une face supérieure de l'appendice (187) présente un couvercle (188) amovible lors du montage afin de permettre, lorsque le couvercle (188) est enlevé, une adaptation d'un connecteur (15) et d'un circuit électronique (13, 14) à un téléphone portable (2) prédéterminé.
